(19) Europäisches Patentamt
European Patent Office
Office européen des brevets

(11) **EP 2 082 357 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(21) Anmeldenummer: **07856855.7**

(22) Anmeldetag: **18.12.2007**

(51) Int Cl.:
***G06K 9/46*** (2006.01)

(86) Internationale Anmeldenummer:
**PCT/EP2007/011132**

(87) Internationale Veröffentlichungsnummer:
**WO 2008/074477 (26.06.2008 Gazette 2008/26)**

(54) **VORRICHTUNG, VERFAHREN UND COMPUTERPROGRAMM ZUR ERKENNUNG VON SCHRIFTZEICHEN IN EINEM BILD**

DEVICE, METHOD AND COMPUTER PROGRAM FOR IDENTIFYING CHARACTERS IN AN IMAGE

DISPOSITIF, PROCÉDÉ ET PROGRAMME D'ORDINATEUR POUR IDENTIFIER DES CARACTÈRES SUR UNE IMAGE

(84) Benannte Vertragsstaaten:
**AT BE BG CH CY CZ DK EE ES FI FR GB GR HU IE IS IT LI LT LU LV MC MT NL PL PT RO SE SI SK TR**

(30) Priorität: **18.12.2006 DE 102006059659**

(43) Veröffentlichungstag der Anmeldung:
**29.07.2009 Patentblatt 2009/31**

(73) Patentinhaber: **Fraunhofer-Gesellschaft zur Förderung der angewandten Forschung e.V.
80686 München (DE)**

(72) Erfinder: **KLEFENZ, Frank
68159 Mannheim (DE)**

(74) Vertreter: **Burger, Markus et al
Schoppe, Zimmermann, Stöckeler & Zinkler
Patentanwälte
Postfach 246
82043 Pullach bei München (DE)**

(56) Entgegenhaltungen:
**FR-A- 2 661 999 GB-A- 2 108 306**

- **MOHAMED FAKIR ET AL: "RECOGNITION OF ARABIC PRINTED SCRIPTS BY DYNAMIC PROGRAMMING MATCHING METHOD" IEICE TRANSACTIONS ON INFORMATION AND SYSTEMS, INFORMATION & SYSTEMS SOCIETY, TOKYO, JP, Bd. E76 - D, Nr. 2, 1. Februar 1993 (1993-02-01), Seiten 235-242, XP000358614 ISSN: 0916-8532**

- **MADHVANATH S ET AL: "Contour-based image preprocessing for holistic handwritten word recognition" PROCEEDINGS OF THE 4TH INTERNATIONAL CONFERENCE ON DOCUMENT ANALYSIS AND RECOGNITION. (ICDAR). ULM, GERMANY, AUG. 18 - 20, 1997; [PROCEEDINGS OF THE ICDAR], LOS ALAMITOS, IEEE COMP. SOC, US, Bd. 2, 18. August 1997 (1997-08-18), Seiten 536-539, XP010244778 ISBN: 978-0-8186-7898-1**

- **MADHVANATH ET AL: "CHAINCODE CONTOUR PROCESSING FOR HANDWRITTEN WORD RECOGNITION" IEEE TRANSACTIONS ON PATTERN ANALYSIS AND MACHINE INTELLIGENCE, IEEE SERVICE CENTER, LOS ALAMITOS, CA, US, Bd. 21, Nr. 9, 1. September 1999 (1999-09-01), Seiten 928-932, XP000851871 ISSN: 0162-8828**

- **A. AMIN: "RECOGNITION OF HAND-PRINTED LATIN CHARACTERS BASED ON GENERALIZED HOUGH TRANSFORM AND DECISION TREE LEARNING TECHNIQUES", INTERNATIONAL JOURNAL OF PATTERN RECOGNITION AND ARTIFICIAL INTELLIGENCE, vol. 14, no. 3, 1 May 2000 (2000-05-01), pages 369-387,**

- **A. AMIN: "RECOGNITION OF HAND-PRINTED LATIN CHARACTERS BASED ON GENERALIZED HOUGH TRANSFORM AND DECISION TREE LEARNING TECHNIQUES" INTERNATIONAL JOURNAL OF PATTERN RECOGNITION AND ARTIFICIAL INTELLIGENCE, Bd. 14, Nr. 3, 1. Mai 2000 (2000-05-01), Seiten 369-387,**

**Beschreibung**

Die vorliegende Erfindung bezieht sich im Allgemeinen auf eine Vorrichtung, ein Verfahren und ein Computerprogramm zum Identifizieren eines Verkehrszeichens in einem Bild, im Speziellen auf eine Schriftzeichenerkennung unter Verwendung einer Hough-Transformation.

Es ist bereits eine Vielzahl von Algorithmen bekannt, deren Ziel es ist, Schriftzeichen in einem Bild, beispielsweise in einer gescannten Seite zu identifizieren. Bei dem genannten Verfahren werden beispielsweise Schablonen, die bekannte Schriftzeichen beschreiben, direkt mit dem Bild verglichen. Ein solcher Vergleich einer Schablone mit einem Bild ist allerdings extrem rechenaufwändig. Ferner weisen die meisten bekannten Verfahren eine geringe Zuverlässigkeit auf, wenn verschiedene Schriftarten erkannt werden sollen. Im Übrigen ist speziell die Erkennung von Handschriften besonders problematisch, da sich die Handschriften von verschiedenen Personen bekanntermaßen vergleichsweise stark unterscheiden.

Es ist daher die Aufgabe der vorliegenden Erfindung, ein Konzept zum Erkennen von Schriftzeichen in einem Bild zu erschaffen, das einen besonders guten Kompromiss zwischen einer Zuverlässigkeit und einem Rechenaufwand mit sich bringt.

Die Veröffentlichung "Recognition of Hand-Printed Latin Characters based on Generalized Hough Transform and Decision Tree Learning Techniques" von A. Amin (veröffentlicht in: International Journal of Pattern Recognition and Artificial Intelligence, Vol 14, No. 3, 01.05.2000, World Scientific Publishing, Singapore, Seiten 369-387) beschreibt ein Konzept zur Erkennung von handgeschriebenen lateinischen Zeichen unter Verwendung eines Maschinenlernens. Die Zeichen werden in einen Computer eingescannt und Vorverarbeitungs-Techniken transformieren die Bildpunkt-Darstellung der Zeichen in einen Satz von Primitiven, die in einer Attribut-basierten Form dargestellt werden können. Ein Satz von solchen Darstellungen für jedes Zeichen wird dann verwendet, um einen Entscheidungsbaum zur Klassifizierung jedes Zeichens zu erhalten.

Es ist daher die Aufgabe der vorliegenden Erfindung, ein Konzept zum Erkennen von Schriftzeichen in einem Bild zu erschaffen, das einen besonders guten Kompromiss zwischen einer Zuverlässigkeit und einem Rechenaufwand mit sich bringt.

Diese Aufgabe wird durch eine Vorrichtung zum Erkennen von Schriftzeichen gemäß den Patentansprüchen 1, 14 und 15, durch ein Verfahren zum Erkennen von Schriftzeichen in einem Bild gemäß Anspruch 12 sowie durch ein Computerprogramm gemäß dem Patentanspruch 13 gelöst.

Die vorliegende Erfindung schafft eine Vorrichtung zur Erkennung von Schriftzeichen in dem Bild. Die Vorrichtung umfasst einen Hough-Transformator, der ausgelegt ist, um Kreisbögen (bzw. Kreisbogensegmente) oder Ellipsenbögen (bzw. Ellipsenbogensegmente) in dem Bild oder in einer vorverarbeiteten Version des Bildes als identifizierte Schriftelemente zu identifizieren. Die Vorrichtung umfasst ferner ein Schriftzeichen-Beschreibungs-Ersteller der ausgelegt ist, um basierend auf die identifizierten Kreisbögen oder Ellipsenbögen eine Schriftzeichen-Beschreibung zu erhalten, die eine Lage der identifizierten Kreisbögen oder Ellipsenbögen beschreibt. Ferner umfasst die Vorrichtung einen Datenbank-Vergleicher, der ausgelegt ist, um die Schriftzeichen-Beschreibung mit einer Mehrzahl von Vergleichs-Schriftzeichen-Beschreibungen zu vergleichen, denen Schriftzeichen-Codes zugeordnet sind, um als Ergebnis des Vergleichs einen Schriftzeichen-Code eines erkannten Schriftzeichens zu liefern.

Alternativ dazu ist der Hough-Transformator bei einem Vergleichsbeispiel ausgelegt, um eine Mehrzahl von in verschiedenen Richtungen durch das Bild verlaufenden geraden Strecken als identifizierte Schriftelemente zu identifizieren. In diesem Fall ist der Schriftzeichen-Beschreibungs-Ersteller ausgelegt, um basierend auf den identifizierten geraden Strecken eine Schriftzeichenbeschreibung zu erhalten, die eine Lage der identifizierten geraden Strecken beschreibt.

Es ist der Kerngedanke der vorliegenden Erfindung, dass durch einen Hough-Transformator in besonders vorteilhafter Weise Schriftelemente, also beispielsweise Kreisbögen oder Ellipsenbögen, identifiziert werden können, und dass die Lage der somit identifizierten Schriftelemente eine charakteristische Schriftzeichen-Beschreibung darstellt, die in effizienter Weise für eine Identifizierung der Schriftzeichen herangezogen werden kann.

In anderen Worten, es wurde erkannt, dass eine Identifizierung von einzelnen Schriftelementen, also von Bögen, eine effiziente Vorverarbeitung ermöglicht. Ein Schriftzeichen wird durch die in dem Hough-Transformator ausgeführte Identifikation von Schriftelementen in eine Mehrzahl von klar definierten Einzelelementen, nämlich in eine Mehrzahl von einzelnen Kreisbögen, Ellipsenbögen und/oder geraden Strecken zerlegt. Damit besteht die Möglichkeit, Schriftzeichen durch eine geringe Anzahl von Parametern, nämlich beispielsweise durch die Lage der identifizierten Schriftelemente, zu beschreiben. Die identifizierten Schriftelemente bzw. deren Lageparameter stellen daher eine Beschreibungsform dar, die sich für einen besonders effizienten Datenbankvergleich eignen.

Besteht beispielsweise ein Schriftzeichen aus vielen tausend Bildpunkten (z. B. 100 Bildpunkte mal 100 Bildpunkte = 10.000 Bildpunkte) so umfasst die in der erfindungsgemäßen Weise erstellte Schriftzeichenbeschreibung beispielsweise nur insgesamt vier Lageparameter von vier Bögen, wenn das Schriftzeichen beispielsweise nur vier Bögen umfasst (z. B. "o", "s").

Die Lageparameter der identifizierten Schriftelemente eignen sich damit hervorragend für einen effizienten Datenbank-Vergleich, und stellen ferner eine charakteristische Information über ein Schriftzeichen dar. Verschiedene Schriftzeichen unterscheiden sich nämlich gerade in der Lage der einzelnen Schriftelemente (Bögen und gerade Strecken).

Diesbezüglich sei darauf hingewiesen, dass z. B. ein Mensch, wenn er ein Schriftzeichen aufschreibt, das Schriftzeichen aus einer Mehrzahl von (beispielsweise kontinuierlich, oder voneinander getrennt) aufeinander folgenden Schriftelementen zusammensetzt. Gerade die Form und Lage der Schriftelemente allerdings entscheidet darüber, welches Schriftzeichen wiedergegeben wurde.

Ferner sei darauf hingewiesen, dass durch die Verwendung einer Hough-Transformation eine Erkennung von Schriftzeichen in gescannten Vorlagen geringer Qualität im Vergleich zu herkömmlichen Verfahren wesentlich verbessert werden kann. So ist nämlich ein Hough-Transformator in der Lage, auch linienförmige Verläufe, die vergleichsweise kurze Unterbrechungen aufweisen, als einen zusammengehörigen Verlauf zu erkennen. Gerade bei der Wiedergabe von Schriften tritt es aber nicht selten auf, dass Schriftzeichen unterbrochen werden. Wird beispielsweise ein vollgeschriebenes Blatt Papier mit einer geringen Auflösung gescannt, so kann es vorkommen, dass einzelne Linien (besonders aber dünne Linien) unvollständig wiedergegeben werden. Ein Hough-Transformator ist dabei in der Lage, Schriftelemente (z. B. gebogene Linien oder gerade Strecken) auch dann zu erkennen, wenn diese unterbrochen sind. Somit wird das erfindungsgemäße Konzept zur Erkennung von Schriftzeichen auch durch eine schlechte Wiedergabe von Schriftzeichen in dem Bild nicht wesentlich beeinträchtigt.

Ferner sei darauf hingewiesen, dass durch die Verwendung eines Hough-Transformators auch schreibmaschinengeschriebene Dokumente in besonders zuverlässiger Weise verarbeitet werden können, da wiederum durch den Hough-Transformator Schriftelemente auch bei Vorliegen von unterbrochenen Linien zuverlässig erkannt werden. Gerade bei mit Schreibmaschine geschriebenen Texten kommt es vor, dass einzelne Typen von Schreibmaschinen ungleichmäßig abgenutzt sind, und dass beispielsweise manche Linien unterbrochen sind.

Somit werden durch die Verwendung eines Hough-Transformators bei der Erkennung von Schriftzeichen zwei wesentliche Vorteile erreicht. Zum Einen ist die durch den Hough-Transformator gelieferte Information über erkannte Schriftelemente eine besonders zuverlässige und aussagekräftige Information, die einen effizienten Datenbankvergleich ermöglicht. Andererseits werden durch die Verwendung eines Hough-Transformators Störungen in den Schriftzeichen, z. B. Unterbrechungen einer Schriftlinie, im Wesentlichen ausgeglichen, so dass auch im Falle von schlechten Vorlagen eine zuverlässige Schrifterkennung möglich ist.

Bei einem bevorzugten Ausführungsbeispiel der vorliegenden Erfindung ist der Hough-Transformator im Übrigen ausgelegt, um sowohl Kreisbögen oder Ellipsenbögen als auch gerade Strecken als identifizierte Schriftelemente zu identifizieren. In diesem Fall ist der Schriftzeichen-Beschreibungs-Ersteller bevorzugt ausgelegt, um sowohl die identifizierten Kreisbögen oder Ellipsenbögen als auch die identifizierten geraden Strecken für eine Schrifterkennung heranzuziehen.

Eine solche Ausführungsform der erfindungsgemäßen Vorrichtung zur Erkennung von Schriftzeichen ist besonders vorteilhaft, wenn die zu erkennenden Schriften sowohl Bögen als auch gerade Strecken enthalten.

In Fällen hingegen, in denen bestimmte Schriften nur entweder Bögen oder gerade Strecken enthalten (was bei manchen Computer-Schriftarten der Fall ist) reicht hingegen die Erkennung entweder von Kreisbögen oder von geraden Strecken aus.

Bei einem weiteren bevorzugten Ausführungsbeispiel ist der Schriftzeichen-Beschreibungs-Ersteller ausgelegt, um als Schriftzeichen-Beschreibung eine Beschreibung eines Schriftzeichens zu erhalten, die das Schriftzeichen als eine geordnete Beschreibung von identifizierten Schriftelementen beschreibt. Werden somit die einzelnen Schriftelemente gemäß einer vorgegebenen Anordnungsregel in eine vorbestimmte Ordnung gebracht, so kann ein Datenbankvergleich in besonders effizienter Weise erfolgen.

Bei einem bevorzugten Ausführungsbeispiel ist der Schriftzeichen-Beschreibungs-Ersteller ausgelegt, um die Schriftzeichen-Beschreibung so zu ordnen, dass die geordneten identifizierten Schriftelemente eine durchgehende Schriftlinie beschreiben. In diesem Fall entspricht die Anordnung der Schriftzeichen-Beschreibung einer natürlichen Reihenfolge, wie ein Schriftzeichen beispielsweise durch einen Mensch wiedergegeben wird. Die entsprechende Beschreibung ist typischerweise eindeutig, da ja ein Mensch ein Schriftzeichen in einer bestimmten Reihenfolge niederschreibt. Somit ergibt sich durch die beschriebene Ausgestaltung des Schriftzeichen-Beschreibungs-Erstellers wiederum eine besonders effiziente und typischerweise eindeutige Schriftzeichenbeschreibung, wodurch der in dem Datenbank-Vergleicher durchgeführte Datenbankvergleich sehr effizient erfolgen kann.

Bei einem weiteren bevorzugten Ausführungsbeispiel umfasst die erfindungsgemäße Vorrichtung einen Schriftlinienerkenner, der ausgelegt ist, um basierend auf einer Lage der durch den Hough-Transformator identifizierten Schriftelemente eine Linie zu identifizieren, entlang derer die Schriftzeichen angeordnet sind. Es hat sich nämlich gezeigt, dass charakteristische Punkte der durch den Hough-Transformator identifizierten Schriftelemente (bei Bögen: beispielsweise Extrempunkte; bei geraden Strecken: beispielsweise Endpunkte) typischerweise entlang von Linien verlaufen, die in dem Schriftbild charakteristisch sind. Somit besteht eine sehr einfache und effiziente Möglichkeit die durch den Hough-Transformator gelieferte Information weiter auszunutzen, um eine zusätzliche Information über das Schriftbild zu erhalten.

Bei einem weiteren bevorzugten Ausführungsbeispiel ist der Schriftzeichen-Beschreibungs-Ersteller ausgelegt, um die Schriftzeichen-Beschreibung so zu erstellen, dass die Schriftzeichen-Beschreibung eine Information über eine Lage der identifizierten Schriftelemente relativ zu zumindest einer erkannten Schriftlinie beschreibt. Es hat sich nämlich gezeigt, dass eine Lage der Schriftelemente relativ zu Schriftlinien (beispielsweise einer Unterlinie, einer Grundlinie, einer Mittellinie oder einer Oberlinie der Schrift) eine noch aussagekräftigere Beschreibungsform liefert, so dass eine Zuverlässigkeit der Schrifterkennung verbessert werden kann. Die Beschreibung der Lage der Schriftelemente relativ zu zumindest einer Schriftlinie ermöglicht es, dass die Schriftzeichen-Beschreibung unmittelbar zum Ausdruck bringt, ob Schriftzeichen beispielsweise Unterlängen oder Oberlängen aufweisen. Anhand dieser Information kann dann eine besonders zuverlässige Identifizierung der Schriftzeichen erfolgen.

Bei einem weiteren bevorzugten Ausführungsbeispiel der vorliegenden Erfindung umfasst die Vorrichtung einen Konnektivitätszahl-Berechner, der ausgelegt ist, um basierend auf einem Bildinhalt eines Bildausschnitts des Bildes, der ein Schriftzeichen umfasst, eine Eulersche Konnektivitätszahl zu berechnen. Die Vorrichtung umfasst dann bevorzug auch einen Konnektivitätszahl-Oberprüfer, der ausgelegt ist, um die für den Bildausschnitt berechnete Eulersche Konnektivitätszahl mit einer vorbestimmten, in einer Datenbank enthaltenen Vergleichs-Konnektivitätszahl, die einem in dem Bildausschnitt erkannten Schriftzeichen zugeordnet ist, zu vergleichen. Somit kann eine Zuverlässigkeitsinformation erhalten werden, die eine Information über eine Zuverlässigkeit eine Erkennung eines Schriftzeichens trägt. Damit können durch die Verwendung der Eulerschen Konnektivitätszahl manche Erkennungsfehler bei einer Schrifterkennung identifiziert werden, woraufhin ein Benutzer der erfindungsgemäßen Vorrichtung beispielsweise gewarnt werden kann, oder woraufhin eine erneute, verfeinerte Erkennung eines Schriftzeichens stattfinden kann.

Die vorliegende Erfindung schafft im übrigen entsprechende Verfahren zur Erkennung von Schriftzeichen in einem Bild.

Weitere bevorzugte Ausführungsbeispiele der vorliegenden Erfindung sind im Übrigen durch die abhängigen Patentansprüche definiert.

Bevorzugte Ausführungsbeispiele der vorliegenden Erfindung werden nachfolgend Bezug nehmend auf die beiliegenden Figuren näher erläutert. Es zeigen:

Fig. 1 eine graphische Darstellung eines beispielhaften Rasterbildes sowie von nacheinander verarbeiteten Bildausschnitten;

Fig. 2a ein Blockschaltbild einer erfindungsgemäßen Vorrichtung zum Ermitteln Koordinaten eines El- lipsenpunktes gemäß einem zweiten Ausführungsbei- spiel der vorliegenden Erfindung;

Fig. 2b eine graphische Darstellung von drei beispielhaf- ten Referenzkurven zur Verwendung in einer erfin- dungsgemäßen"Mustererkennungseinrichtung;

Fig. 3a eine erste graphische Darstellung eines beispiel- haften Rasterbildes mit darin markierten erkann- ten gebogenen Liniensegmenten;

Fig. 3b eine zweite graphische Darstellung eines bei- spielhaften Rasterbildes mit darin gekennzeichne- ten erkannten gebogenen Liniensegmenten;

Fig. 4 ein Blockschaltbild einer Mustererkennungsein- richtung zur Verwendung in einer erfindungsgemä- ßen Vorrichtung zum Ermitteln einer Information über eine Form und/oder eine Lage einer Ellipse in einem graphischen Bild;

Fig. 5a eine graphische Darstellung einer Vorgehensweise zum Durchschieben eines graphischen Bildes durch die Mustererkennungseinrichtung gemäß Fig. 4;

Fig. 5b eine graphische Darstellung von Zeitsignale, die bei der Umwandlung eines Rasterbildes in paralle- le Zeitsignale entstehen;

Fig. 6 ein Blockschaltbild einer erfindungsgemäßen Vorrichtung zur Erkennung von Schriftzeichen in einem Bild, gemäß einem Ausführungsbeispiel der vorliegenden Erfindung;

Fig. 7 ein Blockschaltbild einer erfindungsgemäßen Vorrichtung zur Erkennung von Schriftzeichen in einem Bild, gemäß einem Ausführungsbeispiel der vorliegenden Erfindung;

Fig. 8a eine graphische Darstellung von drei Schriftzei- chen "a" "c" "d";

Fig. 8b eine Darstellung einer Schriftzeichen- Beschreibung des Schriftzeichens "a";

Fig. 9 eine graphische Darstellung einer Folge von zusammenhängenden Schriftzeichen sowie einer in dem Schriftbild auftretenden Unterlinie, Grundli- nie, Mittellinie und Oberlinie;

Fig. 10a eine graphische Darstellung eines Schriftzeichens "a" in einem Liniensystem bestehend aus einer Un- terlinie, einer Grundlinie, einer Mittellinie und einer Oberlinie;

Fig. 10b    eine Darstellung einer beispielhaften Beschrei- bung eines Schriftzeichens;

Fig. 10c    eine Darstellung einer beispielhaften Beschrei- bung des in der Fig. 10a gezeigten Schriftzei- chens "a";

Fig. 11    ein Blockschaltbild eines erfindungsgemä- ßen Schriftzeichen-Beschreibungs-Erstellers, gemäß einem Ausführungsbeispiel der vorliegenden Erfin- dung;

Fig. 12    ein Blockschaltbild eines erfindungsgemä- ßen Schriftzeichen-Beschreibungs-Erstellers, gemäß einem Ausführungsbeispiel der vorliegenden Erfin- dung;

Fig. 13    eine graphische Darstellung eines Schriftzeichens "g";

Fig. 14    ein Flussdiagramm eines erfindungsgemä- ßen Verfah- rens zur Erkennung eines Schriftzeichens in einem Bild; und

Fig. 15    eine graphische Darstellung von in einem Bild erkannten Extrempunkten.

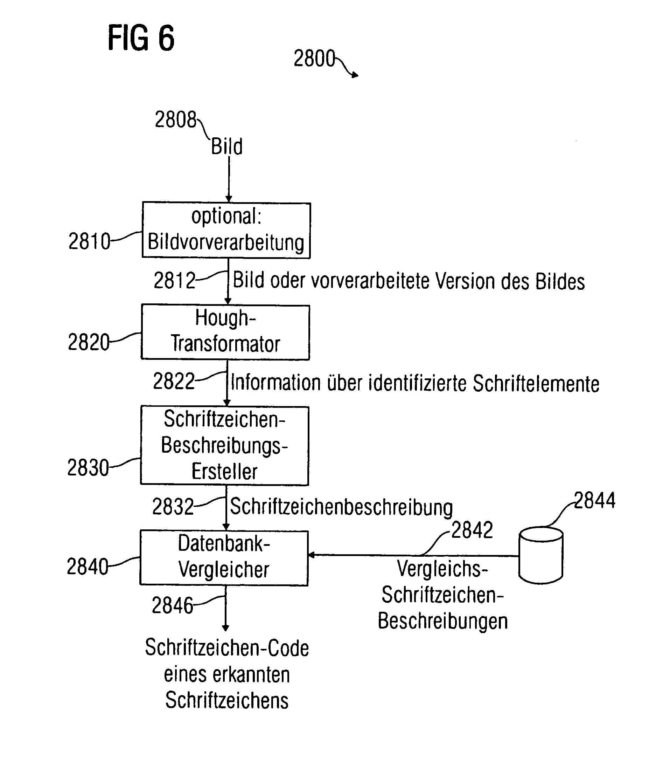

Fig. 6 zeigt ein Blockschaltbild einer erfindungsgemäßen Vorrichtung zur Erkennung von Schriftzeichen in einem Bild. Die Vorrichtung gemäß der Fig. 6 in ihrer Gesamtheit mit 2800 bezeichnet. Die Vorrichtung 2800 ist bevorzugt ausgelegt, um ein Bild 2808 zu empfangen. Die Vorrichtung 2800 umfasst optional eine Bildvorverarbeitung 2810, die ausgelegt ist, um aus dem Bild 2808 eine vorverarbeitete Version 2812 des Bildes zu erzeugen. Die Vorrichtung 2800 umfasst ferner einen Hough- Transformator 2820, der ausgelegt ist, um das Bild 2808 oder die vorverarbeitete Version 2812 des Bildes zu empfangen, und um in dem Bild 2808 oder in der vorverarbeiteten Version 2812 des Bildes Schriftelemente zu identifizieren. Gemäß einem Ausführungsbeispiel der vorliegenden Erfindung ist der Hough-Transformator 2820 ausgelegt, um Kreisbögen oder Ellipsenbögen in dem Bild 2808 oder in der vorverarbeiteten Version 2812 des Bildes als identifizierte Schriftelemente zu identifizieren.

Bei einem anderen bevorzugten Ausführungsbeispiel ist der Hough-Transformator 2820 ausgelegt, um eine Mehrzahl von in verschiedenen Richtungen durch das Bild 2808 oder durch die vorverarbeitete Version 2812 des Bildes verlaufenden geraden Strecken als die identifizierten Schriftelemente zu identifizieren.

Bei einem weiteren Ausführungsbeispiel ist der Hough-Transformator 2820 ausgelegt, um sowohl Kreisbögen oder Ellipsenbögen einerseits als auch gerade Strecken andererseits in dem Bild 2808 bzw. in der vorverarbeiteten Version 2812 des Bildes als identifizierte Schriftelemente zu identifizieren. Der Hough-Transfor- mator 2812 ist ferner ausgelegt, um eine Information 2822 über die identifizierten Schriftelemente an einem Schriftzeichen-Beschreibungs-Ersteller 2830 zu liefern.

Der Schriftzeichen-Beschreibungs-Ersteller 2830 ist ausgelegt, um basierend auf den identifizierten Schriftelementen, also basierend auf den identifizierten Kreisbögen oder Ellipsenbögen, und/oder basierend auf den identifizierten geraden Strecken, eine Schriftzei- chen-Beschreibung 2832 zu erhalten, die eine Lage der identifizierten Schriftelemente beschreibt.

Ein Datenbank-Vergleicher 2840 ist ausgelegt, um die Schriftzeichenbeschreibung 2832 von dem Schriftzeichen-Beschreibungs-Ersteller 2830 zu empfangen und um die Schriftzeichen-Beschreibung 2832 mit einer Mehrzahl von Vergleichs-Schriftzeichen-Beschreibungen 2842 zu vergleichen. Den Vergleichs- Schriftzeichen-Beschreibungen 2842, die beispielsweise in einer Datenbank 2844 gespeichert sein können, sind bevorzugt Schriftzeichen-Codes zugeordnet. Der Datenbank-Vergleicher 2840 ist ausgelegt, um als Ergebnis des Vergleichs zwischen der Schriftzeichen-Beschreibung und der Mehrzahl von Vergleichs-Schriftzei- chen-Beschreibungen einen Schriftzeichen-Code 2846 eines erkannten Schriftzeichens zu liefern.

Basierend auf der obigen strukturellen Beschreibung der Vorrichtung 2800 wird im folgenden die Funktionsweise der Vorrichtung 2800 näher erläutert.

Diesbezüglich sei darauf hingewiesen, dass der Hough-Transformator 2820 bevorzugt ausgelegt ist, um verschiedene Schriftelemente, z.B. Kreisbögen und/ oder Ellipsenbögen und/oder gerade Strecken, in dem Bild 2808 oder in der vorverarbeiteten Version 2812 des Bildes zu erkennen. Diesbezüglich sei darauf hingewiesen, dass ein Hough-Transfor-mator aufgrund seiner Funktionsweise in der Lage ist, gerade oder gebogene Linien als ganzes zu erkennen, auch wenn die Linien Unterbrechungen aufweisen. Dabei ist es lediglich erforderlich, das die Unterbrechungen der Linien nicht zu groß sind. Dies wird durch einen Hough-Transformator beispielsweise erreicht, indem schräge oder gebogene Linien schrittweise zu einer geraden Linie gebogen werden, wobei die gerade Linie dann erkannt wird. Eine Erkennung einer geraden Linie ist nämlich typischerweise besonders einfach möglich, da zur Erkennung einer geraden Linie lediglich geprüft werden muss, wie viele Bildpunkte entlang einer geraden Linie vorhanden sind. Ist die Anzahl der entlang einer geraden Linie gelegenen Bildpunkte größer als eine vorgesehene Mindest-Anzahl, so kann davon ausgegangen werden, dass eine gerade Linie vorliegt, selbst wenn nicht alle Punkte entlang der geraden Linie vorhanden sind. Sind hingegen weniger als eine vorgegebene Anzahl von Punkten entlang einer geraden Linie vorhanden, so kann davon ausgegangen werden dass keine Linie in einem Bild vorliegt.

Ein Hough-Transformator ist allgemein gesprochen ein besonders zuverlässiges Hilfsmittel, um auch nicht zusammenhängende Linien, die entlang einer vorgegebenen Kurve verlaufen (also beispielsweise entlang eines Kreisbogens, eines Ellipsenbogens oder einer geneigten Linie) als ein Ganzes zu erkennen, selbst wenn kurze Unterbrechungen vorhanden sind.

Ferner liefert ein Hough-Transformator aufgrund seines Wirkungsprinzips eine Information zumindest über einer Lage der identifizierten linienförmigen Elemente (Kreisbögen und/oder Ellipsenbögen und/oder geraden Strecken).

Die durch den Hough-Transformator gelieferte Information umfasst aber typischerweise zusätzliche zu einer LageInformation auch eine Information über einen Verlauf des identifizierten Schriftelements, beispielsweise eine Information über eine Richtung einer identifizierten geraden Strecke, oder eine Information über einen Krümmungsradius eines identifizierten Kreisbogens oder Ellipsenbogens.

Ferner wird darauf hingewiesen, dass der Hough-Transformator typischerweise bei der Erkennung eines Kreisbogens oder eines Ellipsenbogens auch eine Information über einen Extrempunkt des Kreisbogens oder Ellipsenbogens, also über einen Punkt, der am weitesten in einer bestimmten Richtung liegt, liefert.

Zusammenfassend lässt sich ganz allgemein festhalten, dass ein Hough-Transformator eine Mehrzahl von Parametern liefert, die eine Lage von einzelnen Schriftelementen beschreiben, wobei Schriftelemente mit kleineren Unterbrechungen als ein einziges zusammenhängendes Schriftelement beschrieben werden. Somit entfällt durch die Verwendung eines Hough-Transformators das Probleme herkömmlicher Einrichtungen zur Schriftzeichenerkennung, dass bei vorliegen kleinster Störungen in dem Schriftbild unmittelbar eine Zerstückelung der Schriftzeichen in eine Vielzahl von Einzel-Bestandteilen auftritt. Die Verwendung eines Hough-Transformators bringt dagegen ein wesentliches Maß an Unempfindlichkeit gegenüber solchen Störungen.

Der Schriftzeichen-Beschreibungs-Ersteller 2830 empfängt somit von dem Hough-Transformator eine Beschreibung einer sehr beschränkten Anzahl von einzelnen Schriftelementen (Kreisbögen oder Ellipsenbögen einerseits und/oder geraden Strecken andererseits).

Auf der begrenzten Zahl der durch den Hough-Transformator identifizierten Schriftelemente, die entweder Kreisbögen beschreiben, zu denen eine bestimmte ausreichende Anzahl an Bildpunkten gehören, oder die gerade Strecken beschreiben, zu denen eine ausreichende Anzahl an Bildpunkten gehören, erzeugt der Schriftzeichen-Beschreibungs-Ersteller eine kompakte Schriftzeichen-Beschreibung, die die identifizierten Kreisbögen oder Ellipsenbögen beschreibt. Mit anderen Worten, durch den Schriftzeichen-Beschreibungs-Ersteller 2830 wird eine besonders vorteilhafte Beschreibung von Schriftzeichen gebildet, die Lageparameter und/oder weitere Parameter, z.B. Krümmungs-Parameter bei Kreisbögen oder Ellipsenbögen sowie Richtungs-Parameter bei geraden Strecken, umfasst. Somit wird ein Schriftzeichen insgesamt durch seine natürlichen Bestandteile, nämlich durch eine Folge von Bögen (Kreisbögen/Ellipsenbögen) und/oder geraden Strecken beschrieben.

Die identifizierten Grundelemente einer Schrift entsprechen damit einer Beschreibungsform, anhand derer ein menschlicher Benutzer ein ihm unbekanntes Schriftzeichen in effizienter Weise beschreiben könnte. Daher stellt die durch den Schriftzeichen-Beschreibungs-Ersteller 2830 gelieferte Schriftzeichen-Beschreibung 2832 eine effiziente Beschreibung eines in dem Bild 2808 bzw. in der vorverarbeiteten Version 2812 des Bildes vorhandenen Schriftzeichen dar, wobei die Beschreibung bevorzugt nur solche Elemente umfasst, die durch den Hough-Transformator 2820 identifiziert werden.

Durch eine Anpassung des Hough-Transformators an Eigenheiten verschiedener Schriften kann die erfindungsgemäße Vorrichtung 2800 somit in einfacher und effizienter Weise an verschiedene Schriften angepasst werden. Besteht eine Schrift beispielsweise hauptsächlich aus runden Elementen, wie dies bei der deutschen Schreibschrift oder bei manchen Computer-Schriftarten der Fall ist, so kann der Hough-Transformator 2820 besonders auf die Erkennung von Kreisbögen verschiedenen Krümmungsradius angepasst sein, wodurch in der durch den Hough-Transformator 2820 gelieferten Information 2822 im Wesentlichen (oder, alternativ, ausschließlich) eine Beschreibung von bogenförmigen Schriftelementen enthalten ist.

Handelt es sich bei einer Schrift hingegen um eine Schrift, die im Wesentlichen gerade Striche umfasst, wie dies beispielsweise bei manchen Computer-Schriftarten der Fall ist, so kann der Hough-Transformator 2820 ausgelegt sein, um bevorzugt (oder, alternativ, ausschließlich) gerade Linien verschiedener Richtungen zu erkennen.

Somit erhält der Schriftzeichen-Beschreibungs-Ersteller 2830 bevorzugt eine Information über die wesentlichen Merkmale der gerade verarbeiteten Schrift. Somit muss der Schriftzeichen-Bereitsteller 2830 lediglich eine durch den Datenbank-Vergleicher 2840 verarbeitbare Darstellung der durch den Hough-Transformator 2820 gelieferten Information 2822 erzeugen. Dadurch kann der Schriftzeichen-Beschreibungs-Ersteller 2833 mit vergleichsweise geringem Aufwand realisiert werden.

Da der anschließende Datenbankvergleich über den Datenbank-Vergleicher 2840 auf einer Beschreibung der wesentlichen Schriftelemente (Kreisbögen/Ellipsenbögen und/oder geraden Stecken) basiert, kann der Vergleich ebenso in effizienter Weise erfolgen. Dies ist unter anderem darin begründet, dass typische Schriftzeichen nur eine sehr begrenzte Anzahl von charakteristischen Schriftelementen enthalten. Damit kann eine Schrift durch besonders wenige Merkmale, beispielsweise durch die Merkmale bzw. Parameter der charakteristischen Schrift-Elemente, beschrieben werden. Eine geringe Anzahl von für den Datenbank-Vergleich heranzuziehenden Elementen resultiert in einer sehr effizienten Realisierung des Datenbank-Vergleichers, wodurch die benötigte Rechenleistung gering gehalten wird und die Schrifterkennung sehr schnell erfolgen kann.

Im Übrigen sei darauf hingewiesen, dass die Schriftzeichen bereits durch das Vorhandensein einer bestimmten Anzahl von verschiedenen Schriftelementen sehr eng eingrenzbar sind. In anderen Worten, ist eine Anzahl an verschiedenen Schriftelementen (Kreisbögen/Ellipsenbögen und/oder geraden Strecken bekannt), so kommt nur noch eine begrenzte Anzahl von Schriftzeichen in Frage. Durch eine derartige VorAuswahl kann der durch den Datenbank-Vergleicher 2840 durchgeführte Datenbank-Vergleich noch einmal wesentlich effizienter gestaltet werden als dies herkömmlicherweise üblich ist.

Zusammenfassend lässt sich somit festhalten, dass die Vorrichtung 2800 eine besonders effiziente Schriftzeichenerkennung dadurch ermöglicht, dass nur charakteristische Schriftelemente durch den Hough-Transformator erkannt werden, wodurch eine stark informations-komprimierte Information 2822 entsteht, basierend auf der mit geringem Aufwand eine aussagekräftige Schriftzeichenbeschreibung 2832 erzeugt werden kann. Damit ergibt sich eine hohe Effizienz und ferner eine hohe Zuverlässigkeit eines durch den Datenbank-Vergleicher 2840 durchgeführten Datenbank-Vergleichs.

Details im Hinblick auf die einzelnen Einrichtungen der Vorrichtung 2800 werden im Folgenden noch näher erläutert.

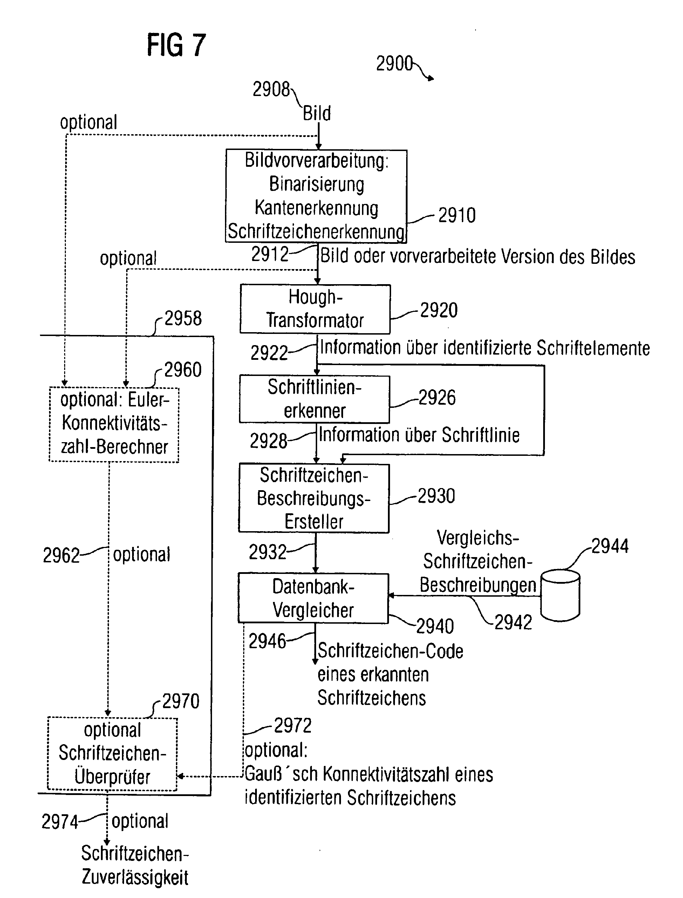

Die Figur 7 zeigt ein Blockschaltbild einer erweiterten Vorrichtung zur Erkennung von Schriftzeichen in einem Bild. Die Vorrichtung der Fig. 7 ist in ihrer Gesamtheit mit 2900 bezeichnet.

Die Vorrichtung 2900 ist ausgelegt, um ein Bild 2908 zu empfangen, das im Wesentlichen dem Bild 2808 entspricht. Die Vorrichtung 2900 umfasst ferner eine Bildvorverarbeitung 2910, die im Wesentlichen der Bildvorverarbeitung 2810 entspricht. Die Bildvorverarbeitung 2910 umfasst bei einem bevorzugten Ausführungsbeispiel eine oder mehrere der folgenden Funktionalitäten: Binarisierung, Kantenerkennung, Schriftzeichentrennung.

Die Bildvorverarbeitung 2910 liefert somit eine vorverarbeitete Version 2912 des Bildes, die im Wesentlichen der vorverarbeiteten Version 2812 des Bildes entspricht.

Es sei darauf hingewiesen, dass die Bildvorverarbeitung beispielsweise ausgelegt sein kann, um das Bild 2908 zu empfangen, in ein Graustufenbild umzuwandeln (sofern das Bild 2908 nicht bereits als ein Graustufenbild vorliegt) und dann einen Schwellwert auf die Graustufenwerte anzuwenden. Je nachdem ob ein Graustufenwert eines Bildpunktes größer oder kleiner als ein vorgegebener oder adaptiv eingestellter Schwellwert ist, wird ein zugeordneter Bildpunkt in der vorverarbeiteten Version 2912 des Bildes auf einen ersten Wert beziehungsweise Farbwert oder auf einen zweiten Wert bzw. Farbwert gesetzt. Somit entsteht beispielsweise aus dem Bild 2908 ein zugehöriges Monochrom-Bild.

Bei einem bevorzugten Ausführungsbeispiel wird der für die Binarisierung verwendete Schwellwert in Abhängigkeit von einer Histogramm-Verteilung von Grauwerten in dem Bild 2908 bzw. in einer Graustufen-Version des Bildes 2908 eingestellt. Bei einem anderen Ausführungsbeispiel kann allerdings auch ein fest vorgegebener Schwellwert verwendet werden. Wird ein neues Bild aufgenommen, so wird bei einem bevorzugten Ausführungsbeispiel der für die Binarisierung herangezogene Schwellenwert nachjustiert.

Es sei darauf hingewiesen, dass eine Binarisierung bei einem weiteren bevorzugten Ausführungsbeispiel ohne einen Zwischenschritt der Umwandlung des Bildes 2908 in ein Graustufenbild erfolgen kann, falls beispielsweise Schwellenwerte auf die verschiedenen Farbintensitäten direkt angewendet werden.

Bei einem weiteren bevorzugten Ausführungsbeispiel umfasst die Bildvorverarbeitung 2910, beispielsweise zusätzlich zu der Binarisierung, eine Kantenerkennung. Durch die Kantenerkennung werden beispielsweise Kanten in dem durch die Binarisierung erzeugten Monochrom-Bild erkannt. In anderen Worten, Übergänge zwischen den zwei Farben in dem Monochrombild werden beispielsweise als Kanten markiert. Dies ist besonders vorteilhaft, da ein Hough-Transformator besonders gut mit einem Kantenbild umgehen kann.

Im übrigen sei darauf hingewiesen, dass die Kantenerkennung auch unmittelbar unter Verwendung des Bildes 2908, also beispielsweise ohne Verwendung einer Binarisierung, erfolgen kann.

Die Bildvorverarbeitung 2910 umfasst ferner bei einem weiteren bevorzugten Ausführungsbeispiel eine Schriftzeichentrennung. Dabei werden einzelne Schriftzeichen getrennt bzw. separiert. Weisen beispielsweise verschiedene identifizierte Kanten einen Abstand auf, der größer als ein vorgegebener Abstand ist, so wird beispielsweise davon ausgegangen, dass zwei getrennte Schriftzeichen vorliegen. Hier ist es beispielsweise vorteilhaft, wenn Schriftzeichen grundsätzlich durch einen Mindestabstand voneinander getrennt sind. Somit entsteht durch eine Schriftzeichentrennung beispielsweise aus einem Bild eine Mehrzahl von Bildausschnitten, wobei bevorzugt jeder Bildausschnitt nur ein einzelnes Schriftzeichen umfasst.

Es sei darauf hingewiesen, dass verschiedene Ansätze für eine Schriftzeichentrennung existieren, die hier nicht im Detail erläutert werden sollen.

Insgesamt entsteht durch die Bildvorverarbeitung 2910 somit eine vorverarbeitete Version 2912 des Bildes 2908. Die Vorrichtung 2900 umfasst ferner einen Hough-Transformator 2920. Der Hough-Transformator 2920 erfüllt dieselbe Funktion wie der Hough-Transformator 2820, der anhand der Figur 28 beschrieben wurde. Somit stehen am Ausgang des Hough-Transformators 2920 Informationen über identifizierte Schriftelemente zur Verfügung, wobei es sich bei den identifizierten Schriftelementen um Kreisbögen, Ellipsenbögen und/oder gerade Strecken handeln kann.

Die Vorrichtung 2900 umfasst ferner einen Schriftlinienerkenner 2926. Der Schriftlinienerkenner 2926 empfängt die durch den Hough-Transformator 2920 gelieferten Informationen 2922 über identifizierte Schriftelemente, und ist ausgelegt, um eine Information 2928 über Schriftlinien in dem Bild 2908 bzw. in der vorverarbeiteten Version 2912 des Bildes bereitzustellen.

Der Schriftlinienerkenner 2926 ist dabei ausgelegt, um basierend auf der Information 2922 über identifizierte Schriftelemente, die durch den Hough-Transformator 2920 geliefert wird, Linien in dem Bild zu erkennen, auf denen sich überdurchschnittlich viele Extrema von Kreisbögen oder Ellipsenbögen befinden und/oder auf denen besonders viele gerade Strecken enden.

Details im Hinblick auf die Funktionalität des Schriftlinienerkenners 2926 werde später noch mit Bezug auf die Figuren 31 und 32 beschrieben.

Im Übrigen sei darauf hingewiesen, dass der Schriftlinienerkenner 2926 optional auch entfallen kann.

Die Vorrichtung 2900 umfasster ferner einen Schriftzeichen-Beschreibungs-Ersteller 2930, der von seiner Funktion her im Wesentlichen dem Schriftzeichen-Beschreibungs-Ersteller 2830 entspricht. Der Schriftzeichen-Beschreibungs-Ersteller 2930 ist allerdings bei einem bevorzugtem Ausführungsbeispiel, bei dem Schriftlinienerkenner 2926 vorhanden ist, ausgelegt, um sowohl die durch den Schriftlinienerkenner 2926 gelieferte Information 2928 über Schriftlinien in dem Bild als auch die durch den Hough-Transformator 2920 gelieferte Information 2922 über identifizierte Schriftelemente zu verwenden, um eine Schriftzeichen-Beschreibung 2932 zu erstellen.

Der Schriftzeichen-Beschreibungs-Ersteller 2930 ist dabei bevorzugt ausgelegt um die Schriftzeichen-Beschreibung 2932 so zu erstellen, dass die Schriftzeichen-Beschreibung 2932 eine relative Lage von durch die Information 2922 beschriebenen Schriftelementen in Bezug auf die durch die Information 2928 beschriebenen Schriftlinien beschreibt.

Somit entsteht eine besonders vorteilhafte Schriftzeichen-Beschreibung 2932, in der die Schriftlinien, die im Folgenden noch näher beschrieben werden, berücksichtigt sind. Die entsprechende Schriftzeichen-Beschreibung 2932, die die Information über die Schriftlinien 2928 berücksichtigt, und die Parameter der identifizierten Schriftelemente 2922 bevorzugt relativ zu den identifizierten Schriftlinien angibt, ist somit besonders unempfindlich bezüglich einer Drehung oder einer Größen-Skalierung der Schriftzeichen.

Die Vorrichtung 2900 umfasst ferner einen Datenbank-Vergleicher 2940, der die Schriftzeichen-Beschreibung 2932 empfängt und von seiner Funktion her im Wesentlichen dem Datenbank-Vergleicher 2840 der Vorrichtung 2800 entspricht.

Der Datenbank-Vergleicher 2940 ist somit bevorzugt mit einer Datenbank 2944 gekoppelt, um Vergleichs-Schriftzeichen 2942 zu empfangen. Der Datenbank-Vergleicher 2940 liefert im Übrigen einen Schriftzeichen-Code 2946 eines erkannten Schriftzeichens.

In einem bevorzugten Ausführungsbeispiel umfasst die Vorrichtung 2900 ferner eine optionale Einrichtung 2958 zur Überprüfung einer Zuverlässigkeit eines identifizierten Schriftzeichens. Die Einrichtung 2958 zur Überprüfung einer Zuverlässigkeit eines identifizierten Schriftzeichens umfasst einen Euler-Konnektivitätszahl-Berechner 2960. Der Euler-Konnektivitätszahl-Berechner 2960 empfängt entweder das Bild 2908 oder die vorverarbeitete Version 2912 des Bildes und liefert somit eine Euler-Konnektivitätszahl-Information 2962, die eine Euler-Konnektivitätszahl eines Bildinhaltes des Bildes 2908 oder der vorverarbeiteten Version 2912 des Bildes umfasst. Die Euler-Konnektivitätszahl wird im übrigen in der Literatur manchmal auch als Euler-Charakteristik bezeichnet und beschreibt eine Differenz zwischen einer Anzahl von Objekten in dem Bild (bzw. in der vorverarbeiteten Version des Bildes) und einer Anzahl von Löchern bzw. eingeschlossenen Bereichen in dem Bild. Weitere Details im Hinblick auf die Berechnung der Euler-Konnektivitätszahl, die durch den Euler-Konnektivitätszahl-Berechner 2960 durchgeführt wird, werden im Folgenden noch beschrieben.

Dir Vorrichtung 2958 zur Bestimmung einer Zuverlässigkeit der Schriftzeichenerkennung umfasst ferner einen Schriftzeichenüberprüfer 2970, der mit dem Euler-Konnektivitätszahl-Berechner 2960 gekoppelt ist, um die Euler-Konnektivitätszahl 2962 zu empfangen. Der Schriftzeichenüberprüfer 2970 ist ferner mit dem Datenbank-Vergleicher 2940 gekoppelt, um eine zu einem erkannten Schriftzeichen gehörige Vergleichs-Euler-Konnektivitätszahl 2972 zu erhalten. Die Vergleichs-Euler-Konnektivitätszahl 2972 wird dabei durch den Datenbank-Vergleicher 2940 basierend auf einem Eintrag der Datenbank bereitgestellt. Der Schriftzeichen-Oberprüfer 2970 ist ferner ausgelegt, um eine Schriftzeichen-Zuverlässigkeits-Information 2974 zu liefern. Dabei ist der Schriftzeichen-Überprüfer 2970 bevorzugt ausgelegt, um eine hohe Zuverlässigkeit eines erkannten Schriftzeichens anzugeben, wenn die durch den Euler-Konnektivitätszahl-Berechner 2960 auf dem Bild 2908 bzw. aus der vorverarbeiteten Version 2912 des Bildes bestimmte tatsächlich Euler-Konnektivitätszahl 2962 mit der aus der Datenbank 2944 entnommenen Vergleichs-Euler-Konnektivitätszahl 2972, die zu einem identifizierten Schriftzeichen gehört, übereinstimmt. Im Gegensatz dazu zeigt der Schriftzeichen-Überprüfer 2970 durch die Schriftzeichen-Zuverlässigkeits-Information 2974 bevorzugt eine geringe Zuverlässigkeit eines identifizierten Schriftzeichens an, wenn eine Abweichung zwischen der tatsächlichen Euler-Konnektivitätszahl 2962 und der Vergleichs-Euler-Konnektivitätszahl 2972 besteht.

Im Folgenden wird einen Vorgehensweise bei einer Erkennung von Schriftzeichen anhand der Figuren 30a, 30b, 31, 32a, 32b, 32c, 33, 34 und 35 erläutert.

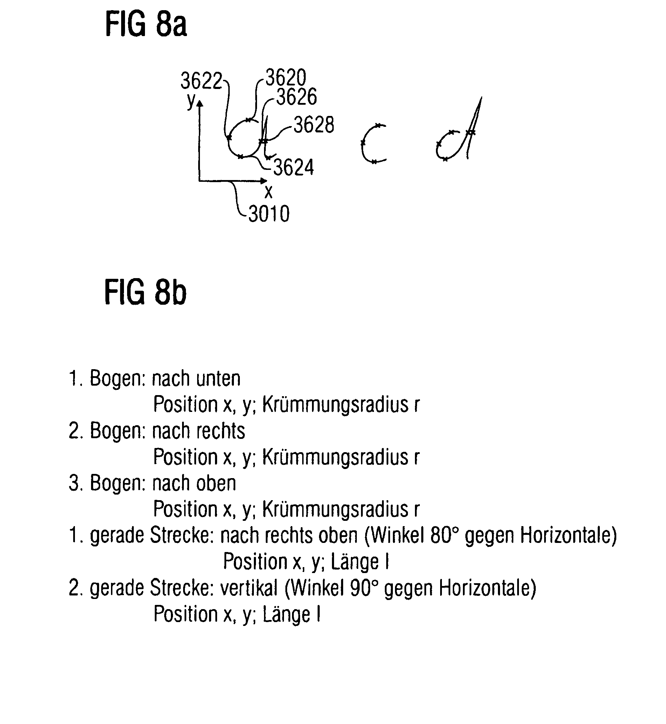

Die Fig. 8a zeigt zu diesem Zweck eine graphische Darstellung von drei Schriftzeichen "a" "c" "d". In die Schriftzeichen "a" "c" "d" sind dabei beispielhaft Extrempunkte von Kreisbögen bzw. Ellipsenbögen, sowie Mittelpunkte von geraden Strecken eingezeichnet. Die genannten Punkte sind mit einem "x" gekennzeichnet. Es sei darauf hingewiesen, dass unter einem Extrempunkt eines Bogens ein am weitesten in einer vorgegebenen Richtung liegender Punkt des Bogens verstanden wird. Wird davon ausgegangen, dass die Schriftzeichen "a" "c" "d" in einem (z.B, rechtwinkligen) x-y-Koordinatensystem aufgetragen sind, so sind Extrempunkte von Bögen beispielsweise die am weitesten in positiver x-Richtung, negativer x-Richtung, positiver y-Richtung und negativer y-Richtung gelegenen Punkte der Bögen. Ein x-y-Koordinatensystem ist im Übrigen in der Fig. 8 mit 3010 bezeichnet.

Ferner ist ein Extrempunkt eines ersten (oberen) Bogen des Buchstaben "a" mit 3020 bezeichnet. Ein Extrempunkt eines zweiten linken Bogens ist mit 3622 bezeichnet. Ein Extrempunkt eines dritten, unteren Bogens ist mit 3624 bezeichnet. Ein Mittelpunkt einer ersten geraden Strecke ist mit 3626 bezeichnet, und ein Mittelpunkt einer zweiten geraden Streck ist mit 3628 bezeichnet. Jeweils sei im Übrigen darauf hingewiesen, dass unter einem Bogen ein Ausschnitt von einer zumindest näherungsweise kreisförmigen oder ellipsenförmigen Linie verstanden wird. In anderen Worten, der Hough-Transformator erkennt, dass ein Linienverlauf des Schriftzeichens "a" in einer Umgebung des ersten Extrempunkts 3620 durch einen Kreisbogen oder Ellipsenbogen angenähert wird, und dass ferner einen Linienverlauf des Buchstabens "a" beispielsweise in einer Umgebung des Linien-Mittelpunkts 3626 durch eine gerade Strecke angenähert wird.

Ähnlich wie für den Buchstaben "a" sind auch für die Buchstaben "c" und "d" entsprechende Extrempunkte von Näherungs-Kreisbögen bzw. Näherungs-Ellipsenbögen sowie Mittelpunkte von Näherungs-Strecken mit "x" markiert.

Die Fig. 8b zeigt eine tabellarische Darstellung einer einfachen Beschreibung des Buchstaben "a". Dabei wird das davon ausgegangen, dass der Hough-Transformator 2830 der Vorrichtung 2800 bzw. der Hough-Transformator 2930 der Vorrichtung 2900 beispielsweise eine Lage eines Extrempunktes von verschiedenen gekrümmten Linien identifizieren kann, und ferner eine Lage eines Mittelpunktes von in verschiedenen gekrümmten Linien identifizieren kann.

Daher werden bei dem Buchstaben "a" gemäß der Fig. 8a drei Bögen und zwei gerade Strecken identifiziert. Die Beschreibung des Buchstabens "a" gemäß der Figur 30b umfasst daher eine Beschreibung für die drei Bögen und für die zwei geraden Stecken. Der erste Bogen um den Extrempunkt 3620 ist ein nach unten gekrümmter Bogen, so dass die zugehörige Beschreibung beispielsweise ein Attribut, bzw. einen Parameter umfasst, der eine Krümmung nach unten anzeigt. Ferner umfasst die Beschreibung bevorzugt eine Information über eine Position des Extrempunkts 3620. Die Position kann bevorzugt durch zugehörige Koordinaten x, y angegeben sein. Die Beschreibung des ersten Bogens um den Extrempunkt 3620 umfasst ferner optional eine Angabe eines Krümmungsradius r des ersten Bogens.

In ähnlicher Weise umfasst eine Beschreibung eines zweiten Bogens, der das Schriftzeichen "a" in einer Umgebung des zweiten Extrempunktes 3622 annähert, eine Information darüber, dass der Bogen eine Krümmung nach rechts aufweist. Die Beschreibung des zweiten Bogens kann wiederum eine Position des zweiten Extrempunkts 3622 in Form von Koordinaten x, y, sowie, optional, eine Information über einen Krümmungsradius r des zweiten Bogens angegeben. Eine entsprechende Beschreibung kann auch für den dritten Bogen, der den Buchstaben "a" in einer Umgebung des dritten Extrempunkts 3624 annähert, gegeben werden, wie dies in der Figur 30b gezeigt ist. Es sei allerdings darauf hingewiesen, dass die Bögen, die den Buchstaben "a" an den Extrempunkten 3620, 3622, 3624 annähern, auch durch andere Parameter beschrieben werden können.

Im Übrigen sei darauf hingewiesen, dass unter einem Extremum bevorzugt ein lokales Extremum verstanden wird, das nicht notwendigerweise ein globales Extremum sein muss.

Für die beiden geraden Strecken des Buchstaben "a" kann beispielsweise durch den Hough-Transformator 2820, 2920 eine Information, über eine Richtung geliefert werden. Somit kann die Beschreibung der ersten geraden Strecke mit dem Mittelpunkt 3626 beispielsweise angeben, dass die erste gerade Strecke nach rechts oben verläuft. Die Beschreibung kann ferner optional den Winkel angeben, unter dem die Strecke gegenüber einer Horizontalen geneigt ist. Ferner kann die Beschreibung beispielsweise die Position des Mittelpunkts 3626 der entsprechenden Strecke durch Koordinaten x, y angeben. Ferner kann die Beschreibung der ersten geraden Strecke eine Information über die Länge der ersten geraden Strecke in Form eines Parameters 1 umfassen. Alternativ können allerdings auch andere Parameter zur Beschreibung verwendet werden, beispielsweise die Koordinaten eines Anfangspunktes oder eines Endpunktes.

Die Fig. 8b zeigt zwei Beschreibungen der geraden Strecken, der ersten geraden Strecke mit dem Mittelpunkt 3626 und der zweiten geraden Strecke mit dem Mittelpunkt 3628. Somit ist aus der Fig. 8b ersichtlich, dass aufgrund der durch den Hough-Transformator 3820, 2920 gelieferten Information eine effiziente Beschreibung eines Schriftzeichens erzeugt werden kann.

Im Folgenden wird noch beschrieben, wie die durch den Hough-Transformator gelieferte Information für einen Vergleich in dem Datenbank-Vergleicher 2840, 2940 weiterverarbeitet werden kann, um eine noch günstigere Darstellung der Information 2822, 2922 über identifizierte Schriftelemente zu erhalten. Allerdings sei darauf hingewiesen, dass bei einem vereinfachten Ausführungsbeispiel die durch den Hough-Transformator 2820, 2920 gelieferte Information auch direkt einem Datenbank-Vergleicher 2840 zugeführt werden kann.

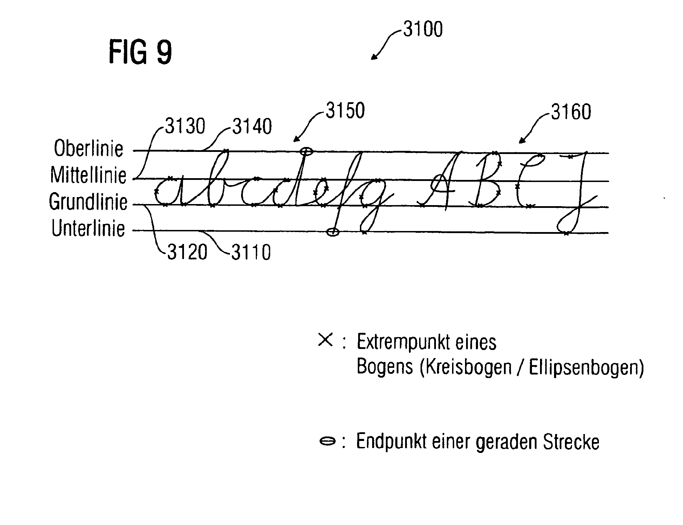

Fig. 9 zeigt eine graphische Darstellung von Schriftzeichen in einer deutschen Schreibschrift sowie von zugehörigen Schriftlinien. Die graphische Darstellung der Fig. 9 ist in ihrer Gesamtheit mit 3100 bezeichnet. Die graphische Darstellung 3100 zeigt vier charakteristische Schriftlinien, nämlich eine Unterlinie 3110, eine Grundlinie 3120, eine Mittellinie 3130 und eine Oberlinie 3140. Ferner zeigt die schematische Darstellung 3100 einen Schriftzug "abcdefg" 3150 sowie vier Großbuchstaben "ABCJ" 3160. Aus der graphischen Darstellung 3100 ist ersichtlich, dass die Kleinbuchstaben "a", "c" und "e" zumindest idealerweise vollständig zwischen der Grundlinie und der Mittellinie liegen und diese Linien berühren. Die Kleinbuchstaben "b" und "d" sowie die Großbuchstaben "A", "B" und "C" liegen zwischen der Grundlinie 3120 und der Oberlinie 3140 und berühren die Grundlinie 3120 und die Oberlinie 3140 typischerweise. Der Buchstabe "f" liegt hingegen zwischen der Unterlinie und der Oberlinie und berührt die Unterlinie 3110 und die Oberlinie 3140. Das Gleiche gilt für den Großbuchstaben "J".

In der graphischen Darstellung 3100 sind im Übrigen Extrempunkte von in den Buchstaben enthaltenden Bögen (z. B. von Kreisbögen oder Ellipsenbögen) mit "x" gekennzeichnet. Ferner sind Endpunkte von geraden Strecken mit "⊕" gekennzeichnet. Aus der schematischen Darstellung 3100 wird ersichtlich, dass entlang den Schriftlinien 3110, 3120, 3130, 3140 besonders viele Extrempunkte von Bögen auftreten. Ferner liegen auf den Schriftlinien besonders viele Endpunkte von geraden Strecken. Daher ist verständlich, dass ein Schriftlinienerkenner 2926 eine Schriftlinie erkennen kann, indem er nach einer geraden Linie sucht, auf der besonders viele Extrempunkte von Bögen und/oder besonders viele Endpunkte von geraden Strecken vorhanden sind. Zur Bestimmung der Schriftlinien kann der Schriftlinienerkenner 2926 daher bevorzugt die durch den Hough-Transformator 2960 gelieferte Information 2922 über Extrempunkte von Bögen und/oder die von dem Hough-Transformator 2920 gelieferte Information über Endpunkte von geraden Strecken verwenden. Basierend auf der genannten Information bestimmt der Schriftlinienerkenner 2926 Linien, entlang derer eine Häufung von Extrempunkten von Bögen und/oder von Endpunkten von geraden Strecken auftritt.

Somit liefert der Schriftlinienerkenner 2926 als die Information 2928 beispielsweise eine Information über eine Lage der Schriftlinien 3110, 3120, 3130, 3140 also beispielsweise über eine Position und/oder eine Richtung der genannten Schriftlinien.

Der Schriftlinienerkenner kann im übrigen ausgelegt sein, um zusätzlich ein Vorab-Wissen über die Lage der Schriftlinien zueinander (beispielsweise im Hinblick auf die Tatsache, dass die Schriftlinien zueinander parallel sind und bestimmte relative Abstände haben) ausnutzen, um die Schriftlinien zu ermitteln.

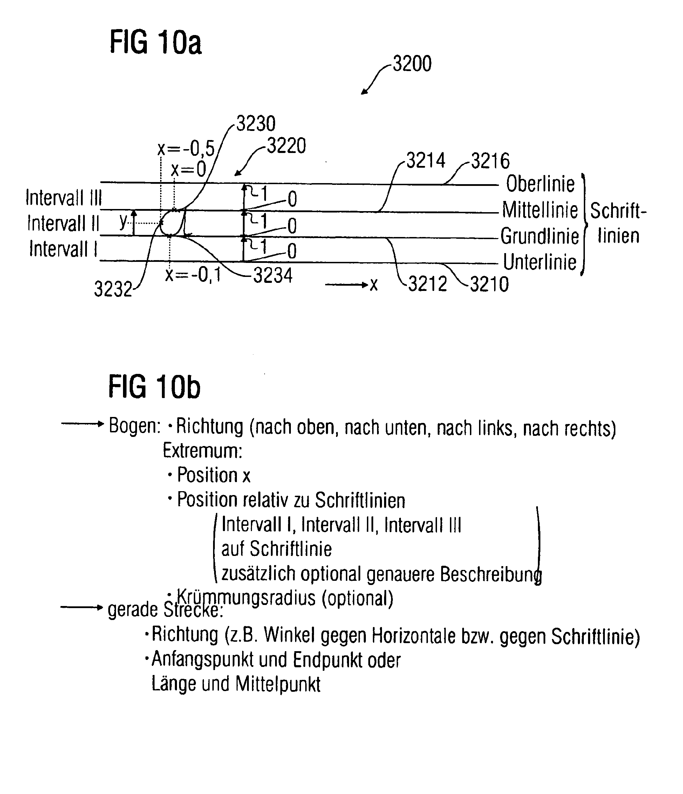

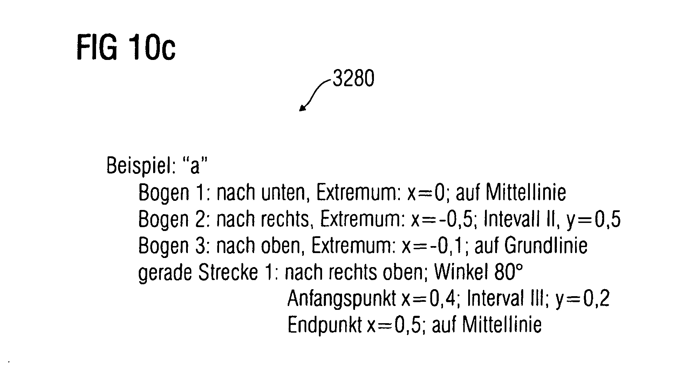

Im Folgenden wird anhand der Fig. 10a, 10b und 10c beschrieben, wie eine besonders vorteilhafte Schriftzeichen-Beschreibung ermittelt werden kann, indem die Position der Extrema relativ zu den ermittelten Schriftlinien beschrieben wird. Zu diesem Zweck zeigt die Fig. 10a eine graphische Darstellung eines Schriftzeichens "a" in einem Liniensystem bestehend aus einer Unterlinie, einer Grundlinie, einer Mittellinie und einer Oberlinie. Die graphische Darstellung gemäß der Fig, 10a ist in ihrer Gesamtheit mit 3200 bezeichnet. Die graphische Darstellung 3200 zeigt eine Unterlinie 3210, eine Grundlinie 3212, eine Mittellinie 3214 sowie eine Oberlinie 3216. Ein Schriftzeichen "a" ist dabei zwischen einer Grundlinie und einer Mittellinie angeordnet. Das Schriftzeichen "a" ist in seiner Gesamtheit mit 3220 bezeichnet. Ein erster, oberer Bogen des Schriftzeichens "a" weist ein Extremum 3230 auf. Das Extremum 3230 ist bei dem Beispiel gemäß Fig. 10a auf der Mittellinie 3214 gelegen. Dabei kann davon ausgegangen werden, dass das Extremum 3230 zumindest näherungsweise auf der Mittellinie gelegen ist bzw. als auf der Mittellinie gelegen angesehen wird, wenn ein Abstand des Extremums 3230 von der Mittelinie kleiner als eine vorgegebene Schwelle ist, die entweder absolut (im Sinne einer absoluten Entfernung) oder relativ (in Abhängigkeit von einem Abstand zwischen zwei Schriftlinien) angegeben werden kann. Dem Extremum 3230 des ersten Bogens wird hier beispielsweise im Wesentlichen willkürlich eine x-Koordinate (x = 0) zugeordnet.

Das Schriftzeichen "a" umfasst einen zweiten, linken Bogen, dessen Extremum 3232 zwischen der Grundlinie 3212 und der Mittellinie 3214 liegt. Dem zweiten Extremum 3232 ist ferner eine x-Koordinate (x = -0,5) zugeordnet, die eine Position (bzw. eine horizontale Position bzw. x-Position) relativ zu dem als Bezugspunkt gewählten ersten Extremum 3230 beschreibt. Der Buchstabe "a" umfasst ferner einen dritten, unteren Bogen, dessen Extremum 3234 auf der Grundlinie 3212 gelegen ist. In anderen Worten, ein Abstand des dritten Extremums 3234 von der Grundlinie 3212 ist kleiner als eine vorgegebene Schwelle, wobei die vorgegebene Schwelle wiederum als ein absoluter Wert oder als ein relativer Wert (in Abhängigkeit von einem Abstand zwischen zwei Schriftlinien) bestimmt bzw. vorgegeben sein kann.

Ferner weist auch das dritte Extremum 3232 eine x-Koordinate auf, die eine Lage relativ zu dem Bezugspunkt beschreibt. Bei dem gezeigten Beispiels gilt: x = -0,1.

Ähnliche Informationen können im übrigen auch für die weiteren Bestandteile des Buchstabens "a" (sowie für alle anderen Buchstaben) gemacht werden, beispielsweise für die rechte näherungsweise gerade Strecke des Buchstabens "a".

Ferner sei darauf hingewiesen, dass beispielsweise ein Bereich zwischen der Unterlinie 3210 und der Grundlinie 3212 als ein erstes Intervall (Intervall I) definiert sein kann. Ein Bereich zwischen der Grundlinie 3212 und der Mittellinie 3214 kann ferner als ein zweites Intervall (Intervall II) definiert sein. Ein Bereich zwischen der Mittellinie 3214 und der Oberlinie 3216 kann ferner als ein drittes Intervall (Intervall III) definiert sein.

Ferner sei darauf hingewiesen, dass beispielsweise einer Position innerhalb eines Intervalls in Abhängigkeit von einem Abstand von den das Intervall begrenzenden Schriftlinien ein Wert zwischen 0 und 1 zugeordnet sein kann, der eine vertikale Position bzw. eine relative y-Position beschreibt. In anderen Worten, liegt ein bestimmter Punkt (z. B. ein Extrempunkt eines Bogens, ein Anfangspunkt einer geraden Strecke, ein Mittelpunkte einer geraden Strecke oder ein Endpunkt einer geraden Strecke) innerhalb eines Intervalls, so kann diesem Punkt beispielsweise eine relative Lagekoordinate von etwa 0 zugeordnet sein, wenn der Punkt bei einem Anfang des Intervalls gelegen ist, und es kann dem Punkt ferner eine relative Lagekoordinate von etwa 1 zugeordnet sein, wenn der Punkt beispielsweise nahe bei einem Ende des Intervalls gelegen ist. Liegt beispielsweise ein entsprechender Punkt zwischen der Grundlinie und der Mittellinie, aber sehr nahe bei der Grundlinie, so ist dem Punkt beispielsweise ein Lageparameter von Null zugeordnet. Liegt der Punkt hingegen zwischen der Grundlinie und der Mittellinie, aber nahe bei der Mittellinie, so kann dem Punkt beispielsweise ein Lageparameter von näherungsweise 1 zugeordnet sein. Im Übrigen kann einem Punkt, der in der Mitte zwischen der Grundlinie und der Mittellinie gelegen ist, beispielsweise ein Lageparameter von 0,5 zugeordnet sein. Allerdings ist es nicht zwingend erforderlich, eine lineare Zuordnung der Lageparameter zu wählen. Auch eine Begrenzung der Lageparameter auf ein Intervall zwischen 0 und 1 ist nicht erforderlich, sondern ist nur als Beispiel anzusehen. Vielmehr ist es bei einem Ausführungsbeispiel der vorliegenden Erfindung allgemein von Vorteil, dass Punkten (Extrempunkten von Bögen, Anfangspunkten von geraden Strecken, Endpunkten von geraden Strecken oder Mittelpunkten von geraden Strecken) relative Lageparameter zugeordnet werden, die auf die Schriftlinien bezogen sind.

Anhand der Fig. 10b wird im Folgenden eine beispielhafte Beschreibungsform für ein Schriftzeichen angegeben. Für einen Bogen (also beispielsweise einen Kreisbogen oder einen Ellipsenbogen) kann die Beschreibung eine Information über die Richtung umfassen, die angibt, ob der Bogen nach oben, nach unten, nach links oder nach rechts gekrümmt ist. Ferner kann die Beschreibung für einen Bogen eine Information über eine Lage eines Extremums umfassen. Die Lage des Extremums kann beispielsweise als eine absolute oder relative Position in einer ersten Richtung (beispielsweise in einer Richtung entlang der Schriftlinien, die auch als x-Richtung bezeichnet ist) angeben sein. Alternativ kann aber auch eine relative Information über eine Lage in der x-Richtung gegeben werden, die beispielsweise eine Lage im Bezug auf einen Vergleichspunkt in dem Schriftzeichen angibt. Bei dem Vergleichspunkt handelt es sich beispielsweise um einen Bogen, einen Anfangspunkt einer geraden Strecken, einen Endpunkt einer geraden Strecke oder einen Mittelpunkt einer geraden Strecke. Ebenso kann es sich bei dem Referenzpunkt aber auch um einen anderweitig gewählten charakteristischen Punkt eines Schriftzeichens handeln, beispielsweise um einen Mittelpunkt, einen am weitesten in einer bestimmten Richtung gelegenen Punkt oder um einen anderen charakteristischen Punkt. Ferner umfasst die Beschreibung eines Bogens bevorzugt eine Information über eine Position y relativ zu den Schriftlinien 3210, 3212, 3214, 3216. Die Information über die Position relativ zu den Schriftlinien kann beispielsweise angeben, ob der Punkt in einem Intervall zwischen zwei Schriftlinien gelegen ist oder (innerhalb einer vorgegebenen Toleranz) auf einer Schriftlinie liegt. Ferner kann die Information optional angeben, in welchem Intervall zwischen den Schriftlinien der Punkt gegeben ist.

Zusätzlich oder alternativ kann die Information über die Position relativ zu den Schriftlinien eine Information darüber enthalten, ob ein Punkt (beispielsweise innerhalb eines vorgegebenen Toleranzbereichs) auf einer der Schriftlinien liegt, und, falls ja, auf welcher der Schriftlinien der Punkt gelegen ist. Zusätzlich kann optional eine genauere Beschreibung der Position in der y-Richtung relativ zu den Schriftlinien gegeben werden, beispielsweise in Form eines Werts zwischen 0 und 1, wie dies vorher beschrieben wurde. Auch die Position in x-Richtung kann im übrigen entweder absolut oder relativ, bezogen auf einen oder zwei Bezugspunkte, angegeben werden.

Die Information über einen Bogen kann ferner eine Information über einen Krümmungsradius des Bogens enthalten. Die Informationen über den Krümmungsradius ist allerdings als optional anzusehen.

Ferner kann die Beschreibung eines Schriftzeichens eine Information über eine gerade Strecke umfassen. Beispielsweise kann eine Richtung einer geraden Strecke in der Information über ein Schriftzeichen enthalten sein. So kann die Richtung einer geraden Strecke beispielsweise durch Angabe eines Winkels gegenüber einer Horizontalen bzw. gegenüber einer Schriftlinie 3210, 3212, 3214, 3216 angegeben werden. Alternativ oder zusätzlich kann die Lage der identifizierten geraden Strecken beispielsweise dadurch angegeben werden, dass eine Position eines Anfangspunkts der geraden Strecke und eines Endpunkts der geraden Strecke beschrieben wird. Alternativ dazu kann eine Information über eine gerade Strecke auch Information über eine Länge der geraden Strecke und über einen Mittelpunkt der geraden Strecke umfassen. Die genannten Informationen über die gerade Strecke sind bevorzugt relativ zu den Schriftlinien gewählt.

Somit ist festzuhalten, dass der Schriftzeichen-Beschreibungs-Ersteller 2930 unter Verwendung der durch den Schriftlinienerkenner 2926 gelieferten Information sowie ferner unter Verwendung der durch den Hough-Transformator 2920 gelieferten Information die relative Beschreibung eines Schriftzeichens als die Information 2932 bereitstellen kann, so dass die Information 2932 die Lage von Bögen und/oder geraden Strekken in dem Schriftzeichen relativ zu den Schriftlinien beschreibt.

Die Fig. 10c zeigt eine beispielhafte Beschreibung des in der Fig. 10a gezeigten Schriftzeichens "a". Das Schriftzeichen "a" umfasst gemäß der in der Fig. 10c gezeigten Beschreibung 3280 einen ersten Bogen, der nach unten gekrümmt ist, dessen Extremum 3230 die x-Koordinate x = 0 aufweist, und der ferner auf der Mittellinie 3216 gelegen ist. Der Buchstabe "a" umfasst ferner einen zweiten Bogen, der nach rechts gekrümmt ist, und dessen Extremum die x-Koordinate x = -0,5 aufweist. Das Extremum 3232 des zweiten Bogens ist im Übrigen in dem zweiten Intervall (Intervall II) gelegen. Eine y-Position des Extremums 3232 kann beispielsweise als y=0.5 genau angegeben sein, wodurch zum Ausdruck kommt, dass das Extremum 3232 in der Mitte zwischen der der Grundlinie und der Mittellinie gelegen ist. Der Buchstabe "a" umfasst zusätzlich einen dritten Bogen, der nach oben gekrümmt ist, und dessen Extremum die x-Koordinate x = -0,1 aufweist. Das Extremum 3234 des dritten Bogens ist im übrigen auf der Grundlinie 3212 gelegen. Die rechte gerade Strecke des Buchstabens "a" verläuft gemäß der Beschreibung 3280 nach rechts oben und weist einen Winkel von 80° gegenüber einer horizontalen bzw. gegenüber einer Schriftlinie auf. Ein Anfangspunkt der geraden Strecke weist eine x-Koordinate von x = 0,4 auf und ist in dem zweiten Intervall, also zwischen der Grundlinie und der Mittellinie gelegen. Ein Endpunkt der geraden Strecke weist eine x-Koordinate von 0,5 auf und ist beispielsweise auf der Mittellinie 3214 gelegen. Die entsprechende Lageinformation kann beispielsweise durch den Schriftzeichen-Beschreibungs-Ersteller 2930 in codierter und geordneter Weise an den Datenbank-Vergleicher 2940 geliefert werden.

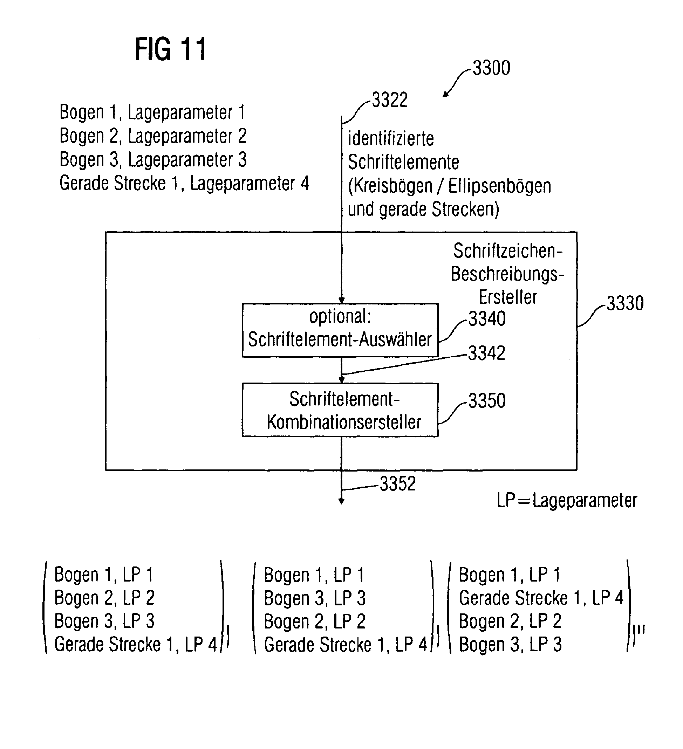

Im Folgenden wird anhand Fig. 11 und 34 beschrieben, wie durch den Schriftzeichen-Beschreibungs-Ersteller (also beispielsweise durch den Schriftzeichen-Beschreibungs-Ersteller 2830, oder durch den Schriftzeichen-Beschreibungs-Ersteller 2930) eine Information 2832, 2932 gewonnen werden kann, die sich besonders gut zur Verarbeitung durch den Datenbank-Vergleicher 2840, 2940 eignet.

Zu diesem Zweck zeigt die Fig. 11 ein Blockschaltbild eines erfindungsgemäßen Schriftzeichen-Beschreibungs-Erstellers, gemäß einem Ausführungsbeispiel der vorliegenden Erfindung. Der Schriftzeichen-Beschreibungs-Ersteller gemäß der Fig. 11 ist in seiner Gesamtheit mit 3300 bezeichnet. Der Schriftzeichen-Beschreibungs-Ersteller 3300, der beispielsweise dem Schriftzeichen-Beschreibungs-Ersteller 2830 gemäß Fig. 6 oder dem Schriftzeichen-Beschreibungs-Ersteller 2930 gemäß Fig. 7 entspricht, ist ausgelegt, um eine Information 3322 über identifizierte Schriftelemente, also beispielsweise über identifizierte Kreisbögen oder über identifizierte Ellipsenbögen oder über identifizierte gerade Strecken, zu empfangen. Die Information 3322 kann dabei beispielsweise der Information 2822 oder der Information 2922 entsprechen. Allerdings kann bei einem alternativen Ausführungsbeispiel die Information 3322 auch basierend auf der Information 2928 über Schriftlinien und basierend auf der Information 2922 über die identifizierten Schriftelemente gebildet werden, und somit die Position der identifizierten Schriftelemente relativ zu den Schriftlinien beschreiben. Gemäß einem Ausführungsbeispiel der vorliegenden Erfindung ist es dabei lediglich von Bedeutung, dass die Informationen 3322 verschiedene Schriftelemente in einer (bestimmten, durch die vorangehende Verarbeitung festgelegten) Reihenfolge durch Parameter beschreibt. Der Schriftzeichen-Beschreibungs-Ersteller 3330 umfasst einen optionalen Schriftelement-Auswähler 3340, der ausgelegt ist, um aus der durch die Information 3322 beschriebenen Gesamtheit von Schriftelementen ein echte Teilmenge von ausgewählten Schriftelementen auszuwählen. Die Anzahl der auszuwählenden Schriftelemente kann dabei beispielsweise von Außen vorgegeben sein. Ferner kann die Auswahl beispielsweise zufällig erfolgen. Alternativ dazu kann aber auch vorgegeben sein, dass der Schriftelement-Auswähler 3340 die Teilmenge der ausgewählten Schriftelemente so wählt, dass die Teilmenge der ausgewählten Schriftelemente beispielsweise eine erste vorgegebene Anzahl an Bögen und ferner eine zweite vorgegebene Anzahl an geraden Strecken beschreibt. Die Auswahl kann also zufällig oder entsprechend einer vorgegebenen Regel erfolgen.

Ein Schriftelement-Kombinations-Ersteller 3350 ist ausgelegt, um eine Beschreibung der durch den Schriftelement-Auswähler 3340 ausgewählten Teilmenge 3342 von Schriftzeichen zu empfangen. Alternativ dazu kann der Schriftelement-Kombinations-Ersteller 3350 auch ausgelegt sein, um beispielsweise die Informationen 3322 zu empfangen, wenn beispielsweise der Schriftelement-Auswähler 3340 entfällt.

Der Schriftelement-Kombinations-Ersteller 3350 ist ausgelegt, um verschiedene Kombinationen von durch die Information 3342 bzw. die Information 3322 beschriebenen Schriftelementen zu erstellen und als Information 3352 auszugeben. Die Information 3352 entspricht dabei beispielsweise der Schriftzeichenbeschreibung 2832 oder der Schriftzeichenbeschreibung 2932, und wird beispielsweise dem Datenbank-Vergleicher 2840, 2950 zugeführt.

Unter verschiedenen Kombinationen von Schriftelementen wird hierbei eine verschiedene Anordnung der Schriftelemente verstanden. Beschreibt beispielsweise die Information 3322 drei Bögen und eine gerade Strecke mit zugehörigen Lageparametern, so kann beispielsweise der Schriftelement-Kombinations-Ersteller 3350 verschiedene Kombinationen erstellen.

Eine erste Kombination beschreibt beispielsweise die Schriftelemente in der Reihenfolge Bogen 1, Bogen 2, Bogen 3, gerade Strecke 1. Eine zweite Kombination beschreibt beispielsweise die durch die Informationen 3322 beschriebenen Schriftelemente in der davon verschiedenen Reihenfolge: Bogen 1, Bogen 3, Bogen 2, gerade Strecke 1. Eine dritte durch den Schriftelement-Kombinations-Ersteller 3350 erzeugte Kombination beschreibt beispielsweise die Schriftelemente, die durch die Informationen 3122 beschrieben werden, in einer weiteren Reihenfolge bzw. Anordnung: Bogen 1, gerade Strecken 1, Bogen 2, Bogen 3.

In anderen Worten, der Schriftelement-Kombinations-Ersteller 3350 ist ausgelegt, um basierend auf der Information 3322 verschiedene geordnete Sätze von Schriftelementen zu bilden, in denen die Schriftelemente in unterschiedlicher Reihenfolge angeordnet sind. In welcher Reihenfolge die Schriftelemente geordnet sind kann beispielsweise durch in dem Schriftelement-Kombinations-Ersteller 3350 enthaltene Regeln festgelegt werden. Alternativ dazu kann der Schriftelement-Kombinations-Ersteller 3350 auch ausgelegt sein, um alle möglichen Reihenfolgen zu verwenden.

Somit ist der Schriftelement-Kombinations-Ersteller 3350 insgesamt ausgelegt, um basierend auf einem einzigen Satz von Schriftelementen mehrere, verschiedenartig geordnete Sätze von Schriftelementen, die durch zugehörige Parameter beschrieben werden, zu bilden. Somit erfolgt der anschließende, durch den Datenbank-Vergleicher 2840, 2940 vorgenommene Datenbankvergleich unabhängig von der Reihenfolge in der die einzelnen Schriftelemente in der Information 3322 beschrieben werden. Dementsprechend ist die Identifizierung eines Schriftzeichens unabhängig von der Reihenfolge der Beschreibung der Schriftelemente in der Information 3322, wodurch eine besonders zuverlässige Schrifterkennung erzielt wird.

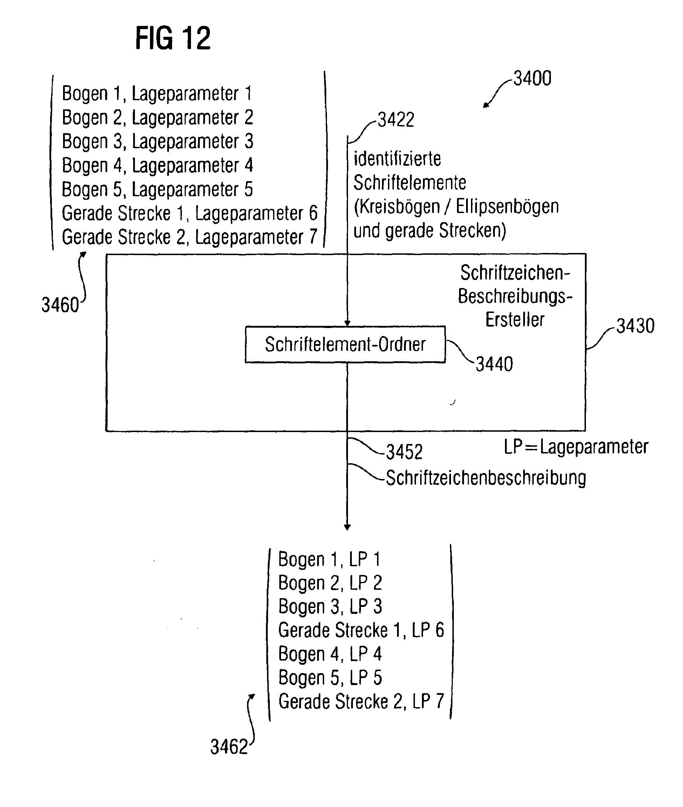

Fig. 12 zeigt ein Blockschaltbild eines erfindungsgemäßen Schriftzeichen-Beschreibungs-Erstellers, gemäß einem Ausführungsbeispiel der vorliegenden Erfindung. Der Schriftzeichen-Beschreibungs-Ersteller gemäß der Fig. 12 ist in seiner Gesamtheit mit 3400 bezeichnet. Diesbezüglich sei darauf hingewiesen, dass der Schriftzeichen-Beschreibungs-Ersteller 3400 eine Information 3422 über identifizierte Schriftelemente empfängt, die im Wesentlichen der Information 3322 entspricht. Bei dem in der Fig. 12 gezeigten Ausführungsbeispiel umfasst die Information 3422 eine Information über beispielsweise fünf Bögen und zwei geraden Strecken, denen jeweilige Lageparameter zugeordnet sind.

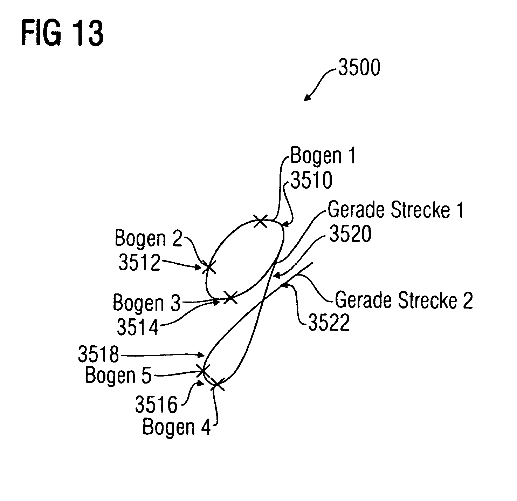

Ein Beispiel für die Information 3422 wird im Folgenden noch anhand der Fig. 13 ausführlicher beschrieben.

Der Schriftzeichen-Beschreibungs-Ersteller 3430, der beispielsweise an die Stelle des Schriftzeichen-Beschreibungs-Ersteller 2830 oder an die Stelle des Schriftzeichen-Beschreibungs-Erstellers 2930 treten kann, oder der alternativ dazu auch ein Teil der Schriftzeichen-Beschreibungs-Ersteller 2830, 2930 sein kann, umfasst einen Schriftelement-Ordner 3440. Der Schriftelement-Ordner 3440 ist beispielsweise ausgelegt, um basierend auf der Information 3422 eine Information 3452 zu erzeugen, in der die Schriftelemente so geordnet sind, dass sie in der durch die Information 3452 wiedergegebenen Reihenfolge eine durchgehende Schriftlinie beschreiben. In anderen Worten, der Schriftelement-Ordner 3440 ist ausgelegt, um zu einem bestimmten Schriftelement ein darauf folgendes Schriftelement zu identifizieren, so dass das bestimmte Schriftelement und das darauf folgende Schriftelement eine durchgehende Schriftlinie bilden. So kann beispielsweise der Schriftelementordner 3440 ausgelegt sein, um einen Abstand zwischen Endpunkten mehrerer Schriftelemente zu identifizieren, und um zwei Schriftelemente als aufeinander folgende Schriftelemente zu erkennen, während ein Abstand zwischen einem Endpunkt eines ersten Schriftelements und einem Anfangspunkt eines zweiten Schriftelements kleiner als eine vorgegebene Schranke ist. Somit liefert der Schriftelement-Ordner 3440 insgesamt eine geordnete Information 3452, die beispielsweise als Eingangs-Information für die Datenbank-Vergleicher 2840, 2940 dienen kann.

Im Folgenden wird anhand der Fig. 13 ein konkretes Beispiel gezeigt, anhand dessen die Funktionsweise des Schriftelement-Ordners 2440 besser verständlich wird. Die Fig. 13 zeigt eine graphische Darstellung eines Schriftzeichens "g" sowie der Schriftelemente, aus denen das Schriftzeichen "g" besteht. Die graphische Darstellung gemäß der Fig. 13 ist in ihrer Gesamtheit mit 3500 bezeichnet. Die graphische Darstellung 3500 zeigt das Schriftzeichen "g". Das Schriftzeichen "g" umfasst einen ersten Bogen 3510, einen zweiten Bogen 3512, einen dritten Bogen 3514, einen vierten Bogen 3516 sowie einen fünften Bogen 3518. Das Schriftzeichen "g" umfasst ferner eine erste gerade Strecke 3520 sowie eine zweite gerade Strecke 3522. Ferner ist ersichtlich, dass bei einem Schreiben des Buchstabens "g" die einzelnen Schriftelemente in der folgenden Reihenfolge durchlaufen werden: Bogen 1, Bogen 2, Bogen 3, gerade Strecke 1, Bogen 4, Bogen 5, gerade Strecke 2. Daher ist beispielsweise ein Endpunkt des Schriftelements "Bogen 1" benachbart bei einem Anfangspunkt des Schriftelements "Bogen 2". Ferner ist ein Endpunkt des Schriftelements "Bogen 2" benachbart bei einem Anfangspunkt des Schriftelements "Bogen 3". Entsprechende Beziehungen gelten auch für die Anfangspunkte und Endpunkte der übrigen Schriftelemente. Hingegen ist ein Endpunkt des Schriftelements "Bogen 3" weit entfernt von einem Anfangspunkt des Schriftelements "Bogen 4". Aufgrund der geschilderten Verhältnisse erstellt beispielsweise der Schriftelement-Ordner 3410 basierend auf einer Beschreibung, die beispielsweise zunächst die Bögen und erst dann die geraden Strecken beschreibt, durch Umordnen eine Beschreibung, die Schriftelemente in einer geordneten Reihenfolge beschreibt, so dass durch die entsprechende Reihenfolge der Schriftelemente eine durchgehende Schriftlinie beschrieben wird.

Eine beispielhafte ungeordnete Beschreibung ist in der Fig. 12 mit 3460 bezeichnet, während eine entsprechend einem Verlauf einer Schriftlinie geordnete Darstellung mit 3462 bezeichnet ist.

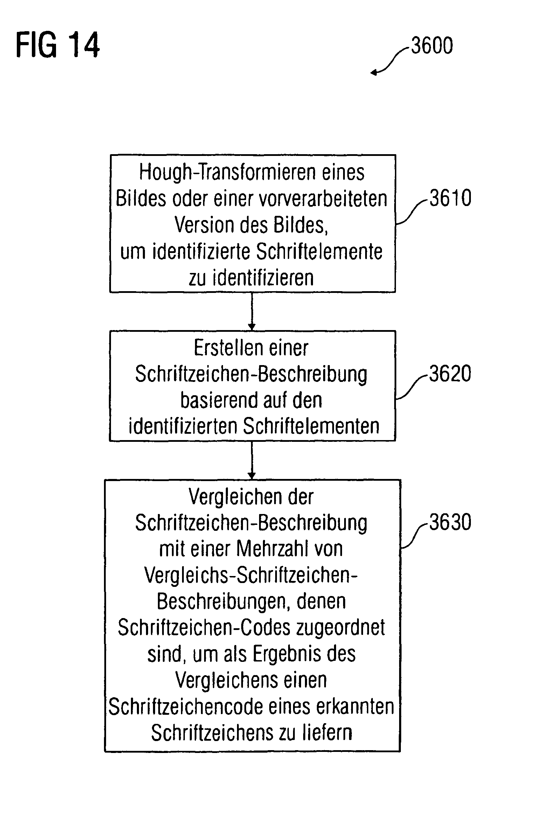

Im Folgenden wird noch ein erfindungsgemäßes Verfahren zur Erkennung eines Schriftzeichens in einem Bild beschrieben. Zu diesem Zweck zeigt die Fig. 14 ein Flussdiagramm eines erfindungsgemäßen Verfahrens zur Erkennung eines Schriftzeichens in einem Bild. Das Verfahren gemäß der Fig. 14 ist in seiner Gesamtheit mit 3600 bezeichnet.

Das Verfahren 3600 umfasst in einem Schritt 3610 ein Hough-Transformieren eines Bildes oder einer vorverarbeiteten Version des Bildes, um identifizierte Schriftelemente zu identifizieren. Das Verfahren 3600 umfasst ferner in einem zweiten Schritt 3620 ein Erstellen einer Schriftzeichen-Beschreibung basierend auf den identifizierten Schriftelementen. Ferner umfasst das Verfahren 3600 in einem dritten Schritt 3630 ein Vergleichen der Schriftzeichen-Beschreibung mit einer Mehrzahl von Vergleichs-Schriftzeichen-Beschreibungen, denen Schriftzeichen-Codes zugeordnet sind, um als Ergebnis der Vergleichens einen Schriftzeichencode eines erkannten Schriftzeichens zu liefern.

Ferner sei darauf hingewiesen, dass das Verfahren 3600 um all diejenigen Schritt ergänzt werden kann, die im Hinblick auf das erfindungsgemäße Konzept (also beispielsweise im Hinblick auf die erfindungsgemäßen Vorrichtungen) beschrieben wurden.

Die erfindungsgemäße Vorrichtung oder das erfindungsgemäße Verfahren kann in Hardware oder in Software implementiert werden. Die Implementation kann auf einem digitalen Speichermedium, beispielsweise einer Diskette, einer CD, einer DVD, einem ROM, einem PROM, einem EPROM, einem EEPROM, oder einem FLASH-Speicher, mit elektronisch auslesbaren Steuersignalen erfolgen, die so mit einem programmierbaren Computersystem zusammenwirken können, dass das entsprechende Verfahren ausgeführt wird. Allgemein besteht die vorliegende Erfindung somit auch in einem Computer-Programm-Produkt mit auf einem maschinenlesbaren Träger gespeicherten Programmcode zur Durchführung des erfindungsgemäßen Verfahrens, wenn das Computerprogramm-Produkt auf einem Rechner abläuft. In anderen Worten ausgedrückt, die Erfindung kann als ein Computer-Programm mit einem Programmcode zur Durchführung des erfindungsgemäßen Verfahrens realisiert werden, wenn das Computer-Programm auf einem Computer abläuft.

Zusammenfassend ist somit festzuhalten, dass die vorliegende Erfindung ein besonders effizientes Verfahren zur Schriftzeichenerkennung beschreibt.

Diesbezüglich ist festzustellen, dass ein Schilderlesen von Ortsschildern, Ortsnamen oder Geschwindigkeitsbegrenzungen ein wichtiger Aspekt der Schrifterkennung ist. So sind beispielsweise viele Buchstaben und Zahlen (bei manchen Schriftarten sogar alle Buchstaben und Zahlen) aus vertikalen Linien, horizontalen Linien, konkaven Linien und konvexen Linien zusammengesetzt. Zumindest aber umfassen die Buchstaben und Zahlen bei einer Vielzahl von Schriftarten bzw. Schrifttypen vertikale Linien, horizontale Linien, konkave Linien und konvexe Linien.

Beispielsweise hat ein Buchstabe "S" vier Extrema, ebenso wie ein Buchstabe "O" bzw. "o". Der Buchstabe "S" unterscheidet sich aber von dem Buchstaben "O" im Hinblick auf eine Krümmung und auf einen relativen Abstand der Extrema zueinander.

Basierend auf der genannten Erkenntnis kann somit ein Schriftzeichenerkennungssystem entwickelt werden. Für eine Erkennung von diagonalen Strichen in den Buchstaben "W", "Z", "A", "K", "Y", "X", "V", "N" bzw. "M" kann bevorzugt ein Hubel-Wiesel-Balkendetektor eingesetzt werden, wie er beispielsweise in der Veröffentlichung "A neural net for 2D-slope and sinusoidal shape detection" von A. Brückmann, F. Klevenz und A. Wünsche beschrieben ist (veröffentlicht in: International Scientific Journal of Computing, Bd. 3, Ausgabe 1, Ukraine, 2004, Seiten 21 - 25). Sowohl die Erkennung von Bögen (beispielsweise von Kreisbögen oder von Ellipsenbögen) als auch die Erkennung von geraden Strecken (z. B. von diagonalen Strichen) kann bei einem Ausführungsbeispiel der vorliegenden Erfindung auf einer gleichen Architektur "Dual Hough IP Core" ablaufen, nur mit unterschiedlicher Programmierung. In anderen Worten, es kann ein umkonfigurierbarer Hough-Transformator eingesetzt werden, der beispielsweise in einem ersten Konfigurationszustand in der Lage ist, Bögen zu erkennen, und der beispielsweise in einem zweiten Konfigurationszustand in der Lage ist, Geraden zu erkennen.

Eine Position von gefundenen Extrema wird bei einem Ausführungsbeispiel der vorliegenden Erfindung einem Liniensystem, beispielsweise wie in einem Erstklässlerschülerheft, zugeordnet.

So werden bei einem Ausführungsbeispiel der vorliegenden Erfindung eine Grundlinie, eine Mittellinie, beispielsweise bei Kleinbuchstaben "d", "c", und eine Oberlinie, beispielsweise bei Großbuchstaben "C", "K" bestimmt.

Zu einer Zeichenerkennung gehören bei einem Ausführungsbeispiel der vorliegenden Erfindung nicht nur die Extrema, sondern jedes Extrema hat eine Information "konvex/konkav oben/unten", "konvex/konkav links/rechts". In anderen Worten, bei einem bevorzugten Ausführungsbeispiel wird beispielsweise auch eine Information über eine Krümmung von Bögen ermittelt und später ausgewertet.

Bei einer Softwaresimulation (bzw. allgemein bei der Durchführung einer Hough-Transformation) kann beispielsweise ein Bereich zwischen einem maximalen Krümmungsradius und einem minimalen Krümmungsradius eingestellt werden, wobei beispielsweise nur Bögen mit einem Krümmungsradius zwischen dem maximalen Krümmungsradius und dem minimalen Krümmungsradius durch den Hough-Transformator erkannt werden.

Ferner kann in der Softwaresimulation bzw. bei der Durchführung der Hough-Transformation mit Hilfe eines Parameters "DelayLines not sum" festgelegt werden, welche Verzögerungsleitungen in dem Hough-Transformator bzw. in dem Hough-Feld nicht zu einer Summenbildung beitragen. Damit kann beispielsweise fein eingestellt werden, dass Linien um den Extremwert nicht zu einer Summenbildung beitragen, da andernfalls zu oft gerade Linien gezählt bzw. ermittelt würden.

In anderen Worten, es kann in dem Hough-Transformator erreicht werden, dass ein Anteil einer Linie, der in der Nähe eines Extrempunkts der gekrümmten Linie gelegen ist, nicht zu einem Ergebnis der Hough-Transformation beiträgt.

Somit entsteht bei einem Ausführungsbeispiel der vorliegenden Erfindung zu einer gebogenen Linie in dem Bild (beispielsweise zu einer kreisförmig gebogenen Linie oder zu einer ellipsenförmig gebogenen Linie) ein Merkmalsvektor der Form (x, y Position des Extremas; Krümmungsradius in einem Wertbereich negativer Max_Krümmungsradius, positiver Max_Krümmungsradius). In anderen Worten, ein Merkmalsvektor zu einem Bogen in dem Bild beschreibt die Position eines Extrempunkts des Bogen sowie einen Krümmungsradius, wobei der Krümmungsradius betragsmäßig kleiner als ein maximaler Krümmungsradius ist.

Ferner existieren Buchstaben-Einzelsegmentierungsalgorithmen. Diesbezüglich sei beispielsweise auf Arbeiten von K. H. Noffz und R. Lay an der Ruprecht-Karl-Universität Heidelberg, oder von T. Roska an der Pázmány P. Catholic University Budapest verwiesen.

Als Beispiel sei hier darauf hingewiesen, dass ein Buchstabe "c" drei Extrema umfasst, eines auf der Mittellinien, eines auf der Grundlinie und eines dazwischen. In diesem Fall zählt weiter eine relative x-Lage der Extrema zueinander.

Bei einem bevorzugten Ausführungsbeispiel wird nach einem klassischen Variationsverfahren gemäß $\min (X - X_i)^2$ klassifiziert. Alternativ oder zusätzlich wird ferner nach einem Etikettierungs-Verfahren von V. Ferrari klassifiziert. Für Details diesbezüglich sei auf die Veröffentlichung "Object detection by contour segment networks" von V. Ferrari und anderen verwiesen (veröffentlicht: European Conference von Computer vision (ECCV), Graz, Mai 2006).

Für eine doppelte Kreuz-Überprüfung (double cross check) bzw. zumindest für eine Überprüfung der Schriftzeichenerkennung bietet sich bei einem Ausführungsbeispiel der vorliegenden Erfindung die Verwendung einer Eulerschen Konnektivitätszahl an. Die Eulersche Konnektivitätszahl ist wie folgt definiert: Konnektivitätszahl = Zahl der Objekte - Zahl der eingeschlossene Löcher.

Ein Objekt ist dabei als eine zusammenhängende Fläche von Bildpunkten bzw. von Pixeln definiert.

Die Konnektivitätszahl berechnet sich in einem Gitter von Bildpunkten (Pixelgrid) aus einer Bestimmung von 2x2-Suchmasken gemäß

$$K = n * \begin{bmatrix} 1 & 0 \\ 0 & 0 \end{bmatrix} - m * \begin{bmatrix} ?1 \\ 10 \end{bmatrix}$$

Für die verschiedenen Buchstaben des lateinischen Alphabets gilt:

für "B": K = -1;

für "Q", "R", "O", "P", "A": K = 0;

für die restlichen Buchstaben bzw. für den Rest: K = 1.

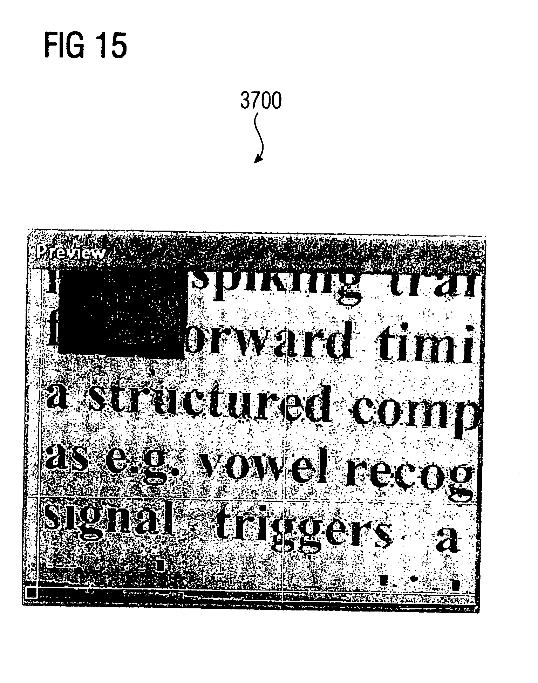

Ferner zeigt Fig. 15 eine Bildschirm-Darstellung einer Hyperfeinstruktur einer Schrifterkennung unter Verwendung eine WinDelay-Programms.

Die graphische Darstellung der Fig. 15 ist in ihrer Gesamtheit mit 3700 bezeichnet. Aus der graphischen Darstellung 3700 ist ersichtlich, dass ein Komma unten links (beispielsweise durch das WinDelay-Programm) markiert wird. Ferner wird alternativ oder zusätzlich ein Buchstabe "G", ein Buchstabe "S" und/oder ein Buchstabe "O" markiert. Sogar eine Buchstabendicke und Serifen sind bestimmbar. Ein Eingangsbild, aus dem die graphische Darstellung 3700 gewonnen wird, ist ein Text, der von einem Bildschirm mit einer Kamera aufgenommen wird (z. B. mit einer Web-Cam-Kamera) .

Im Folgenden wird das Verfahren bei der Schriftzeichenerkennung noch einmal anhand eines Ausführungsbeispiels Schritt für Schritt beschrieben. Das Verfahren läuft in ersten Schritten ähnlich ab wie eine Identifizierung von Ellipsen (auch als "ellipse finder" bzw. Ellipsenfinder bezeichnet). Parameter, wie beispielsweise eine Schwelle, sind in einem Programm "WinDelayLine" einstellbar, das die Funktion einer Hough-Transformation bereitstellt.

Die Schriftzeichenerkennung erfolgt Schritt für Schritt wie folgt:

1) Nehme Bild mit Kamera auf. Alternativ kann das Bild aber auch beispielsweise durch einen Scanner erzeugt oder anderweitig gewonnen werden.

2) Setze Schwellwert; Binarisierung (sollte adaptiv sein nach Histogramm-Verteilung der Grauwerte); bei Video öfter nachjustieren nach x Bildrahmen (Frames), oder am besten optimale Schwelle für jedes Bild; Standardbildverarbeitung.

3) Finde Kontur; Konturfinderalgorithmus ist ein aus morphologischen Operatoren zusammengesetzter Algorithmus, im Prinzip ein Kanten-Detektions-Algorithmus.

4) Hough-Transformation; mit Hilfe einer Hough-Transformation (ausgeführt beispielsweise durch die Software "WinDelayLine") werden Extrema in einem Bild gefunden und (beispielsweise rot) markiert. Jedes Extremum wird mit einer x,y-Position angegeben und hat zusätzlich einen Krümmungswert. Die durch die Hough-Transformation erzeugten Wolken von markierten Extrema (auch als "rote Wolken" bezeichnet) können mehr oder weniger dicht sein, je nach Variation der Parameter Kerngröße (Core-Size), minimaler Krümmungsradius, maximaler Krümmungsradius, bei der Summation ausgelassene Werte (delay not sum). Für Details diesbezüglich wird auf die Diplomarbeit "Echtzeitfähige, auf der Hough-Transformation basierende Methoden der Bildverarbeitung zur Detektion von Ellipsen" von J. Katzmann verwiesen (Diplomarbeit an der Universität Ilmenau, Deutschland, 2005).

5) Klassifikation nach Hamilton'scher Variationsrechnung gemäß min (Integral) $(X\_i - t\_j)^2$. In anderen Worten, es wird beispielsweise eine Abweichung zwischen einem Merkmalsvektor und einem Vergleichs-Merkmals-Vektor minimiert.

Der Algorithmus funktioniert beispielsweise für die Erkennung einer Ellipse wie folgt:

Stelle eine Liste aller möglichen Viererpunktpaare auf; Fitte für jede Viererkombination eine Ellipse, bestimme die Ellipsenparameter und bilde die Abweichung der Messpunkte von der gefitteten Ellipse. Stelle eine nach der Min-Abweichung (bzw. der minimalen Abweichung) absteigende Liste der Viererkombination auf.

Der Schritt 5) ist allerdings als optional anzusehen.

6) Buchstaben und Zahlen bestehen aus Strichen und Bögen. Hier ist ein Hauptsatz der Kurvendiskussion zu beherzigen: Jede Funktion ist durch eine Stützstelle und eine zweite Ableitung approximierbar. Das stimmt in einem digitalen Fall nur mit Einschränkungen: vertikale und horizontale Linien werden gefunden, auch Kreise sind kein Problem, aber bei geraden Linien unterschiedlicher Steigung funktioniert das Verfahren nicht gut. Dabei wird beispielsweise in der Software WinDelayLine bzw. in dem Hough-Transformator ein Geraden-Hough-Finder eingesetzt, wie er beispielsweise in der Veröffentlichung "A neural net for 2D slope and sinusoidal shape detection" von A. Brückmann, F. Klefenz, und A. Wünsche beschrieben ist (veröffentlicht in: International scientific journal of computing 3 (1), Seiten 21 - 26, 2004).

Damit wird eine vollständige rechnerische Neurowissenschafts-Hubel-Wiesel-Lösung einer Orientierungsselektivität erreicht.

7. Bilde einen Sack voll Schablonen (Templates) in einer Konturenbeschreibungssprache. Beispielsweise kann eine Konturenbeschreibungssprache verwendet werden, wie sie in der Veröffentlichung "Object detection by contour segment networks" von V. Ferrari und anderen beschrieben ist (veröffentlicht: European conference on computer vision (ECDB), Graz, Mai 2006).

Eine beispielhafte Beschreibung sei hier anhand des Buchstabens "p" gegeben: gerader Strich nach unten; drei Extrema mit Krümmung nach unten, Krümmung nach links sich hinbiegend, Wachstumshörnchen nach oben sich hinbiegend.

Bilde alle Vier-Punkt-Kombinationspaare aus einem geraden Element und drei Bogenelementen, unter der Zwangsbedingung, dass eine Vorgabe für eine Lage (z. B. Lage unterhalb eines Mittelstrichs oder oberhalb eines Mittelstrichs) einzuhalten ist in Toleranzbereichen, und dass der "p"-Strich links von den drei Kreisbögen liegen muss. Erstelle für alle Buchstaben und Zahlen (zumindest aber für eine Mehrzahl von Buchstaben oder Zahlen) ihre charakteristische Schablone (bzw. ihr charakteristisches Template) und vergleiche bzw. matche alle Kombinationspaare mit dem Template. Ein Minimum ist das Ergebnis.

In anderen Worten, es werden vier Punkte bestimmt, die Extrema von Bögen oder charakteristische Punkte von geraden Strecken (z. B. Anfangspunkte, Mittelpunkte oder Endpunkte) darstellen, wobei bestimmte vorgegebene Lage-Relationen einzuhalten sind (z. B. Punkte oberhalb oder unterhalb einer Mittellinie, oder Relation der vorliegenden Krümmungen).

Ferner kann alternativ oder zusätzlich ein Verfahren angewendet werden, wie es in der Veröffentlichung "Object detection by contour segment networks" von V. Ferrari u. a. beschrieben ist. Das entsprechende Verfahren kann wie folgt zusammengefasst werden: falls ein Objekt zusammengesetzt ist aus Linien und Kreisbögen, beschreibe, wie das Objekt zusammengesetzt ist. Die Beschreibung kann beispielsweise wie folgt aussehen: Ecke; Linie hoch, y Zentimeter; Linie runter, x Zentimeter; Krümmungsbogen mit Krümmungsradius r. Diese Schablone bzw. dieses Template wird daraufhin in verschiedenen Richtungen ("kreuz und quer") über markierte Punkte (in dem Bild identifizierte Extrema; auch als "rote Punkte" bezeichnet) geschoben. Bilde "Min (SchablonenVektor - rote-Punkte-Vektor)" In anderen Worten, bestimme eine Abweichung zwischen einem Schablonenvektor (Templatevektor) und einem Vektor, der Merkmale bzw. der eine Lage der identifizierten Extrema beschreibt ("rote-Punkte-Vektor"). Dort, wo eine bestmögliche Übereinstimmung auftritt, wird angenommen, dass ein Objekt vorliegt.

Im Folgenden wird noch erläutert, wie eine Eulersche Konnektivitätszahl bestimmt werden kann. Diesbezüglich wird darauf hingewiesen, dass Leonard Euler, der früher noch auf einem 10-Franken-Schein abgebildet war, der Erste war, der die Konnektivitätszahl bestimmt hat. Seine Schriften sind in Latein abgefasst, und seine Formel lautet:

Die Konnektivitätszahl K ist gleich einer Zahl an Objekten minus einer Zahl von Löchern.

In einer für eine Anwendung in einem Computersystem verwendbaren Übersetzung dieses Sachverhalts in einem Gitter von Bildpunkten (Pixelgrid) bedeutet dies:

ein Objekt ist als eine zusammenhängende Fläche von Bildpunkten (auch als Pixelfläche bezeichnet) definiert. Beispielsweise kann ein Objekt als eine zusammenhängende Pixelfläche von schwarzen Pixeln definiert sein. Die zusammenhängende Fläche von Bildpunkten (Pixelfläche) kann auch Löcher bzw. Einschlüsse, beispielsweise in Form von weißen Bildpunkten bzw. Pixeln, enthalten. Ein Loch ist dabei als ein Einschluss in einer Umrandung von schwarzen Pixeln definiert. In anderen Worten, ein Loch ist beispielsweise ein Bildpunkt einer erste Farbe (ein weißes Pixel), der von Bildpunkten einer anderen Farbe (z. B. von schwarzen Pixeln) umgeben ist.

Im Folgenden wird beschrieben, wie aufgrund von lokalen 2x2-Operatoren die Konnektivitätszahl bestimmt werden kann. Dazu wird gezählt, wie oft ein 2x2-Muster

$$\begin{pmatrix} 1 & 0 \\ 0 & 0 \end{pmatrix}$$

in einem Pixelbild vorhanden ist.

Ferner wird gezählt, wie oft ein 2x2-Muster

$$\begin{pmatrix} ? & 1 \\ 1 & 0 \end{pmatrix}$$

in dem Bild vorliegt.

Dann werden die ermittelten Zahlen voneinander subtrahiert, und diese Zahl (beispielsweise das Ergebnis) gibt die Konnektivitätszahl an.

Auf Buchstaben angewendet heißt dies, dass ein großes "B" die Konnektivitätszahl K=-1 hat, dass die Buchstaben "a", "b" "d" "e", "q" "o" "p" und "R" die Konnektivitätszahl K = 0 aufweisen, und dass die restlichen Buchstaben (beispielsweise des lateinischen Alphabets) die Konnektivitätszahl 1 aufweisen.

Alternativ dazu kann festgestellt werden, dass bei einer anderen Schriftdarstellung die Buchstaben "A", "D", "O", "P", "Q", ",a", "b", "d", "e", "g", "o", "p" und "q" die Konnektivitätszahl 0 haben.

Die Eulersche Konnektivitätszahl kann also als eine doppelte Kreuz-Überprüfung (double cross check) dienen, ob ein richtiger Buchstabe gefunden wurde.

Zusammenfassend lässt sich somit festhalten, dass die vorliegende Erfindung ein besonders vorteilhaftes Konzept zur Schriftzeichenerkennung schafft.

Im Folgenden wird eine erfindungsgemäße Vorrichtung zum Identifizieren eines Verkehrszeichens in einem Bild, gemäß einem Ausführungsbeispiel der vorliegenden Erfindung beschrieben. Es sei darauf hingewiesen, dass die Vorrichtung ausgelegt ist, um ein Bild zu empfangen. Ferner umfasst die Vorrichtung einen optionalen Kantenerkenner. Ebenso umfasst die Vorrichtung einen Hough-Transformator. Der Kantenerkenner und der Hough-Transformator entsprechen von ihrer Funktion her den anhand der Fig. 10 beschriebenen Einrichtungen.

Die Vorrichtung umfasst ferner zumindest einen Formenerkenner oder einen Ellipsenerkenner, bevorzugt aber sowohl einen Formenerkenner als auch einen Ellipsenerkenner. Der Formenerkenner entspricht von seiner Funktion her dem hierin beschriebenen Formenerkenner, und der Ellipsenerkenner entspricht von seiner Funktion her dem hierin beschriebenen Ellipsenerkenner 1660.

Ferner umfasst die Vorrichtung einen Musteridentifizierer. Der Musteridentifizierer bzw. Muster-Erkenner ist ausgelegt, um von dem Hough-Transformator eine Information über Kreisbögen oder Ellipsenbögen in dem Bild zu empfangen, oder um von dem Hough-Transformator eine Information über durch das Bild verlaufende gerade Strecken zu empfangen. Daher kann der Hough-Transformator bei der Vorrichtung beispielsweise ausgelegt sein, um nur eine Information über Kreisbögen oder Ellipsenbögen in dem Bild bereitzustellen, oder um nur eine Information über gerade Strecken in dem Bild bereitzustellen. Alternativ dazu kann der Hough-Transformator aber auch in der Lage sein, eine Information sowohl über Kreisbögen oder Ellipsenbögen in dem Bild als auch über gerade Strecken in,dem Bild bereitzustellen. Eine Entscheidung, welche Informationen der Hough-Transformator bereitstellt, hängt unter anderem davon ab, welche Informationen durch den Formenerkenner und/oder den Ellipsenerkenner sowie durch den Musteridentifizierer benötigt wird.

Der Musteridentifizierer umfasst einen Bildausschnitt-Auswähler, der ausgelegt ist, um anhand der durch den Formerkenner gelieferten Information über eine in dem Bild erkannte (allgemeine) Form und/oder basierend auf der durch den Ellipsenerkenner gelieferten Information über eine in dem Bild erkannte elliptische Form einen Bildausschnitt des Bildes auszuwählen. Die Auswahl eines Bildausschnitts kann beispielsweise so erfolgen, wie dies anhand der Fig. 15 beschrieben wurde.

Ferner kann der Bildausschnitt-Auswähler optional ferner ausgelegt sein, um eine Abbildung des Bildausschnitts auszuführen, wie dies anhand der Fig. 15 beschrieben wurde. Ferner kann der Bildausschnitt-Auswähler alternativ ausgelegt sein, um den Bildausschnitt unter Verwendung einer Maskierung zu ermitteln. Der Musteridentifizierer umfasst ferner einen Schrift-Erkenner, der ausgelegt ist, um den Bildausschnitt bzw. eine Information über den durch den Bildausschnitt-Auswähler ausgewählten Bildausschnitt zu empfangen. Ferner ist der Schrift-Erkenner ausgelegt, um die durch den Hough-Transformator gelieferte Information über Kreisbögen und/oder Ellipsenbögen und/oder gerade Strecken in dem Bild zu empfangen. Ferner ist der Schrift-Erkenner ausgelegt, um diejenigen Kreisbögen und/oder Ellipsenbögen und/oder geraden Strecken zu bestimmen, die innerhalb des durch den Bildausschnitt-Auswähler ausgewählten Bildausschnitts liegen. Somit erhält der Schrift-Erkenner eine Information über ausgewählte Kreisbögen und/oder Ellipsenbögen und/oder gerade Strecken in dem Bild, die innerhalb des Bildausschnitts liegen. Die durch den Schrift-Erkenner erhaltene Information über ausgewählte Kreisbögen und/oder gerade Strecken in dem Bild beschreibt damit Schriftelemente. Somit kann eine Schrifterkennung erfolgen, wie dies anhand der Fig. 6 - 36 erläutert wurde.

Ferner sei darauf hingewiesen, dass der Musteridentifizierer auch anders aufgebaut sein kann. Dabei ist lediglich entscheidend, dass der Schrift-Erkenner insgesamt eine Information über ausgewählte Kreisbögen und/oder Ellipsenbögen und/oder gerade Strecken in dem Bild erhält, die innerhalb einer durch den Formenerkenner oder durch den Ellipsenerkenner erkannten allgemeinen (z.B. dreieckigen oder rechteckigen oder quadratischen) oder elliptischen Form liegen. Die Information über die ausgewählten Kreisbögen und/oder Ellipsenbögen und/oder geraden Strecken in dem Bild tritt somit an die Stelle der Informationen über identifizierte Schriftelemente (vergleiche Fig. 6). Erkennt der Schrift-Erkenner ein Schriftzeichen, so liefert der Schrift-Erkenner beispielsweise einen Schriftzeichencode eines erkannten Schriftzeichens, wie dies beispielsweise anhand der Fig. 6 beschrieben wurde. Der durch den Schrift-Erkenner gelieferte Schriftzeichencode kann beispielsweise eine Information darüber tragen, welches Verkehrszeichen erkannt wurde. In anderen Worten, der erkannte Schriftzeichencode kann Teil einer Information sein, die ein identifiziertes Verkehrszeichen beschreibt. Umfasst ein Verkehrszeichen mehr als einen Buchstaben bzw. mehr als ein Schriftzeichen, so kann der Schrift-Erkenner optional auch eine Information über eine Schrift in einem Verkehrszeichen liefern, die mehr als einen Buchstaben umfasst. Die entsprechende Schrift kann dann, beispielsweise durch Vergleichen mit einer Datenbank, herangezogen werden, um die durch das Verkehrszeichen wiedergegebene Information bzw. das Verkehrszeichen selbst zu identifizieren.

Zusammenfassend kann somit festgehalten werden, dass der Schrift-Erkenner ausgelegt ist, um basierend auf Informationen über innerhalb einer durch den Formenerkenner oder den Ellipsenerkenner erkannten Form liegende Schriftelemente einen Schriftzeichencode zumindest eines erkannten Schriftzeichens zu liefern, wobei der Schriftzeichencode bevorzugt verwendet Wird, um eine Information über ein identifiziertes Verkehrszeichen zu bestimmen.

Somit kann festgehalten werden, dass die durch den Hough-Transformator gelieferte Information bei der Erkennung eines Verkehrszeichens mehrfach wiederverwendet werden kann. Die Information über in dem Bild identifizierte Kreisbögen und/oder Ellipsenbögen und/oder gerade Strecken kann einerseits dazu herangezogen werden, um mit Hilfe eines Formen-Erkenners oder mit Hilfe eines Ellipsen-Erkenners allgemeine oder elliptische Formen in dem Bild zu erkennen. Ferner kann die durch den Hough-Transformator gelieferte Information anschließend verwendet werden, um innerhalb eines durch die erkannten Formen beschriebenen Bildausschnitts ein oder mehrere Schriftzeichen zu identifizieren, um so eine besonders zuverlässige Information über ein identifiziertes Verkehrszeichen zu erhalten.

Somit schafft die vorliegende Erfindung bei einem Ausführungsbeispiel ein besonders vorteilhaftes Konzept zur Verkehrszeichenerkennung basierend auf der Durchführung der Hough-Transformation, wobei die durch den Hough-Transformator gelieferte Information je nach Ausführungsbeispiel sogar mehrmals wieder verwendet werden kann.

Nachfolgend wird eine Einrichtung zur Durchführung einer parallelen Hough-Transformation bzw. zur Bestimmung von Extrempunkten von gebogenen Linien beschrieben. Eine Erkennung von verschiedenen geraden Strecken unter Verwendung einer parallelen Hough-Transformation ist im übrigen in der Veröffentlichung "A neural net for 2D-slope and sinusoidal shape detection" von A. Brückmann, F. Klevenz und A. Wünsche beschrieben ist (veröffentlicht in: International Scientific Journal of Computing, Bd. 3, Ausgabe 1, Ukraine, 2004, Seiten 21 - 25) beschrieben.

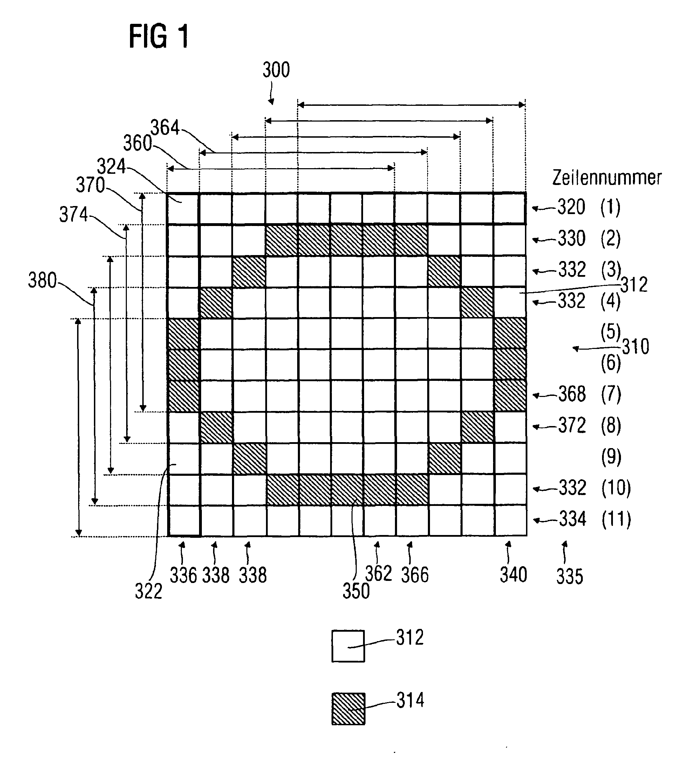

Fig. 1 zeigt eine graphische Darstellung eines beispielhaften Rasterbildes einer Ellipse. Die graphische Darstellung der Fig. 1 ist in ihrer Gesamtheit mit 300 bezeichnet. Gezeigt ist hierbei ein Rasterbild 310 mit einer Mehrzahl von Rasterpunkten 312. Ein Rasterpunkt kann hierbei inaktiv oder weiß sein, wie bei dem Rasterpunkt 312 gezeigt. Ein Rasterpunkt kann ferner aktiv oder schwarz sein, wie dies beispielsweise bei dem Rasterpunkt 314 durch Schraffur angedeutet ist. Es wird ferner darauf hingewiesen, dass das Rasterbild 310 eine Mehrzahl von Rasterzeilen sowie eine Mehrzahl von Rasterspalten umfasst. Eine Rasterzeile fasst hierbei eine Mehrzahl von Rasterpunkten zusammen, wie dies beispielsweise durch den dick umrandeten Bereich 320, der eine Rasterzeile beschreibt, dargestellt ist. Eine Rasterspalte beschreibt ebenso eine Zusammenfassung von mehreren Rasterpunkten. Ein Beispiel für eine Rasterspalte ist durch den dick umrandeten Bereich 322, der eine Rasterspalte darstellt, gezeigt. Rasterzeilen und Rasterspalten sind hierbei bevorzugt orthogonal zueinander. Ferner wird darauf hingewiesen, dass sich Rasterzeilen und Rasterspalten freilich überschneiden können. So weisen beispielsweise die Rasterzeile 320 und die Rasterspalte 322 einen gemeinsamen Bildpunkt auf, der mit 324 bezeichnet ist. Es sei ferner darauf hingewiesen, dass ein Bild oder Bildausschnitt sowohl durch eine Mehrzahl von Rasterzeilen als auch durch eine Mehrzahl von Rasterspalten vollständig beschrieben werden kann, da ja jeder gerasterte Bereich sowohl durch Rasterzeilen als auch durch Rasterspalten beschreibbar ist. Ferner sei darauf hingewiesen, dass das Rasterbild 310 per Definition eine erste Rasterzeile, die Rasterzeile 320, eine zweite Rasterzeile 330, mehrere weitere Rasterzeilen 332, die bevorzugt fortlaufend nummeriert sind, sowie eine letzte Rasterzeile 334 aufweist. Entsprechende Zeilennummern sind mit 335 bezeichnet. In ähnlicher Weise umfasst das Rasterbild 310 eine erste Rasterspalte 322, eine zweite Rasterspalte 336, weitere Rasterspalten 338, die bevorzugt fortlaufend nummeriert sind, sowie eine letzte Rasterspalte 340.

Die graphische Darstellung 300 zeigt ferner eine Ellipse 350, die durch das Rasterbild 310 in Form von aktiven oder schwarzen Rasterpunkten (bzw. Bildpunkten) dargestellt ist, wobei die aktiven Rasterpunkte durch Schraffur gekennzeichnet sind.

Die graphische Darstellung 300 zeigt ferner eine erste Gruppe von Rasterspalten, die mit 360 bezeichnet ist. Die erste Gruppe von Rasterspalten umfasst dabei die erste Rasterspalte 322, die zweite Rasterspalte 336 sowie alle folgenden Rasterspalten bis einschließlich zur siebten Rasterspalte 362. Die erste Gruppe 360 von Rasterspalten beschreibt somit einen Ausschnitt aus dem Rasterbild 310.

Der genannte Ausschnitt aus dem Rasterbild umfasst hierbei weiterhin eine Mehrzahl von Rasterzeilen, die gegenüber den ursprünglichen Rasterzeilen durch die Einschränkung der Anzahl an Spalten verkürzt sind. Auch die verkürzten Rasterzeilen, die durch die Auswahl eines Bildausschnitts entstehen können, werden im Folgenden kurz als Rasterzeilen bezeichnet.

Die zweite Gruppe von Rasterspalten, die mit 364 bezeichnet ist, umfasst ferner die zweite Rasterspalte 336 sowie die folgenden Rasterspalten bis hin zu einer achten Rasterspalte 366. In anderen Worten, jeweils sieben nebeneinander liegende Rasterspalten sind zu einer Gruppe von Rasterspalten, die für eine gemeinsame Verarbeitung vorgesehen sind, zusammengefasst.

Eine ähnliche Gruppierung kann für die Rasterzeilen erfolgen, wobei beispielsweise die erste Rasterzeile 320, die zweite Rasterzeile 330 sowie alle folgenden Rasterzeilen bis hin zur siebten Ratserzeile 368 zu einer ersten Gruppe 370 von Rasterzeilen zusammengefasst sind. In ähnlicher Weise umfasst eine zweite Gruppe von Rasterzeilen die zweite Rasterzeile 330 bis hin zur achten Rasterzeile 372, wobei die zweite Gruppe von Rasterzeilen mit 374 bezeichnet ist.

Hierbei sei freilich darauf hingewiesen, dass eine Gruppe von Rasterzeilen eine beliebige Anzahl von Rasterzeilen umfassen kann, beispielsweise fünf Rasterzeilen, 16 Rasterzeilen, 32 Rasterzeilen oder 64 Rasterzeilen. Es wird hierbei lediglich bevorzugt, dass die Anzahl der Rasterzeilen, die zu einer Gruppe von Rasterzeilen zusammengefasst werden, größer als 2 ist. Analoge Überlegungen gelten auch für eine Gruppe von Rasterspalten.

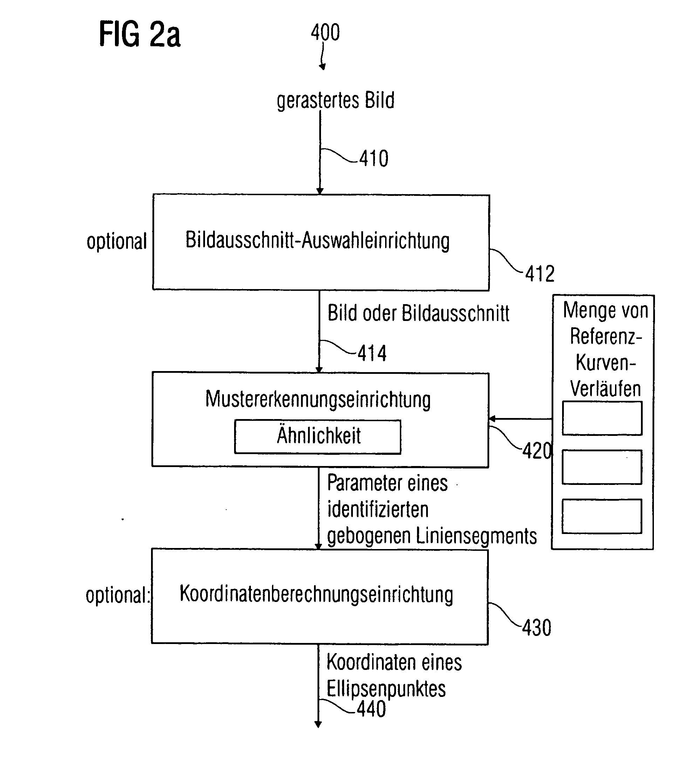

Fig. 2a zeigt ein Blockschaltbild einer erfindungsgemäßen Vorrichtung zum Ermitteln von Koordinaten eines Ellipsenpunktes (z.B. eines Extrempunkts eines Ellipsenbogensegments oder eines Kreibogensegments) in einem graphischen Bild gemäß einem zweiten Ausführungsbeispiel der vorliegenden Erfindung. Die Vorrichtung gemäß der Fig. 2a ist in ihrer Gesamtheit mit 400 bezeichnet. Die Vorrichtung 400 ist besonders gut geeignet, um ein Rasterbild 310, wie es in der Fig. 1 gezeigt ist, zu verarbeiten, wie im Folgenden ausgeführt wird.

Die Vorrichtung 400 ist ausgelegt, um ein gerastertes Bild 410 zu empfangen. Weiterhin ist die Vorrichtung 400 optional ausgelegt, um aus dem gerasterten Bild 410 mit Hilfe einer optionalen Bildausschnitt-Auswahleinrichtung 412 einen Bildausschnitt 414 auszuwählen. Ein ausgewählter Bildausschnitt 414 kann beispielsweise durch eine Mehrzahl von Rasterzeilen und/oder eine Mehrzahl von Rasterspalten definiert sein, beispielsweise durch eine Gruppe von Rasterzeilen oder eine Gruppe von Rasterspalten wie dies mit Bezug auf Fig. 1 beschrieben wurde. Die erfindungsgemäße Vorrichtung 400 umfasst ferner eine Mustererkennungseinrichtung 420, die ausgelegt ist, um das gerasterte Bild oder den gerasterten Bildausschnitt 414 zu empfangen. Ferner ist die Mustererkennungseinrichtung 420 ausgelegt, um festzustellen, ob in dem gerasterten Bild oder Bildausschnitt 414 ein Kurvenverlauf bzw. ein gebogenes Liniensegment aus einer Menge von Referenz-Kurvenverläufen enthalten ist.

Die Kurvenverläufe der Menge von Referenzkurvenverläufen können hierbei für eine Bestimmung der Ähnlichkeit zwischen in dem gerasterten Bild oder Bildausschnitt 414 enthaltenen Kurvenverläufen und den Referenzkurvenverläufen beispielsweise in einem Speicher abgelegt sein. Ebenso ist es allerdings möglich, dass die Struktur der Mustererkennungseinrichtung ausgelegt ist, um zu erkennen, ob in dem gerasterten Bild oder Bildausschnitt 414 ein Kurvenverlauf enthalten ist, der einem Referenz-Kurvenverlauf aus der Menge von Referenzkurvenverläufen hinreichend ähnlich ist. Als Referenz-Kurvenverläufe werden hierbei bevorzugt solche Kurvenverläufe verwendet, die eine Ellipse an dem ersten Ellipsenpunkt, dem zweiten Ellipsenpunkt, dem dritten Ellipsenpunkt oder dem vierten Ellipsenpunkt annähern. Somit ist folglich die Mustererkennungseinrichtung allgemein ausgelegt, um zu erkennen, ob in dem gerasterten Bild oder Bildausschnitt 414 ein Kurvenverlauf enthalten ist, der eine Ellipse an dem ersten Ellipsenpunkt, an dem zweiten Ellipsenpunkt, an dem dritten Ellipsenpunkt oder an dem vierten Ellipsenpunkt annähert.

Die Mustererkennungseinrichtung 420 ist weiterhin bevorzugt ausgelegt, um einen Kurvenverlauf aus der Menge von Referenzkurvenverläufen, der einem in dem gerasterten Bild oder Bildausschnitt 414 enthaltenen Kurvenverlauf hinreichend ähnlich ist, als das erste gebogene Liniensegment, das zweite gebogene Liniensegment, das dritte gebogene Liniensegment oder das vierte gebogene Liniensegment zu identifizieren, je nach dem an welchem des ersten Ellipsenpunktes, des zweiten Ellipsenpunktes, des dritten Ellipsenpunktes oder des vierten Ellipsenpunktes der Referenzkurvenverlauf aus der Menge der Referenzkurvenverläufe die Ellipse annähert.

Ferner ist die Mustererkennungseinrichtung 420 ausgelegt, um mindestens einen Lageparameter, bevorzugt aber zwei Lageparameter sowie optional einen weiteren Parameter, der eine Kurvenform beschreibt, des ersten Liniensegments, des zweiten Liniensegments, des dritten Liniensegments oder des vierten Liniensegments zu bestimmen. Aus der Lage des identifizierten ersten gebogenen Liniensegments, des zweiten gebogenen Liniensegments, des dritte gebogenen Liniensegments oder vierten gebogenen Liniensegments kann dann eine optionale Koordinatenberechnungseinrichtung 430 die Koordinaten des ersten Ellipsenpunktes, des zweiten Ellipsenpunktes, und des dritten Ellipsenpunktes oder des vierten Ellipsenpunktes berechnen. Die Koordinatenberechnungseinrichtung 430 kann allerdings entfallen, wenn beispielsweise die von der Mustererkennungseinrichtung 420 bestimmten Lageparameter der gebogenen Liniensegmente bereits derart definiert sind, dass die Lageparameter direkt Koordinaten des ersten Ellipsenpunktes, des zweiten Ellipsenpunktes und des dritten Ellipsenpunktes oder des vierten Ellipsenpunktes angeben, an denen ja bevorzugter Weise die gebogenen Liniensegmente durch die ausgezeichneten Ellipsenpunkte verlaufen.

Es sei hier weiterhin darauf hingewiesen, dass als Referenz-Kurvenverläufe bevorzugt solche Kurvenläufe verwendet werden, die eine Ellipse an dem ersten Ellipsenpunkt, an dem zweiten Ellipsenpunkt, dem dritten Ellipsenpunkt oder dem vierten Ellipsenpunkt (bzw. in einer Umgebung der jeweiligen Ellipsenpunkte) annähern. Als Referenzkurvenverläufe werden bevorzugt symmetrische gebogene Kurvenverläufe verwendet. Im übrigen wird es bevorzugt, als Referenzkurvenverläufe beispielsweise Ausschnitte aus kreisförmigen Kurven zu verwenden, da kreisförmige Kurven eine Ellipse an dem ersten Ellipsenpunkt, an dem zweiten Ellipsenpunkt, an dem dritten Ellipsenpunkt oder an dem vierten Ellipsenpunkt besonders gut annähern.

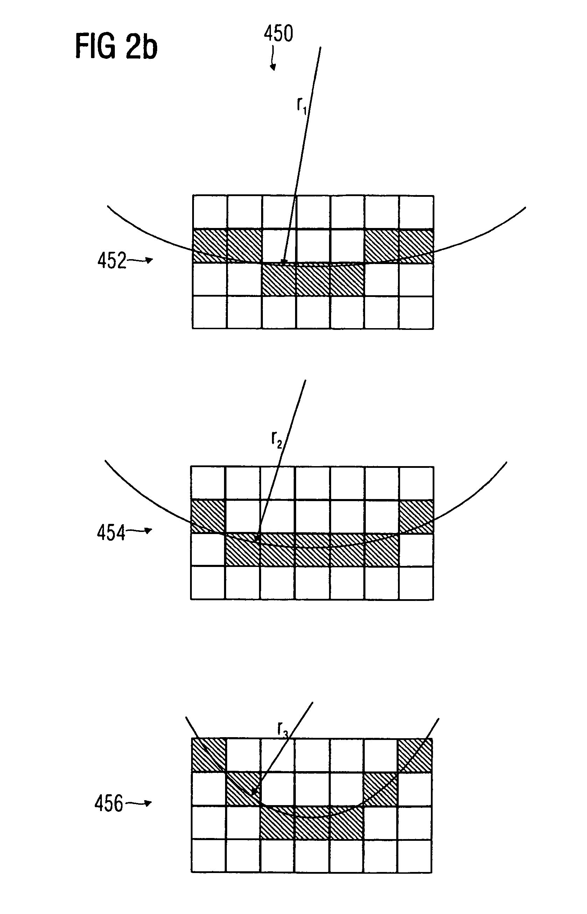

Fig. 2b ist eine graphische Darstellung von zwei Beispielen für Referenzkurvenverläufe zur Verwendung in einer erfindungsgemäßen Mustererkennungseinrichtung. Die graphische Darstellung der Fig. 2b ist in ihrer Gesamtheit mit 450 bezeichnet. Eine erste graphische Darstellung 452 beschreibt dabei in Form eines Rasterbildes einen ersten Referenzkurvenverlauf, der einen Ausschnitt aus einer kreisförmigen Kurve mit einem ersten Krümmungsradius $r_1$ annähert. Eine zweite graphische Darstellung 454 beschreibt in Form eines Rasterbildes einen zweiten Referenzkurvenverlauf, der einen Ausschnitt aus einer kreisförmigen Linie mit einem zweiten Krümmungsradius $r_2$ annähert, wobei der zweite Krümmungsradius $r_2$ größer ist als der erste Krümmungsradius $r_1$. Eine dritte graphische Darstellung 456 zeigt ferner in Form eines Rasterbildes einen dritten Referenzkurvenverlauf, der ebenso einen Ausschnitt aus einer kreisförmigen Linie mit einem dritten Krümmungsradius $r_3$ beschreibt. Der dritte Krümmungsradius $r_3$ ist hierbei kleiner als der erste Krümmungsradius $r_1$. Die drei graphischen Darstellungen 452, 454, 456 der Fig. 2b beschreiben also drei mögliche Referenzkurvenverläufe zur Verwendung in der Mustererkennungseinrichtung 420. In anderen Worten, die Mustererkennungseinrichtung 420 kann beispielsweise allgemein ausgelegt sein, um die drei in den graphischen Darstellungen 452, 454, 456 der Fig. 2b gezeigten Referenzkurvenverläufe in dem gerasterten Bild oder Bildausschnitt 414 zu erkennen und beispielsweise als ein erstes gebogenes Liniensegment, das die zu identifizierende Ellipse an dem ersten Ellipsenpunkt annähert, zu identifizieren. Ferner ist die Mustererkennungseinrichtung 420 bevorzugt ausgelegt, um die Lage eines in dem gerasterten Bild oder Bildausschnitts 414 erkannten Referenzkurvenverlauf durch Lageparameter zu beschreiben, und diese Lageparameter der Koordinatenberechnungseinrichtung 430 zur Verfügung zu stellen, sofern die genannten Lageparameter nicht direkt die Koordinaten eines ersten Ellipsenpunktes, an dem der bekannte Referenzkurvenverlauf die zu identifizierende Ellipse annähert, darstellen.

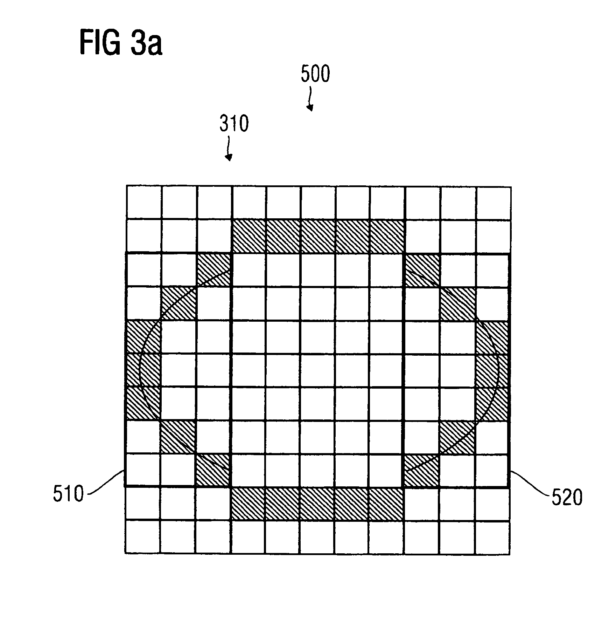

Die Fig. 3a zeigt eine erste graphische Darstellung eines beispielhaften Rasterbildes mit darin gekennzeichneten erkannten gebogenen Liniensegmenten. Es wird hierbei davon ausgegangen, dass die Mustererkennungseinrichtung 420 der Vorrichtung 400 gemäß Fig. 2a beispielsweise in der Lage ist, die in der ersten graphischen Darstellung 452, der zweiten graphischen Darstellung 454 sowie der dritten graphischen Darstellung 456 gezeigten Referenzkurvenverläufe in einem Bild oder Bildausschnitt zu erkennen. Ferner wird davon ausgegangen, dass das beispielhafte Rasterbild 310 der Fig. 1a der Mustererkennungseinrichtung 420 als gerastertes Bild 414 zugeführt wird. Es wird weiterhin beispielhaft davon ausgegangen, dass das Rasterbild 310 der Mustererkennungseinrichtung entweder Zeilenweise oder Spaltenweise zugeführt wird. Unter der Annahme, dass das Rasterbild 310 der Mustererkennungseinrichtung 420 Spaltenweise beginnend mit der ersten Rasterspalte 322 zugeführt wird, kann die Mustererkennungseinrichtung 420 beispielsweise den dritten Referenzkurvenverlauf der graphischen Darstellung 456 in dem gerasterten Bild erkennen. In der graphischen Darstellung 500 der Fig. 3a ist der dabei erkannte Kurvenverlauf mit 510 gekennzeichnet. Wird das Rasterbild 310 der Mustererkennungseinrichtung 420 hingegen spaltenweise beginnend mit der letzten Rasterspalte 340 zugeführt, so kann die Mustererkennungseinrichtung beispielsweise einen weiteren Kurvenverlauf erkennen, der in der graphischen Darstellung 500 mit 520 bezeichnet ist.

Es sei hierbei ferner darauf hingewiesen, dass der Mustererkennungseinrichtung 420 beispielsweise nur ein von der Bildausschnitt-Auswahleinrichtung 412 ausgewählter Bildausschnitt zugeführt werden kann. Beispielsweise kann der Mustererkennungseinrichtung 420 in einem ersten Verarbeitungsschritt nur ein begrenzter Bildausschnitt zugeführt werden, der die erste Gruppe 370 von Rasterzeilen umfasst. In anderen Worten, ein Bildausschnitt, der die erste Rasterzelle 320 sowie die benachbarten Rasterzeilen bis hin zur siebten Rasterzeile 368 umfasst, kann in dem ersten Verarbeitungsschritt der Mustererkennungseinrichtung 420 zugeführt werden. In diesem Bildausschnitt befindet sich beispielsweise kein Kurvenverlauf, der mit einer der in den graphischen Darstellungen 452, 454 und 456 gezeigten Referenzkurvenverläufe übereinstimmt. In dem zweiten Verarbeitungsschritt kann daraufhin der Mustererkennungseinrichtung 420 ein Bildausschnitt zugeführt werden, der die zweite Gruppe 374 von Rasterzeilen umfasst. Mit anderen Worten, der Mustererkennungseinrichtung 420 werden beispielsweise Spaltenweise, (das heißt Spalte für Spalte nacheinander) die Bildinhalte zwischen einschließlich der zweiten Rasterzeile 330 und der achten Rasterzeile 372 zugeführt. Auch in diesem Bildausschnitt befindet sich kein Kurvenverlauf, der den drei Referenzkurvenverläufen der graphischen Darstellung 452, 454, 456 entspricht. In einem dritten Verarbeitungsschritt kann dann ferner der Bildinhalt einer dritten Gruppe von Rasterzeilen der Mustererkennungseinrichtung 420 zugeführt werden. Die dritte Gruppe von Rasterzeilen ist hier mit 380 bezeichnet und umfasst die Rasterzeilen 3 bis 9. Die Mustererkennungseinrichtung 420 kann in diesem Bildausschnitt einen Kurvenverlauf identifizieren, der dem dritten Referenzkurvenverlauf der graphischen Darstellung 456 entspricht. Der identifizierte Kurvenverlauf ist daher in der graphischen Darstellung 500 mit 510 bezeichnet. Es wird weiterhin darauf hingewiesen, dass sich zur Verbesserung der Auflösung benachbarte Gruppen 370, 374, 380 von Rasterzeilen überlappen, das heißt gemeinsame Rasterzeilen aufweisen. Es wird hierbei bevorzugt, dass sich benachbarte Gruppen von Rasterzeilen nur um eine einzige Rasterzeile unterscheiden, dass also benachbarte Gruppen von Rasterzeilen um genau eine Rasterzeile gegeneinander verschoben sind, wie dies beispielsweise in der Fig. 1 gezeigt ist.

In anderen Worten, die Vorrichtung 400 kann ausgelegt sein, um verschiedene Bildausschnitte, die verschiedene Gruppen von Rasterzeilen umfassen, nacheinander zu verarbeiten und einer Mustererkennung zu unterziehen. Somit muss die Mustererkennung jeweils nur einen kleinen Bildausschnitt verarbeiten, wodurch sich die Komplexität der Mustererkennung stark reduziert. Ferner kann dadurch die Anzahl von verwendeten Referenzkurvenverläufen gering gehalten werden. Es wird ferner darauf hingewiesen, dass aus der Information, in welchem der Bildausschnitte, also unter Verwendung welcher Gruppe 370, 374, 380 von Rasterzeilen, der Referenzkurvenverlauf identifiziert werden kann, eine Information über eine Lage des gebogenen Liniensegments, das eine Ellipse an dem ersten Ellipsenpunkt, dem zweiten Ellipsenpunkt, dem dritten Ellipsenpunkt oder dem vierten Ellipsenpunkt annähert, abgeleitet werden kann. Mit anderen Worten, die Information, in welchem der Bildausschnitte der Referenzkurvenverlauf identifiziert wird, stellt einen Lageparameter des gebogenen Liniensegments dar, und kann somit dazu verwendet werden, um zumindest eine Koordinate des ersten Ellipsenpunktes, des zweiten Ellipsenpunktes, des dritten Ellipsenpunktes oder des vierten Ellipsenpunktes zu ermitteln.

In ähnlicher Weise kann ferner das erste Bild 310 der Mustererkennungseinrichtung 420 auch Zeilenweise, das heißt, Zeile für Zeile nacheinander, zugeführt werden. Hierbei können mehrere Bildausschnitte, die verschiedene Gruppen 360, 364 von Rasterspalten umfassen, nacheinander verarbeitet werden. Die Ausführungen, die im Bezug auf die spaltenweise Verarbeitung einer Gruppe von Rasterzeilen gemacht wurden, gelten hierbei analog.

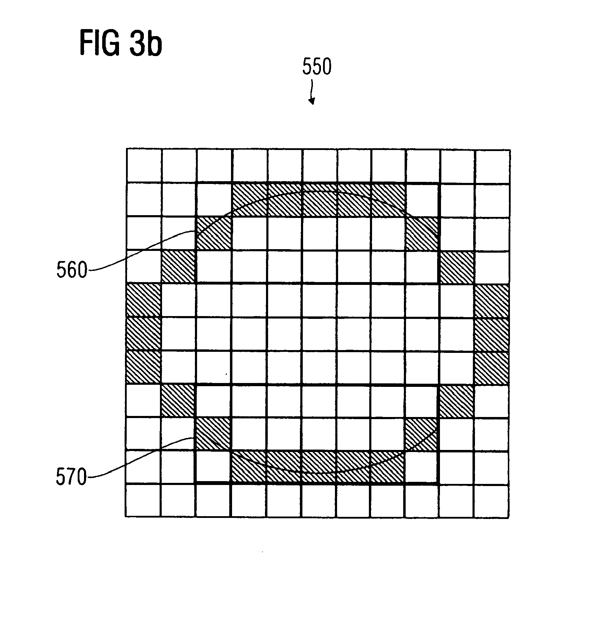

Es wird ferner darauf hingewiesen, dass Fig. 3b eine zweite graphische Darstellung eines beispielhaften Rasterbildes mit darin gekennzeichneten erkannten gebogenen Liniensegmenten zeigt. Die erkannten gebogenen Liniensegmente, die in der graphischen Darstellung 550 der Fig. 3b mit 560 und 570 gekennzeichnet sind, entsprechen hierbei dem in der graphischen Darstellung 454 gezeigten Referenzkurvenverlauf.

Es wird ferner darauf hingewiesen, dass es vorteilhaft ist, ein Rasterbild 310 der Mustererkennungseinrichtung 420 ein erstes Mal spaltenweise beginnend mit der ersten Rasterspalte 322 zuzuführen, und der Mustererkennungseinrichtung 420 das Rasterbild 310 ein zweites Mal Spaltenweise beginnend mit der letzten Rasterspalte 340 zuzuführen. Dabei können in dem ersten Durchlauf, der mit der ersten Rasterspalte 322 beginnt, Kurvenverläufe einer ersten Krümmungsrichtung erkannt werden, während in dem zweiten Durchlauf, der mit der letzten Rasterspalte 340 beginnt, Kurvenverläufe mit einer dazu entgegengesetzten Krümmungsrichtung erkannt werden. In gleicher Weise kann auch das zeilenweise Verarbeiten des Rasterbildes 310 einmal beginnend mit der ersten Rasterzeile 320 und einmal beginnend mit der letzten Rasterzeile 334 erfolgen, um wiederum Kurvenverläufe mit unterschiedlichem Krümmungsverhalten mit Hilfe einer Mustererkennungseinrichtung, die nur für die Erkennung von Kurvenverläufen mit einem einzigen Krümmungsverhalten bzw. mit einer einzigen Krümmungsrichtung ausgelegt ist, identifizieren zu können.

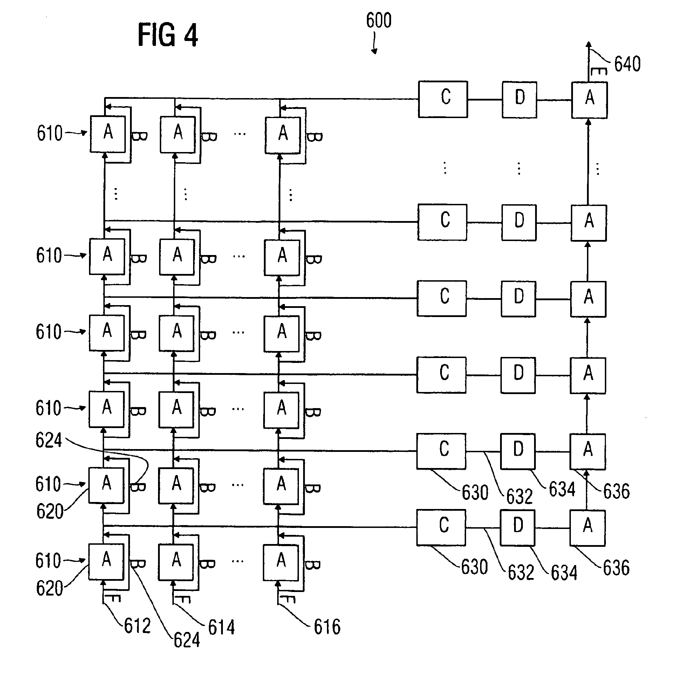

Fig. 4 zeigt ein Blockschaltbild einer Mustererkennungseinrichtung zur Verwendung in einer erfindungsgemäßen Vorrichtung 400. Die Schaltung der Fig. 4 ist in ihrer Gesamtheit mit 600 bezeichnet und beschreibt ein sog. "Hough-Array" zur Durchführung einer Hough-Transformation. Die Mustererkennungseinrichtung 400, die die Koordinatenbestimmungseinrichtung 110 realisiert, kann bevorzugt eine Suche nach Kreiskurven unterschiedlicher Radien durchführen, die eine zu identifizierende Ellipse um die Extrempunkte, also um den ersten Ellipsenpunkt, den zweiten Ellipsenpunkt, den dritten Ellipsenpunkt oder den vierten Ellipsenpunkt herum, in ausreichender Näherung beschreiben. Dies kann in besonders vorteilhafter Weise durch eine parallele systolische Hough-Transformation erfolgen. Die Hough-Transformation kann für Kreiskurven kofiguriert werden, und kann dabei für die Extremwertsuche, also für die Identifizierung von am weitesten in einer bestimmten Richtung gelegenen Punkten, angepasst sein.

Die Fig. 4 zeigt eine besonders vorteilhafte Einrichtung zur Durchführung einer Hough-Transformation. Die Einrichtung 600 zur Hough-Transformation umfasst hierbei eine Mehrzahl von hintereinander geschalteten Stufen 610, durch die mehrere Signale 612, 614, 616 parallel weitergeleitet werden. Eine Stufe enthält dabei für jedes Signal entweder ein Verzögerungselement 620, das auch mit A bezeichnet ist, oder einen Bypass 624, der auch mit B bezeichnet ist. Ferner werden die Signale an dem Ausgang einer Stufe einem Summierglied 630 zugeführt, das auch mit C bezeichnet ist. Das Summierglied ist hierbei bevorzugt ausgelegt, um festzustellen, wie viele Signale an dem Ausgang der betreffenden Stufe gleichzeitig aktiv sind. An einem Ausgang 632 eines Summiergliedes 630 liegt somit eine sog. Zeilensumme an, die angibt, wie viele Signale an dem Ausgang der betreffenden Stufe gleichzeitig aktiv sind. Die Zeilensumme 632 kann dann einem Komparator 634 zugeführt werden, der die Zeilensumme 632 mit einem vorgegeben Schwellwert vergleicht. überschreitet die Zeilensumme 632 den vorgegeben Schwellwert, so bedeutet dies, dass in der jeweiligen Stufe mindestens eine vorgegebene Anzahl von Signalen aktiv sind. Mit anderen Worten, in der jeweiligen Stufe liegt, zumindest näherungsweise, eine "gerade Linie" vor, die dadurch gekennzeichnet ist, dass mindestes eine vorgegebene Anzahl von Signalen der jeweiligen Stufe gleichzeitig aktiv sind. Ein Ausgangssignal des Komparators 634 wird darauf einem Verzögerungselement 636 zugeführt. Mehrere Verzögerungselemente 636, die jeweils mit einem Ausgang eines Komparators 634 einer Stufe 610 verbunden sind, sind hierbei in einer Kette derart verschaltet, dass das Ausgangssignal eines Verzögerungselements 636 dem Eingang eines darauffolgenden Verzögerungselements 636 zugeführt wird.

Es sei ferner darauf hingewiesen, dass die Verzögerungselemente 620, 636, getaktet arbeiten, so dass sowohl die Signale 612, 614, 616 als auch die Ausgangssignale der Komparatoren 634 getaktet weitergeleitet werden. Die Signale 612, 614, 616 und die Ausgangssignale der Komparatoren 634 werden von der Struktur her parallel und in gleicher Richtung weitergeleitet, wobei jedoch die Signale 612, 614, 616 in den einzelnen Stufen unterschiedlich stark verzögert werden, je nach dem, ob bei der Weiterleitung des Signals 612, 614, 616 in einer Stufe 610 ein Verzögerungselement 620 oder ein Bypass 624 verwendet wird. Es wird allerdings bevorzugt, das ein zentrales Signal der Mehrzahl von Signalen 612, 614, 616 genauso schnell durch die Mehrzahl von Stufen weitergeleitet wird wie die Signale von den Ausgängen der Komparatoren 634. Das zentrale Signal wird dabei bevorzugt in jeder der Stufen gleich verzögert, und auch die Ausgangssignale der Komparatoren 634 werden bevorzugt mit konstanter Verzögerung durch die Stufen weitergeleitet. Das zentrale Signal befindet sich dabei bevorzugt näherungsweise in der Mitte zwischen dem ersten Signal 612 und dem letzten Signal 614, beschrieb als einen Rasterzeile in der Mitte des der Hough-Transformationseinrichtung 600 zugeführten Bildausschnitts, oder ist von der Mitte des Bildausschnitts höchstens höchstens 25% einer Breite des Bildausschnitts entfernt. Die Breite des Bildausschnitts ist hierbei durch die Anzahl an Rasterzeilen oder Rasterspalten definiert, die der Hough-Transformationseinrichtung 600 gleichzeitig zugeführt werden.

Basierend auf der strukturellen Beschreibung wird im Folgenden die Funktionsweise der Mustererkennungseinrichtung 600 näher beschrieben. Es wird dabei davon ausgegangen, dass ein Bildausschnitt in Form von parallelen Zeitsignalen 612, 614, 616 der Hough-Transformationseinrichtung 600 zugeführt wird. Die Verzögerungselemente 620 oder die Bypässe 624 sind dabei so konfiguriert, dass verschiedene Zeitsignale 612, 614, 616 bei einem Durchlaufen der einzelnen Stufen verschieden stark verzögert werden. Die Verzögerungen sind durch Einschalten von Verzögerungselementen 620 oder Bypässen 624 so eingestellt, dass ein gebogener Kurvenverlauf (bevorzugt ein kreisförmiger gebogener Kurvenverlauf) nach Durchlaufen von einer Stufe oder von mehreren Stufen 610 gerade gebogen wird. Mit anderen Worten, ein gebogener Kurvenverlauf in dem von der Hough-Transformationseinrichtung verarbeiteten Bildausschnitts resultiert darin, dass die einzelnen Signale 612, 614, 616 zu unterschiedlichen Zeitpunkten aktiv sind. Durch eine geeignete Einstellung der Verzögerungselemente 620 bzw. der Bypässe 624 kann allerdings erreicht werden, dass Signale 612, 614, 616 die einzelnen Stufen unterschiedlich schnell durchlaufen, so dass nach dem Durchlaufen einer bestimmten Anzahl von Stufen 610 idealer Weise alle auf den Signalen 612, 614, 616 beruhenden weitergeleiteten Signale an dem Ausgang einer Stufe gleichzeitig aktiv sind. In diesem Fall tritt in der bestimmten Stufe eine besonders große Zeilensumme auf, die von der entsprechenden Summiereinrichtung 630 berechnet wird. Ein Auftreten einer derartig großen Zeilensumme kann dann dazu führen, dass der Komparator 634 der betreffenden Stufe ein aktives Signal ausgibt, das wiederum über die Kette von Verzögerungselementen 636 zu dem Ausgang 640 der Hough-Transformationseinrichtung weitergeleitet wird. Aus einer zeitlichen Lage einer Aktivität auf dem Ausgangssignal an dem Ausgang 640 der Hough-Transformationseinrichtung 600 kann damit auf eine Lage eines Kurvenverlaufs in dem in Form von Zeitsignalen 612, 614, 616 an die Hough-Transformationseinrichtung 600 eingegebenen Bildausschnitt geschlossen werden.

Es wird ferner darauf hingewiesen, dass es bevorzugt wird, dass ein vorbestimmtes Signal (auch als zentrales Signal bezeichnet) aus den Signalen 612, 614, 616 die Stufen 610 der Hough-Transformationseinrichtung 600 genauso schnell durchläuft, wie ein Ausgangssignal von den Ausgängen der Komparatoren 634, das von der Kette von Verzögerungselementen 636 weitergeleitet wird. In anderen Worten, zumindest eines der Eingangssignale 612, 614, 616 breitet sich parallel und in gleicher Geschwindigkeit wie die Ausgangssignale der Komparatoren 634 aus. Dadurch kann erzielt werden, dass das an dem Ausgang 640 der Hough-Transformationseinrichtung 600 anliegende Ausgangssignal, das auf den in der Kette von Verzögerungselementen 636 weitergeleiteten Signalen der Komparatoren 634 basiert, eine direkte Aussage über den Zeitpunkt des Auftretens eines gebogenen Liniensegments in den Eingangssignalen 612, 614, 616 trägt. Hierbei gibt der Zeitpunkt des Auftretens einer Aktivität auf dem Ausgangssignal an dem Ausgang 640 der Hough-Transformationseinrichtung 600 eine Aussage darüber, zu welchem Zeitpunkt ein gebogener Linienverlauf in Form von Eingangssignalen 612, 614, 616 in die Hough-Transformationseinrichtung eingegeben wurde. Der Zeitpunkt des Vorliegens eines gebogenen Probenverlaufs in den Signalen 612, 614, 616 erlaubt dabei freilich einen direkten Rückschluss auf eine räumliche Lage des gebogenen Kurvenverlaufs in dem Rasterbild, das den Signalen 612, 614, 616 zugrunde liegt.

Weiterhin wird darauf hingewiesen, dass bei der angegebenen Auslegung, bei der sich mindestens eines der Signale 612, 614, 616 genauso schnell durch die Stufen 610 ausbreitet, wie die Ausgangssignale der Komparatoren 634, die genaue Form der Krümmung, beispielsweise also der Krümmungsradius, in einer gebogenen Kurve, lediglich einen Einfluss darauf hat, in welcher der Stufen 610, ein Komparator 634 aktiv wird. Die genaue Form des gebogenen Kurvenverlaufs hat bei der gezeigten Auslegung allerdings keinen Einfluss auf den Zeitpunkt, an dem eine Aktivität an dem Ausgang 640 der Hough-Transformationseinrichtung 600 auftritt.

Es kann somit festgehalten werden, dass die in Fig. 4 gezeigte Hough-Transformationseinrichtung 600 geeignet ist, um in einer sehr effizienten Weise die Lage eines gebogenen Kurvenverlaufs in einem Rasterbild festzustellen, indem das Rasterbild (oder ein Ausschnitt daraus) in eine Mehrzahl von parallelen Signalen umgewandelt wird, die dann mehrere Stufen der Hough-Transformationseinrichtung 600 mit unterschiedlicher Geschwindigkeit durchlaufen. Durch die Bildung einer Spaltensumme an dem Ausgängen der Stufen 610 kann erkannt werden, wenn mindestens eine vorgegebene Anzahl von Signalen an den Ausgängen der Stufen gleichzeitig aktiv sind, was wiederum darauf hinweist, dass der ursprünglich verlaufende Kurvenverlauf "gerade gebogen" worden ist.

Bevorzugter Weise ist die Hough-Transformationseinrichtung 600 durch geeignete Auswahl von Verzögerungselementen 620 oder Bypässen 624 ausgelegt, um durch Signale 612, 614, 616 beschriebene Kurvenverläufe gerade zu biegen, die die Ellipse an dem ersten Ellipsenpunkt, dem zweiten Ellipsenpunkt, dem dritten Ellipsenpunkt oder dem vierten Ellipsenpunkt annähern können. Ferner werden bevorzugter Weise eben nur solche Kurvenverläufe, die eine Ellipse an dem ersten Ellipsenpunkt, dem zweiten Ellipsenpunkt, dem dritten Ellipsenpunkt oder dem vierten Ellipsenpunkt annähern können, gerade gebogen. Damit ist die Hough-Transformationseinrichtung 600 gemäß Fig. 4 geeignet, um das erste gebogene Liniensegment, das zweite gebogene Liniensegment, das dritte gebogene Liniensegment oder das vierte gebogene Liniensegment zu identifizieren. Der Zeitpunkt, zu dem ein Ausgangssignal an dem Ausgang 640 der Hough-Transformationseinrichtung 600 anliegt, beschreibt dabei eine Lage des identifizierten Kurvenverlaufs in dem Rasterbild, auf dem die Signale 612, 614, 616 basieren, also einen Parameter des ersten gebogenen Liniensegments, des zweiten gebogenen Liniensegments, des dritten gebogenen Liniensegments oder des vierten gebogenen Liniensegments.

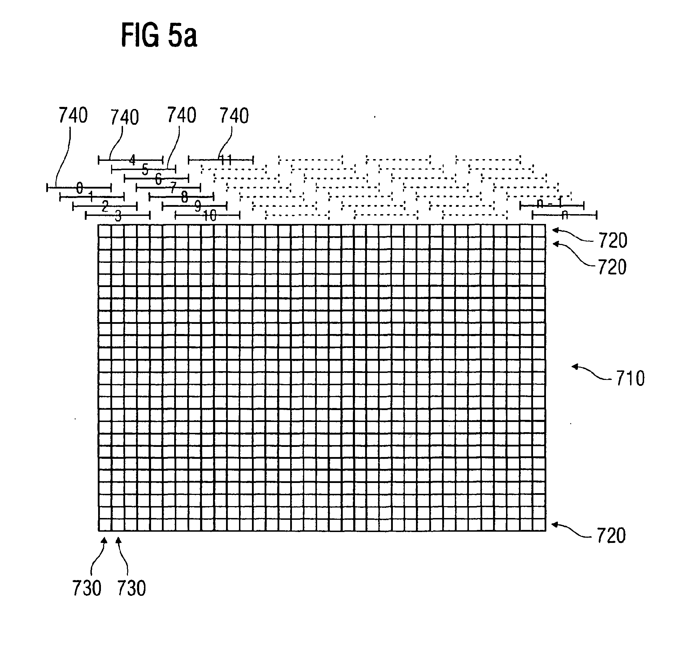

Fig. 5a zeigt eine graphische Darstellung einer Vorgehensweise zum Durchschieben eines graphischen Bildes durch eine Mustererkennungseinrichtung. Im Speziellen zeigt die Fig. 5a ein spaltenweises Durchschieben eines Bildes bzw. Rasterbildes durch die in Fig. 4 gezeigte Hough-Transformationseinrichtung 600 (auch als Hough-Feld oder Hough-Array bezeichnet).

Die Fig. 5a zeigt hierbei ein Rasterbild 710, bestehend aus einer Mehrzahl von Rasterzeilen 720 sowie eine Mehrzahl von Rasterspalten 730. Gezeigt sind ferner Gruppen 740 von jeweils bevorzugter Weise fünf Rasterspalten 730, wobei davon ausgegangen wird, dass jeweils fünf Rasterspalten gleichzeitig der Hough-Transformationseinrichtung 600 parallel in Form von Signalen 612, 614, 616 zugeführt werden. Für weitere Einzelheiten wird hierbei auch auf die graphische Darstellung 300 der Fig. 1 verwiesen.

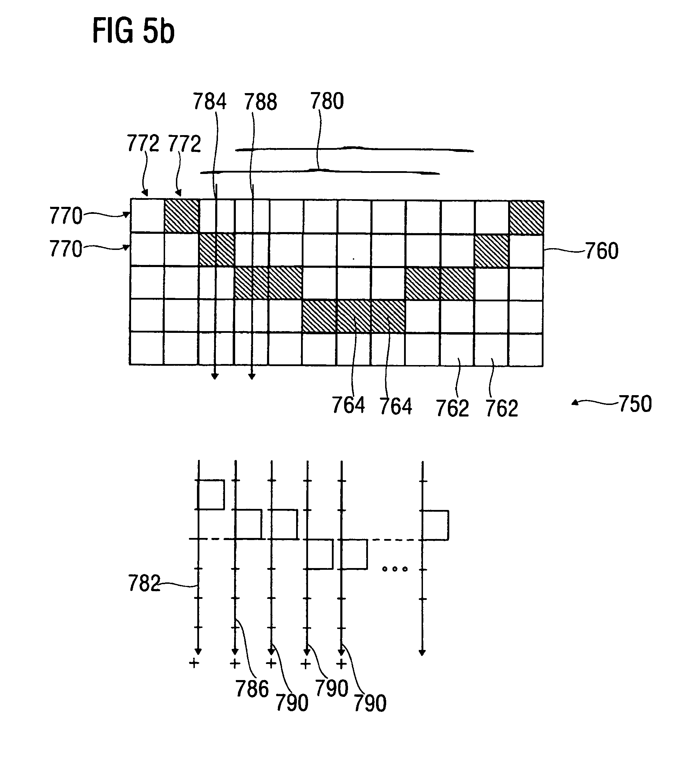

Fig. 5b zeigt eine graphische Darstellung von bei einer Umwandlung eines Rasterbildes in parallele Zeitsignale entstehenden Zeitsignalen. Die graphische Darstellung der Fig. 5b ist in ihrer Gesamtheit gemäß 750 bezeichnet. Die graphische Darstellung 750 zeigt ein Rasterbild 760, das eine Mehrzahl von inaktiven Rasterpunkten bzw. Bildpunkten 762 sowie eine Mehrzahl von durch Schraffierung gekennzeichneten aktiven Rasterpunkten bzw. Bildpunkten 764 aufweist. Die aktiven Rasterpunkte bzw. Bildpunkte 764 beschreiben bevorzugt einen Kurvenverlauf. Wie bereits oben beschrieben umfasst das Rasterbild 760 hierbei eine Mehrzahl von Rasterzeilen 770 sowie eine Mehrzahl von Rasterspalten 772. Es wird ferner davon ausgegangen, dass Zeitsignale basierend auf einem Bildausschnitt 780, der eine Gruppe von sieben Rasterspalten umfasst, gebildet werden. So ist beispielsweise ein erstes Zeitsignal 782 einer ersten in der Gruppe 780 von Rasterspalten enthaltenen Rasterspalte 784 zugeordnet. Das Zeitsignal 782 entsteht hierbei durch zeilenweißes Abtasten des Rasterbildes 760 entlang der zugeordneten Rasterspalte 784. In ähnlicher Weise entsteht ein zweites Zeitsignal 786 durch zeilenweißes Abtasten der zweiten Rasterspalte 788 aus der Gruppe 780 von Rasterspalten. Es zeigt sich bei Betrachtung der Zeitverläufe deutlich, dass bei der beschriebenen Abtastrichtung aktive Rasterpunkte, die in der gleichen Rasterzeile des Rasterbildes 760 liegen, in gleichzeitigen Aktivitätsimpulsen auf den Zeitsignalen 782, 786, 790 resultieren. Eine waagrechte Linie, das heißt, eine Linie, die innerhalb einer Rasterzeile verläuft, macht sich somit in den Zeitsignalen 782, 786, 790 durch gleichzeitige Impulse auf den Zeitsignalen 782, 786, 790 bemerkbar.

Wird nunmehr davon ausgegangen, dass die Zeitsignale 782, 786, 790 einer Hough-Transformationseinrichtung 600 als Eingangssignale 612, 614, 616 zugeführt werden, und dass die Signale 612, 614, 616 in einzelnen Stufen 610 der Hough-Transformationseinrichtung 600 verschieden stark verzögert werden, so wird klar, dass die verschieden starke Verzögerung der Zeitsignale 782, 786, 790 einer Verzerrung des Rasterbildes 760 entspricht, wodurch ein gebogener Kurvenverlauf zu einer geraden Linie verbogen werden kann. Eine gerade Linie aber, die mit einer gleichzeitigen Aktivität von mehreren der Zeitsignale 782, 786, 790 korrespondiert, kann in der Hough-Transformationseinrichtung 600, wie oben beschrieben, erkannt werden.

Die Verwendung eines Hough-Transformators zur Ermittlung von Schriftelementen ermöglicht, wie schon oben erwähnt, eine Realisierung eines besonders zuverlässigen Schrifterkennungssystems.

Gemäß einem bevorzugten Auführungsbeispiels schafft die Erfindung eine Vorrichtung 2800;2900 zur Erkennung von Schriftzeichen in einem Bild 2808; 2908, mit folgenden Merkmalen:

einem Hough-Transformator 2820;2920, der ausgelegt ist, um eine Mehrzahl von in verschiedenen Richtungen durch das Bild 2808;2908 verlaufenden geraden Strecken als identifizierte Schriftelemente 2822;2922 zu identifizieren;

einem      Schriftzeichen-Beschreibungs-Ersteller 2830;2930, der ausgelegt ist, um basierend auf den identifizierten geraden Strecken eine Schriftzeichen-Beschreibung 2832;2932 zu erhalten, die eine Lage der identifizierten geraden Strecken beschreibt; und

einem Datenbank-Vergleicher 2840;2940, der ausgelegt ist, um die Schriftzeichen-Beschreibung 2842;2942 mit einer Mehrzahl von Vergleichs-Schriftzeichen-Beschreibungen zu vergleichen, denen Schriftzeichen-Codes zugeordnet sind, um als Ergebnis des Vergleichs einen Schriftzeichen-Code 2846;2946 eines erkannten Schriftzeichens zu liefern.

Gemäß einem bevorzugten Ausführungsbeispiel schafft die Erfindung ein Verfahren 3600 zum Erkennen von Schriftzeichen in einem Bild, mit folgenden Schritten:

Hough-Transformieren 3610 des Bildes oder einer vorverarbeiteten Version des Bildes, um in dem Bild oder in dem vorverarbeiteten Bild eine Mehrzahl von in verschiedenen Richtungen durch das Bild verlaufenden geraden Strecken als identifizierte Schriftelemente zu identifizieren;

Erstellen 3620 einer Schriftzeichen-Beschreibung basierend auf den identifizierten geraden Strecken, wobei die Schriftzeichen-Beschreibung eine Lage der identifizierten geraden Strecken beschreibt; und

Vergleichen 3630 der Schriftzeichen-Beschreibung mit einer Mehrzahl von Vergleichs-Schriftzeichenbeschreibungen, denen Schriftzeichencodes zugeordnet sind, um als Ergebnis des Vergleiches einen Schriftzeichen-Code eines erkannten Schriftzeichens zu liefern.

Optional kann bei der Vorrichtung 2800; 2900 der Hough-Transformator ausgelegt sein, um einzelne Kreisbögen oder Ellipsenbögen, die einen Linienverlauf eines Schriftzeichens in einer Umgebung von lokalen Extrema annähern, in dem Bild 2808;2908 oder in einer vorbearbeiteten Version 2812;2912 des Bildes als identifizierte Schriftelemente 2822;2922 zu identifizieren, und um eine Information über eine Orientierung eines identifizierten Kreisbogens oder Ellipsenbogens zu liefern; und wobei der Schriftzeichen-Beschreibungs-Ersteller 2830; 2930 ausgelegt ist, um basierend auf den identifizierten Kreisbögen oder Ellipsenbögen und der Information über die Orientierung eine Schriftzeichen-Beschreibung 2832;2932 zu erhalten, die eine Lage der einzelnen identifizierten Kreisbögen oder Ellipsenbögen beschreibt.

Optional kann bei der Vorrichtung 2800; 2900 die Schriftzeichen-Beschreibung für einen Bogen eine Information aufweisen, die angibt, ob der Bogen nach oben, nach unten, nach links oder nach rechts gekrümmt ist.

Optional kann bei der Vorrichtung 2800; 2900 der Hough-Transformator ausgelegt sein, um bei einer Erkennung eines Kreisbogens oder Ellipsenbogens eine Information über einen Extrempunkt des Kreisbogens oder Ellipsenbogens zu liefern; und

wobei die Schriftzeichen-Beschreibung eine Position des Extrempunkts beschreibt.

Optional kann bei der Vorrichtung 2800; 2900 ein Extrempunkt eines Bogens ein am weitesten in einer vorgegebenen Richtung liegender Punkt des Bogens sein.

Optional kann bei der Vorrichtung 2800; 2900 der Hough-Transformator 2820; 2920 ausgelegt sein, um eine Mehrzahl von in verschiedenen Richtungen durch das Bild verlaufenen geraden Strecken als identifizierte Schriftelemente 2822; 2922 zu identifizieren.

Optional kann bei der Vorrichtung 2800; 2900 der Hough-Transformator 2820; 2920 ausgelegt sein, um eine Information über eine Lage, eine Länge oder eine Richtung einer identifizierten geraden Strecke bereitzustellen, und wobei der Schriftzeichen-Beschreibungs-Ersteller 2830; 2930 ausgelegt ist, um die von dem Hough-Transformator bereitgestellte Information 2822; 2922 über die identifizierte gerade Strecke für die Erstellung der Schriftzeichen-Beschreibung 2832; 2932 zu verwenden.

Optional kann bei der Vorrichtung 2800; 2900 der Hough-Transformator 2820; 2920 ausgelegt sein, um eine Information über eine Lage, eine Bogenlänge, einen Krümmungsradius oder einen Krümmungswinkel der identifizierten Kreisbögen oder Ellipsenbögen bereitzustellen, und

wobei der Schriftzeichen-Beschreibungs-Ersteller 2830; 2930; 3430 ausgelegt ist, um die von dem Hough-Transformator bereitgestellte Information über die Lage, die Bogenlänge, den Krümmungsradius oder den Krümmungswinkel der identifizierten Kreisbögen oder Ellipsenbögen für die Erstellung der Schriftzeichenbeschreibung 2832; M2932; 3452 zu verwenden.

Optional kann bei der Vorrichtung 2800; 2900 der Schriftzeichen-Beschreibungs-Ersteller 2830; 2930; 3430 ausgelegt sein, um die Schriftzeichen-Beschreibung 2832; 2932; 3452 so zu erstellen, dass die Schriftzeichen-Beschreibung eine Beschreibung einer relativen Lage von zu einem Schriftzeichen gehörigen Kreisbögen oder Ellipsenbögen umfasst.

Optional kann bei der Vorrichtung 2800; 2900 der Schriftzeichen-Beschreibungs-Ersteller 2830; 2930 ausgelegt sein, um in die Schriftzeichen-Beschreibung für identifizierte Kreisbögen oder Ellipsenbögen eine durch den Hough-Transformator gelieferte Information über eine Orientierung des Kreisbogens oder des Ellipsenbogens aufzunehmen.

Optional kann bei der Vorrichtung 2800; 2900 der Hough-Transformator 2820; 2920 ausgelegt sein, um nur Kreisbögen oder Ellipsenbögen zu identifizieren, deren Krümmungsradius (r1, r2, r3) betragsmäßig kleiner als ein vorgegebener maximal zulässiger Krümmungsradius ist.

Optional kann bei der Vorrichtung 2800; 2900 der Datenbank-Vergleicher 2840; 2940 ausgelegt sein, um einen Merkmalsvektor 2832; 2932; 3352; 3452, der die Information der Schriftzeichen-Beschreibung umfasst, mit einer Mehrzahl von Vergleichs-Merkmalsvektoren zu vergleichen, die Vergleichsschriftzeichen zugeordnet sind, um ein Maß für Unterschiede zwischen dem Merkmalsvektor und den Vergleichs-Vektoren zu erhalten, und um basierend auf dem Maß für die Unterschiede einen zu dem Merkmalsvektor gehörigen Schriftzeichencode 2846; 2946 zu bestimmen.

Optional kann bei der Vorrichtung 2800; 2900 die Vorrichtung einen Kantenerkenner 2810; 2910 umfassen, der ausgelegt ist, um Kanten in dem Bild 2808; 2910 zu erkennen, und um basierend auf dem Bild ein Kantenbild 2812; 2912 als die vorverarbeitete Version des Bildes zu erzeugen.

Optional kann bei der Vorrichtung 2800; 2900 die Vorrichtung einen Buchstabentrenner umfassen, der ausgelegt ist, um für eine Erkennung eines Schriftzeichens einen Ausschnitt aus dem Bild 2808; 2812; 2908; 2912 bereitzustellen oder zu markieren, der nur ein Schriftzeichen umfasst.

Optional kann bei dem Verfahren 3600 das Hough-Transformieren ein Identifizieren von einzelnen Kreisbögen oder Ellipsenbögen, die einen Linienverlauf eines Schriftzeichens in einer Umgebung von lokalen Extrema annähern, in dem Bild oder in einer vorverarbeiteten Version des Bildes als identifizierte Schriftelemente umfassen; wobei das Verfahren ein Liefern einer Information über eine Orientierung eines identifizierten Kreisbogens oder Ellipsenbogens umfasst; und wobei das Verfahren ein Erstellen (3620) einer Schriftzeichen-Beschreibung, die eine Lage der einzelnen identifizierten Kreisbögen oder Ellipsenbögen beschreibt, basierend auf den identifizierten Kreisbögen oder Ellipsenbögen und der Information über die Orientierung umfasst.

**Patentansprüche**

1. Vorrichtung (2800; 2900) zur Erkennung von Schriftzeichen ("a", "b", "c") in einem Bild, mit folgenden Merkmalen:

   einem Hough-Transformator (2820; 2920), der ausgelegt ist, um Kreisbögen oder Ellipsenbögen in dem Bild (2808; 2908) oder in einer vorbearbeiteten Version (2812; 2912) des Bildes als identifizierte Schriftelemente (2822; 2922) zu identifizieren;
   einem Schriftzeichen-Beschreibungs-Ersteller (2830; 2930), der ausgelegt ist, um basierend auf den identifizierten Kreisbögen oder Ellipsenbögen eine Schriftzeichen-Beschreibung (2832; 2932) zu erhalten, die eine Lage der identifizierten Kreisbögen oder Ellipsenbögen beschreibt; und
   einem Datenbank-Vergleicher (2840; 2940), der ausgelegt ist, um die Schriftzeichen-Beschreibung mit einer Mehrzahl von Vergleichs-Schriftzeichen-Beschreibungen (2842;2942) zu vergleichen, denen Schriftzeichen-Codes zugeordnet sind, um als Ergebnis des Vergleichs einen Schriftzeichen-Code (2846;2946) eines erkannten Schriftzeichens zu liefern; wobei der Hough-Transformator ausgelegt ist, um bei einer Erkennung eines Kreisbogens oder Ellipsenbogens eine Information über einen Extrempunkt des Kreisbogens oder Ellipsenbogens zu liefern; und wobei die Schriftzeichen-Beschreibung eine Position des Extrempunkts beschreibt; wobei ein Extrempunkt eines Bogens ein am weitesten in einer vorgegebenen Richtung liegender Punkt des Bogens ist.

2. Vorrichtung (2800;2900) gemäß einem der Ansprüche 1 bis 5, wobei der Schriftzeichen-Beschreibungs-Ersteller (2830;2930;3430) ausgelegt ist, um als die Schriftzeichen-Beschreibung (2832;2932; 3452) eine Beschreibung eines Schriftzeichens zu erhalten, die das Schriftzeichen als eine geordnete Beschreibung (3462) von identifizierten Schriftelementen beschreibt.

3. Vorrichtung (2800;2900) gemäß Anspruch 2, wobei der Schriftzeichen-Beschreibungs-Ersteller (2830; 2930;3430) ausgelegt ist, um die Schriftzeichen-Beschreibung (2832;2932;3452) so zu ordnen, dass die geordneten identifizierten Schriftelemente (3462) eine durchgehende Schriftlinie beschreiben.

4. Vorrichtung (2800;2900) gemäß einem der Ansprüche 1 bits 3, wobei die Vorrichtung einen Schriftlinienerkenner (2926) umfasst, der ausgelegt ist, um basierend auf einer Lage der durch den Hough-Transformator (2920) identifizierten Schriftelemente eine Linie (3110;3120;3130;3140) zu identifizieren, entlang der die Schriftzeichen (3150;3160) angeordnet sind.

5. Vorrichtung (2800;2900) gemäß Anspruch 4, wobei der Schriftlinienerkenner (2926) ausgelegt ist, um eine Unterlinie (3110), eine Grundlinie (3120), eine Mittellinie (3130) oder eine Oberlinie (3140) von Schriftzeichen (3150;3160) basierend auf einer Lage der durch die Hough-Transformation identifizierten Schriftelemente als eine Schriftlinie zu ermitteln.

6. Vorrichtung (2800;2900) gemäß Anspruch 4 oder 5, wobei der Schriftlinienerkenner (2926) ausgelegt ist, um eine Linie (3110;3120;3130;3140), auf der mehr als eine vorgegebene Anzahl von Extrema (x) von identifizierten Kreisbögen oder Ellipsenbögen liegen, als eine Schriftlinie zu ermitteln.

7. Vorrichtung (2800;2900) gemäß einem der Ansprüche 4 bis6, wobei der Schriftzeichen-Beschreibungs-Ersteller (2830;2930) ausgelegt ist, um die Schriftzeichen-Beschreibung (2832;2932) so zu erstellen, dass die Schriftzeichen-Beschreibung (2832;2932) eine Information über eine Lage der identifizierten Schriftelemente relativ zu zumindest einer erkannten Schriftlinie (31100;3120;3130; 3140) beschreibt.

8. Vorrichtung (2800;2900) gemäß einem der Ansprüche 1 bis 7, wobei der Schriftzeichen-Beschreibungs-Ersteller (2830;2930) ausgelegt ist, um in die Schriftzeichenbeschreibung (2832;2932) für identifizierten Kreisbögen oder Ellipsenbögen eine durch den Hough-Transformator (2820;2930) gelieferte Information über eine Position eines Extrempunktes (3620,3622,3629, x) des identifizierten Kreisbogens oder des identifizierten Ellipsenbogens aufzunehmen.

9. Vorrichtung (2800;2900) gemäß einem der Ansprüche 1 bis 8, wobei der Schriftzeichen-Beschreibungs-Ersteller (2830;2930;3430) ausgelegt ist, um eine Beschreibung (2832;2932;3432) des Schriftzeichens durch Aneinanderfügen von ausgewählten benachbarten identifizierten Zeichenelementen zu erstellen, wobei der Schriftzeichen-Beschreibungs-Ersteller ausgelegt ist, um die für die Beschreibung des Schriftzeichens verwendeten ausgewählten Zeichenelemente so aus einer Gesamtheit von identifizierten Zeichenelementen auszuwählen, dass die ausgewählten Zeichenelemente einen durchgehenden Linienverlauf von einem vorgegebenen Anfangspunkt zu einem vorgegebenen Endpunkt beschreiben.

10. Vorrichtung (2800;2900) gemäß einem der Ansprüche 1 bis 9, wobei der Schriftzeicheh-Beschreibungs-Ersteller (2830;2930;3430) ausgelegt ist, um basierend auf den identifizierten Zeichenelementen einen Merkmalsvektor (2832;2932;3432) zu erzeugen, der aufeinanderfolgende Abschnitte eines Schriftzeichens beschreibt.

11. Vorrichtung (2800;2900) gemäß einem der Ansprüche 1 bis 10, wobei die Vorrichtung einen Konnektivitätszahl-Berechner (2960) umfasst, oder ausgelegt ist, um basierend auf einem Bildinhalt eines Bildausschnitts des Bildes (2808;2908), der ein Schriftzeichen umfasst, eine Eulersche Konnektivitätszahl (2962) "Komma" (K) zu berechnen; und wobei die Vorrichtung ferner einen Konnektivitätszahl-Überprüfer (2970) umfasst, der ausgelegt ist, um die für den Bildausschnitt berechnete Eulersche Konnektivitätszahl (2962) mit einer vorbestimmten, in einer Datenbank enthaltenen Vergleichs-Konnektivitätszahl (2972), die einem in dem Bildausschnitt erkannten Schriftzeichen zugeordnet ist, zu vergleichen, um eine Zuverlässigkeitsinformation (2974) zu erhalten, die eine Information über eine Zuverlässigkeit einer Erkennung eines Schriftzeichens trägt.

12. Verfahren (3600) zum Erkennen von Schriftzeichen in einem Bild mit folgenden Schritten:

Hough-Transformieren (3610) des Bildes oder einer vorverarbeiteten Version des Bildes, um Kreisbögen oder Ellipsenbögen in dem Bild oder in einer vorverarbeiteten Version des Bildes als identifizierte Schriftelemente zu identifizieren; Erstellen (3620) einer Schriftzeichen-Beschreibung, basierend auf den identifizierten Kreisbögen oder Ellipsenbögen, wobei die Schriftzeichen-Beschreibung eine Lage der identifizierten Kreisbögen oder Ellipsenbögen beschreibt; und Vergleichen (3630) der Schriftzeichen-Beschreibung mit einer Mehrzahl von Vergleichs-Schriftzeichenbeschreibungen, denen Schriftzeichencodes zugeordnet sind, um als Ergebnis des Vergleiches einen Schriftzeichen-Code eines erkannten Schriftzeichens zu liefern, wobei das Hough-Transformieren bei einer Erkennung eines Kreisbogens oder Ellipsenbogens ein Liefern einer Information über einen Extrempunkt des Kreisbogens oder Ellipsenbogens umfasst; wobei die Schriftzeichen-Beschreibung eine Position des Extrempunkts beschreibt; und wobei ein Extrempunkt eines Bogens ein am weitesten in einer vorgegebenen Richtung liegender Punkt des Bogens ist.

13. Computerprogramm zur Durchführung des Verfahrens gemäß Patentanspruch 12, wenn das Computerprogramm auf einem Computer abläuft.

14. Vorrichtung (2800;2900) zur Erkennung von Schriftzeichen ("a","b","c") in einem Bild, mit folgenden Merkmalen:

einem Hough-Transformator (2820;2920), der ausgelegt ist, um Kreisbögen oder Ellipsenbögen in dem Bild (2808;2908) oder in einer vorbearbeiteten Version (2812;2912) des Bildes als identifizierte Schriftelemente (2822;2922) zu identifizieren; einem Schriftzeichen-Beschreibungs-Ersteller (2830;2930), der ausgelegt ist, um basierend auf den identifizierten Kreisbögen oder Ellipsenbögen eine Schriftzeichen-Beschreibung (2832; 2932) zu erhalten, die eine Lage der identifizierten Kreisbögen oder Ellipsenbögen beschreibt; und einem Datenbank-Vergleicher(2840; 2940), der ausgelegt ist, um die Schriftzeichen-Beschreibung mit einer Mehrzahl von Vergleichs-Schriftzeichen-Beschreibungen (2842;2942) zu vergleichen, denen Schriftzeichen-Codes zugeordnet sind, um als Ergebnis des Vergleichs einen Schriftzeichen-Code (2846;2946) eines erkannten Schriftzeichens zu liefern; wobei der Schriftzeichen-Beschreibungs-Ersteller (2830;2930;3430) ausgelegt ist, um als die Schriftzeichen-Beschreibung (2832;2932; 3952) eine Beschreibung eines Schriftzeichens zu erhalten, die das Schriftzeichen als eine geordnete Beschreibung (3462) von identifizierten Schriftelementen beschreibt.

15. Vorrichtung (2800;2900) zur Erkennung von Schriftzeichen ("a","b","c") in einem Bild, mit folgenden Merkmalen:

einem Hough-Transformator (2820;2920), der ausgelegt ist, um Kreisbögen oder Ellipsenbögen in dem Bild (2808;2908) oder in einer vorbearbeiteten Version (2812;2912) des Bildes als identifizierte Schriftelemente (2822;2922) zu identifizieren; einem Schriftzeichen-Beschreibungs-Ersteller (2830;2930), der ausgelegt ist, um basierend auf den identifizierten Kreisbögen oder Ellipsenbögen eine Schriftzeichen-Beschreibung (2832; 2932) zu erhalten, die eine Lage der identifizierten Kreisbögen oder Ellipsenbögen beschreibt; und einem Datenbank-Vergleicher(2840: 2940), der ausgelegt ist, um die Schriftzeichen-Beschreibung mit einer Mehrzahl von Vergleichs-Schriftzeichen-Beschreibungen (2842;2942) zu vergleichen, denen Schriftzeichen-Codes zugeordnet sind, um als Ergebnis des Vergleichs einen Schriftzeichen-Code (2846;2946) eines erkannten Schriftzeichens zu liefern; wobei die Vorrichtung einen Schriftlinienerkenner (2926) umfasst, der ausgelegt ist, um basierend auf einer Lage der durch den Hough-Transformator (2920) identifizierten Schriftelemente eine Linie (3110;3120;3130;3140) zu identifizieren, entlang der die Schriftzeichen (3150;3160) angeordnet sind.

## Claims

1. A device (2800; 2900) for detecting characters ("a", "b", "c") in an image, comprising:

a Hough transformer (2820; 2920) implemented to identify, as identified elements of writing (2822; 2922), circular arcs or elliptical arcs in the image (2808; 2908) or within a preprocessed version (2812; 2912) of the image; a character description generator (2830; 2930) implemented to obtain, on the basis of the identified circular arcs or elliptical arcs, a character description (2832; 2932) which describes locations of the identified circular arcs or elliptical arcs; and

a database comparator (2840; 2940) implemented to compare the character description with a plurality of comparative character descriptions (2842; 2942) which have character codes associated with them, so as to provide, as a result of the comparison, a character code (2846; 2946) of a detected character;

the Hough transformer being implemented to provide, when a circular arc or elliptical arc is detected, information about an extreme point of the circular arc or elliptical arc; and

the character description describing a position of the extreme point;

an extreme point of an arc being a point of the arc which is located farthest in a predefined direction.

2. The device (2800; 2900) according to one of claims 1 to 5, wherein the character description generator (2830; 2930; 3430) is implemented to obtain, as the character description (2832; 2932; 3452), a description of a character which describes the character as an ordered description (3462) of identified elements of writing.

3. The device (2800; 2900) according to claim 2, wherein the character description generator (2830; 2930; 3430) is implemented to order the character description (2832; 2932; 3452) in such a manner that the ordered identified elements of writing (3462) describe a continuous line of writing.

4. The device (2800; 2900) according to one of claims 1 to 3, wherein the device comprises a line-of-writing detector (2926) implemented to identify, on the basis of locations of the elements of writing identified by the Hough transformer (2920), a line (3110; 3120; 3130; 3140) along which the characters (3150; 3160) are arranged.

5. The device (2800; 2900) according to claim 4, wherein the line-of-writing detector (2926) is implemented to determine, as a line of writing, a lower line (3110), a base line (3120), a center line (3130), or an upper line (3140) of characters (3150; 3160) on the basis of locations of the elements of writing identified by the Hough transformation.

6. The device (2800; 2900) according to claim 4 or 5, wherein the line-of-writing detector (2926) is implemented to determine, as a line of writing, a line (3110; 3120; 3130; 3140) on which more than a predefined number of extremes (x) of identified circular arcs or elliptical arcs are located.

7. The device (2800; 2900) according to one of claims 4 to 6, wherein the character description generator (2830; 2930) is implemented to generate the character description (2832; 2932) in such a manner that the character description (2832; 2932) describes information about locations of the identified elements of writing in relation to at least one detected line of writing (3110; 3120; 3130; 3140).

8. The device (2800; 2900) according to one of claims 1 to 7, wherein the character description generator (2830; 2930) is implemented to include, into the character description (2832; 2932) for identified circular arcs or elliptical arcs, information provided by the Hough transformer (2820; 2920) about a position of an extreme point (3620, 3622, 3624, x) of the identified circular arc or of the identified elliptical arc.

9. The device (2800; 2900) according to one of claims 1 to 8, wherein the character description generator (2830; 2930; 3430) is implemented to generate a description (2832; 2932; 3432) of the character by joining together selected adjacent identified character elements,

wherein the character description generator is implemented to select the selected character elements employed for the description of the character from a totality of identified character elements such that the selected character elements describe a continuous course of line from a predefined starting point to a predefined end point.

10. The device (2800; 2900) according to one of claims 1 to 9, wherein the character description generator (2830; 2930; 3430) is implemented to generate, on the basis of the identified character elements, a feature vector (2832; 2932; 3432) describing successive portions of a character.

11. The device (2800; 2900) according to one of claims 1 to 10, wherein the device comprises a connectivity number calculator (2960) implemented to calculate a Euler connectivity number (2962) "comma" (K) on the basis of an image content of an image section of the image (2808; 2908) which comprises one character; and wherein the device further comprises a connectivity number examiner (2970) implemented to compare the Euler connectivity number (2962) calculated for the image section to a predefined comparative connectivity number (2972) contained in a database and associated with a character detected in the image section, so as to obtain reliability information (2974) carrying information about a reliability of a detection of a character.

12. A method (3600) for detecting characters in an image, comprising:

Hough transforming (3610) the image or a preprocessed version of the image so as to identify, as identified elements of writing, circular arcs or elliptical arcs in the image or in a preprocessed version of the image;
producing (3620) a character description on the basis of the identified circular arcs or elliptical arcs, the character description describing locations of the identified circular arcs or elliptical arcs; and
comparing (3630) the character description with a plurality of comparative character descriptions having character codes associated with them, so as to provide, as a result of the comparison, a character code of a detected character,
the Hough transforming comprising providing, when a circular arc or elliptical arc is detected, information about an extreme point of the circular arc or elliptical arc; and
the character description describing a position of the extreme point;
an extreme point of an arc being a point of the arc which is located farthest in a predefined direction.

13. A computer program for performing the method according to claim 12, when the computer program runs on a computer.

14. A device (2800; 2900) for detecting characters ("a", "b", "c") in an image, comprising:

a Hough transformer (2820; 2920) implemented to identify, as identified elements of writing (2822; 2922), circular arcs or elliptical arcs in the image (2808; 2908) or in a preprocessed version (2812; 2912) of the image;
a character description generator (2830; 2930) implemented to obtain, on the basis of the identified circular arcs or elliptical arcs, a character description (2832; 2932) which describes locations of the identified circular arcs or elliptical arcs; and
a database comparator (2840; 2940) implemented to compare the character description with a plurality of comparative character descriptions (2842; 2942) which have character codes associated with them, so as to provide, as a result of the comparison, a character code (2846; 2946) of a detected character;
the character description generator (2830; 2930; 3430) being implemented to obtain, as the character description (2832; 2932; 3452), a description of a character which describes the character as an ordered description (3462) of identified elements of writing.

15. A device (2800; 2900) for detecting characters ("a", "b", "c") in an image, comprising:

a Hough transformer (2820; 2920) implemented to identify, as identified elements of writing (2822; 2922), circular arcs or elliptical arcs in the image (2808; 2908) or in a preprocessed version (2812; 2912) of the image;
a character description generator (2830; 2930) implemented to obtain, on the basis of the identified circular arcs or elliptical arcs, a character description (2832; 2932) which describes locations of the identified circular arcs or elliptical arcs; and
a database comparator (2840; 2940) implemented to compare the character description with a plurality of comparative character descriptions (2842; 2942) which have character codes associated with them, so as to provide, as a result of the comparison, a character code (2846; 2946) of a detected character;
the device comprising a line-of-writing detector (2926) implemented to identify, on the basis of locations of the elements of writing identified by the Hough transformer (2920), a line (3110; 3120; 3130; 3140) along which the characters (3150; 3160) are arranged.

**Revendications**

1. Dispositif (2800; 2900) pour identifier des caractères ("a", "b", "c") dans une image, aux caractéristiques suivantes:

un transformateur de Hough (2820; 2920), qui est conçu pour identifier, comme éléments d'écriture (2822; 2922) identifiés, des arcs de cercle ou arcs d'ellipse dans l'image (2808; 2908) ou dans une version prétraitée (2812; 2912) de l'image;
un créateur de description de caractère (2830; 2930), qui est conçu pour obtenir, sur base des arcs de cercle ou arcs d'ellipse identifiés, une description de caractère (2832; 2932) qui décrit une position des arcs de cercle ou arcs d'ellipse identifiés; et
un comparateur de banque de données (2840; 2940), qui est conçu pour comparer la description de caractère avec une pluralité de descriptions de caractère de comparaison (2842; 2942) auxquelles sont associés des codes de caractère, pour fournir, comme résultat de la comparaison, un code de caractère (2846; 2946) d'un caractère identifié;
dans lequel le transformateur de Hough est conçu pour fournir, en cas d'identification d'un arc de cercle ou arc d'ellipse, une information sur un point extrême de l'arc de cercle ou arc d'ellipse ; et

dans lequel la description de caractère décrit une position du point extrême ;

dans lequel un point extrême d'un arc est un point de l'arc situé le plus loin dans une direction prédéterminée.

2. Dispositif (2800 ; 2900) selon l'une des revendications 1 à 5, dans lequel le créateur de description de caractère (2830 ; 2930 ; 3430) est conçu pour obtenir, comme description de caractère (2832 ; 2932 ; 3452), une description d'un caractère qui décrit le caractère comme une description ordonnée (3462) d'éléments d'écriture identifiés.

3. Dispositif (2800 ; 2900) selon la revendication 2, dans lequel le créateur de description de caractère (2830 ; 2930 ; 3430) est conçu pour ordonner la description de caractère (2832 ; 2932 ; 3452) de sorte que les éléments d'écriture identifiés ordonnés (3462) décrivent une ligne d'écriture continue.

4. Dispositif (2800 ; 2900) selon l'une des revendications 1 à 3, dans lequel le dispositif comprend un identificateur de ligne d'écriture (2926) qui est conçu pour identifier, sur base d'une position des éléments d'écriture identifiés par le transformateur de Hough (2920), une ligne (3110 ; 3120 ; 3130 ; 3140) le long de laquelle sont disposés les caractères (3150 ; 3160).

5. Dispositif (2800 ; 2900) selon la revendication 4, dans lequel l'identificateur de ligne d'écriture (2926) est conçu pour déterminer, comme ligne d'écriture, une ligne inférieure (3110), une ligne de base (3120), une ligne centrale (3130) ou une ligne supérieure (3140) de caractères (3150 ; 3160) sur base d'une position des éléments d'écriture identifiés par le transformateur de Hough.

6. Dispositif (2800 ; 2900) selon la revendication 4 ou 5, dans lequel l'identificateur de ligne d'écriture (2926) est conçu pour déterminer, comme ligne d'écriture, une ligne (3110 ; 3120 ; 3130 ; 3140) sur laquelle se situent plus d'un nombre prédéterminé d'extrêmes (x) d'arc de cercle ou d'arc d'ellipse identifiés.

7. Dispositif (2800 ; 2900) selon l'une des revendications 4 à 6, dans lequel le créateur de description de caractère (2830 ; 2930) est conçu pour créer la description de caractère (2832 ; 2932) de sorte que la description de caractère (2832 ; 2932) décrive une information sur une position des éléments d'écriture identifiés par rapport à au moins une ligne d'écriture identifiée (31100 ; 3120 ; 3130 ; 3140).

8. Dispositif (2800 ; 2900) selon l'une des revendications 1 à 7, dans lequel le créateur de description de caractère (2830 ; 2930) est conçu pour recevoir dans la description de caractère (2832 ; 2932), pour les arcs de cercle ou arcs d'ellipse identifiés, une information fournie par le transformateur de Hough (2820 ; 2930) sur une position d'un point extrême (3620, 3622, 3624, x) de l'arc de cercle identifié ou de l'arc d'ellipse identifié.

9. Dispositif (2800 ; 2900) selon l'une des revendications 1 à 8, dans lequel le créateur de description de caractère (2830 ; 2930 ; 3430) est conçu pour créer une description (2832 ; 2932 ; 3432) du caractère en joignant l'un à l'autre des éléments d'écriture identifiés adjacents sélectionnés,

dans lequel le créateur de description de caractère est conçu pour sélectionner les éléments d'écriture sélectionnés utilisés pour la description du caractère parmi un ensemble d'éléments d'écriture identifiés de sorte que les éléments d'écriture sélectionnés décrivent une évolution de ligne continue d'un point de début prédéterminé à un point de fin prédéterminé.

10. Dispositif (2800 ; 2900) selon l'une des revendications 1 à 9, dans lequel le créateur de description de caractère (2830 ; 2930 ; 3430) est conçu pour générer, sur base des éléments d'écriture identifiés, un vecteur de caractéristique (2832 ; 2932 ; 3432) qui décrit des segments successifs d'un caractère.

11. Dispositif (2800 ; 2900) selon l'une des revendications 1 à 10, dans lequel le dispositif comprend un calculateur de connectivité (2960) qui est conçu pour calculer, sur base d'un contenu d'image d'une découpe de l'image (2808 ; 2908) comportant un caractère, un nombre de connectivité d'Euler (2962) "virgule" (K) ; et

dans lequel le dispositif comprend par ailleurs un vérificateur de nombre de connectivité (2970) qui est conçu pour comparer le nombre de connectivité d'Euler (2962) calculé pour la découpe d'image avec un nombre de connectivité de comparaison (2972) prédéterminé contenu dans une banque de données et associé à un caractère identifié dans la découpe d'image, pour obtenir une information de fiabilité (2974) qui porte une information sur une fiabilité d'une identification d'un caractère.

12. Procédé (3600) pour identifier des caractères dans une image, aux étapes suivantes consistant à :

transformer selon Hough (3610) l'image ou une version prétraitée de l'image, pour identifier, comme éléments d'écriture identifiés, des arcs de cercle ou arcs d'ellipse dans l'image ou dans une version prétraitée de l'image ;

créer (3620) une description de caractère, sur base des arcs de cercle ou arcs d'ellipse identifiés, la description de caractère décrivant une position des arcs de cercle ou arcs d'ellipse identifiés; et

comparer (3630) la description de caractère avec une pluralité de descriptions de caractère de comparaison auxquelles sont associés des codes de caractère, pour fournir, comme résultat de la comparaison, un code de caractère d'un caractère identifié,

dans lequel la transformation de Hough comprend, lors d'une identification d'un arc de cercle ou arc d'ellipse, la fourniture d'une information sur un point extrême de l'arc de cercle ou de l'arc d'ellipse;

dans lequel la description de caractère décrit une position du point extrême; et

dans lequel un point extrême d'un arc est un point de l'arc situé le plus loin dans une direction prédéterminée.

13. Programme d'ordinateur pour réaliser le procédé selon la revendication 12 lorsque le programme d'ordinateur est exécuté sur un ordinateur.

14. Dispositif (2800; 2900) pour identifier des caractères ("a", "b", "c") dans une image, aux caractéristiques suivantes:

un transformateur de Hough (2820; 2920), qui est conçu pour identifier, comme éléments d'écriture (2822; 2922) identifiés, des arcs de cercle ou arcs d'ellipse dans l'image (2808; 2908) ou dans une version prétraitée (2812; 2912) de l'image;

un créateur de description de caractère (2830; 2930), qui est conçu pour obtenir, sur base des arcs de cercle ou arcs d'ellipse identifiés, une description de caractère (2832; 2932) qui décrit une position des arcs de cercle ou arcs d'ellipse identifiés; et

un comparateur de banque de données (2840; 2940), qui est conçu pour comparer la description de caractère avec une pluralité de descriptions de caractère de comparaison (2842; 2942) auxquelles sont associés des codes de caractère, pour fournir, comme résultat de la comparaison, un code de caractère (2846; 2946) d'un caractère identifié;

dans lequel le créateur de description de caractère (2830; 2930; 3430) est conçu pour obtenir, comme description de caractère (2832; 2932; 3452), une description d'un caractère qui décrit le caractère comme une description ordonnée (3462) d'éléments d'écriture identifiés.

15. Dispositif (2800; 2900) pour identifier des caractères ("a", "b", "c") dans une image, aux caractéristiques suivantes:

un transformateur de Hough (2820; 2920), qui est conçu pour identifier, comme éléments d'écriture (2822; 2922) identifiés, des arcs de cercle ou arcs d'ellipse dans l'image (2808; 2908) ou dans une version prétraitée (2812; 2912) de l'image;

un créateur de description de caractère (2830; 2930), qui est conçu pour obtenir, sur base des arcs de cercle ou arcs d'ellipse identifiés, une description de caractère (2832; 2932) qui décrit une position des arcs de cercle ou arcs d'ellipse identifiés; et

un comparateur de banque de données (2840; 2940), qui est conçu pour comparer la description de caractère avec une pluralité de descriptions de caractère de comparaison (2842; 2942) auxquelles sont associés des codes de caractère, pour fournir, comme résultat de la comparaison, un code de caractère (2846; 2946) d'un caractère identifié;

dans lequel le dispositif comprend un identificateur de ligne d'écriture (2926) qui est conçu pour identifier, sur base d'une position des éléments d'écriture identifiés par le transformateur de Hough (2920), une ligne (3110; 3120; 3130; 3140) le long de laquelle sont disposés les caractères (3150; 3160).

# FIG 1

Zeilennummer

320 (1)
330 (2)
332 (3)
332 (4)
(5)
(6)
368 (7)
372 (8)
(9)
332 (10)
334 (11)

312
310

300
364
360
324
370
374
380

336 338 338
322
350 362 366
340 335

312

314

# FIG 2a

400

↓

gerastertes Bild

↓ ⌇410

| optional | Bildausschnitt-Auswahleinrichtung |

⌇412

Bild oder Bildausschnitt

↓ ⌇414

| | Mustererkennungseinrichtung |
| | Ähnlichkeit |

⌇420

| Menge von Referenz-Kurven-Verläufen |

Parameter eines identifizierten gebogenen Liniensegments

| optional: | Koordinatenberechnungseinrichtung |

⌇430

Koordinaten eines Ellipsenpunktes

⌇440

# FIG 2b

450

$r_1$

452→

$r_2$

454→

$r_3$

456→

FIG 3a

# FIG 3b

550

560

570

# FIG 4

## FIG 5a

# FIG 5b

## FIG 6

2800

2808
Bild

↓

2810 — | optional:
Bildvorverarbeitung |

2812 — | Bild oder vorverarbeitete Version des Bildes

↓

2820 — | Hough-
Transformator |

2822 — | Information über identifizierte Schriftelemente

↓

2830 — | Schriftzeichen-
Beschreibungs-
Ersteller |

2832 — | Schriftzeichenbeschreibung

2842

2844

↓

2840 — | Datenbank-
Vergleicher | ← Vergleichs-
Schriftzeichen-
Beschreibungen

2846 —

↓

Schriftzeichen-Code
eines erkannten
Schriftzeichens

## FIG 7

2900

2908 Bild

optional

Bildvorverarbeitung:
Binarisierung
Kantenerkennung
Schriftzeichenerkennung — 2910

2912 Bild oder vorverarbeitete Version des Bildes

optional

2958

Hough-
Transformator — 2920

2922 Information über identifizierte Schriftelemente

2960

optional: Euler-
Konnektivitäts-
zahl-Berechner

Schriftlinienerkenner — 2926

2928 Information über Schriftlinie

Schriftzeichen-
Beschreibungs-
Ersteller — 2930

2962 optional

2932

Vergleichs-
Schriftzeichen-
Beschreibungen — 2944

Datenbank-
Vergleicher

2940 2942

2946 Schriftzeichen-Code
eines erkannten
Schriftzeichens

2970

optional
Schriftzeichen-
Überprüfer

2972

optional:
Gauß´sch Konnektivitätszahl eines
identifizierten Schriftzeichens

2974 optional

Schriftzeichen-
Zuverlässigkeit

# FIG 8a

# FIG 8b

1. Bogen: nach unten
   Position x, y; Krümmungsradius r
2. Bogen: nach rechts
   Position x, y; Krümmungsradius r
3. Bogen: nach oben
   Position x, y; Krümmungsradius r
1. gerade Strecke: nach rechts oben (Winkel 80° gegen Horizontale)
   Position x, y; Länge l
2. gerade Strecke: vertikal (Winkel 90° gegen Horizontale)
   Position x, y; Länge l

**FIG 9**

-3100

-3150                    -3160

-3130  -3140

Oberlinie

Mittellinie

Grundlinie

Unterlinie

-3120  -3110

X : Extrempunkt eines
    Bogens (Kreisbogen / Ellipsenbogen)

⊖ : Endpunkt einer geraden Strecke

# FIG 10a

# FIG 10b

⟶ Bogen: •Richtung (nach oben, nach unten, nach links, nach rechts)
Extremum:
• Position x
• Position relativ zu Schriftlinien

( Intervall I, Intervall II, Intervall III )
( auf Schriftlinie )
( zusätzlich optional genauere Beschreibung )

• Krümmungsradius (optional)
⟶ gerade Strecke:
•Richtung (z.B. Winkel gegen Horizontale bzw. gegen Schriftlinie)
•Anfangspunkt und Endpunkt oder
Länge und Mittelpunkt

# FIG 10c

/-3280

Beispiel: "a"
    Bogen 1: nach unten, Extremum: x=0; auf Mittellinie
    Bogen 2: nach rechts, Extremum: x=-0,5; Intevall II, y=0,5
    Bogen 3: nach oben, Extremum: x=-0,1; auf Grundlinie
    gerade Strecke 1: nach rechts oben; Winkel 80°
                          Anfangspunkt x=0,4; Interval III; y=0,2
                          Endpunkt x=0,5; auf Mittellinie

## FIG 11

Bogen 1, Lageparameter 1
Bogen 2, Lageparameter 2
Bogen 3, Lageparameter 3
Gerade Strecke 1, Lageparameter 4

~3300

~3322

identifizierte
Schriftelemente
(Kreisbögen / Ellipsenbögen
und gerade Strecken)

Schriftzeichen-
Beschreibungs-
Ersteller

~3330

| optional:
Schriftelement-Auswähler | ~3340 |

~3342

| Schriftelement-
Kombinationsersteller | ~3350 |

~3352

LP = Lageparameter

| Bogen 1, LP 1
Bogen 2, LP 2
Bogen 3, LP 3
Gerade Strecke 1, LP 4 |ˡ | Bogen 1, LP 1
Bogen 3, LP 3
Bogen 2, LP 2
Gerade Strecke 1, LP 4 |ˡˡ | Bogen 1, LP 1
Gerade Strecke 1, LP 4
Bogen 2, LP 2
Bogen 3, LP 3 |ˡˡˡ |

## FIG 12

Bogen 1, Lageparameter 1
Bogen 2, Lageparameter 2
Bogen 3, Lageparameter 3
Bogen 4, Lageparameter 4
Bogen 5, Lageparameter 5
Gerade Strecke 1, Lageparameter 6
Gerade Strecke 2, Lageparameter 7

3460

3400

3422

identifizierte
Schriftelemente
(Kreisbögen / Ellipsenbögen
und gerade Strecken)

Schriftzeichen-
Beschreibungs-
Ersteller

Schriftelement-Ordner

3440

3430

3452

LP=Lageparameter

Schriftzeichenbeschreibung

Bogen 1, LP 1
Bogen 2, LP 2
Bogen 3, LP 3
Gerade Strecke 1, LP 6
Bogen 4, LP 4
Bogen 5, LP 5
Gerade Strecke 2, LP 7

3462

# FIG 13

3500

Bogen 1
3510

Gerade Strecke 1
3520

Bogen 2
3512

Gerade Strecke 2
3522

Bogen 3
3514

3518

Bogen 5

3516

Bogen 4

FIG 14　　　　　　　　　　　　　　　～3600

```
┌─────────────────────────────┐
│   Hough-Transformieren eines │
│ Bildes oder einer vorverarbeiteten │ ～3610
│      Version des Bildes,     │
│  um identifizierte Schriftelemente │
│       zu identifizieren      │
└─────────────────────────────┘
              │
              ▼
┌─────────────────────────────┐
│       Erstellen einer        │
│  Schriftzeichen-Beschreibung │ ～3620
│       basierend auf den      │
│  identifizierten Schriftelementen │
└─────────────────────────────┘
              │
              ▼
┌─────────────────────────────┐
│       Vergleichen der        │
│  Schriftzeichen-Beschreibung │
│    mit einer Mehrzahl von    │ ～3630
│    Vergleichs-Schriftzeichen-│
│    Beschreibungen, denen     │
│  Schriftzeichen-Codes zugeordnet │
│   sind, um als Ergebnis des  │
│      Vergleichens einen      │
│ Schriftzeichencode eines erkannten │
│    Schriftzeichens zu liefern │
└─────────────────────────────┘
```

FIG 15

3700

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Recognition of Hand-Printed Latin Characters based on Generalized Hough Transform and Decision Tree Learning Techniques. **von A. Amin.** International Journal of Pattern Recognition and Artificial Intelligence. World Scientific Publishing, 05. Januar 2000, vol. 14, 369-387
- **von A. Brückmann ; F. Klevenz ; A. Wünsche.** A neural net for 2D-slope and sinusoidal shape detection. *International Scientific Journal of Computing,* 2004, vol. 3, 21-25
- **J. Katzmann.** Echtzeitfähige, auf der Hough-Transformation basierende Methoden der Bildverarbeitung zur Detektion von Ellipsen. *Diplomarbeit an der Universität Ilmenau,* 2005
- **A. Brückmann ; F. Klefenz ; A. Wünsche.** A neural net for 2D slope and sinusoidal shape detection. *International scientific journal of computing,* 2004, vol. 3 (1), 21-26
- **V. Ferrari.** Object detection by contour segment networks. *European conference on computer vision (ECDB),* Mai 2006
- **A. Brückmann ; F. Klevenz ; A. Wünsche.** A neural net for 2D-slope and sinusoidal shape detection. *International Scientific Journal of Computing,* 2004, vol. 3, 21-25